(19) Europäisches Patentamt
European Patent Office
Office européen des brevets

(11) EP 4 667 929 A1

(12) EUROPEAN PATENT APPLICATION

(43) Date of publication:
24.12.2025 Bulletin 2025/52

(21) Application number: 25184019.5

(22) Date of filing: 19.06.2025

(51) International Patent Classification (IPC):
G01N 29/04 (2006.01)     G01N 29/44 (2006.01)
G01N 29/46 (2006.01)     G01N 27/90 (2021.01)
G01N 29/11 (2006.01)     G01N 29/34 (2006.01)
G01N 29/48 (2006.01)     G01N 27/904 (2021.01)

(52) Cooperative Patent Classification (CPC):
G01N 29/043; G01N 29/041; G01N 29/069;
G01N 29/07; G01N 29/265; G01N 29/44;
G01N 29/4472; G01N 29/46; G01N 29/11;
G01N 29/343; G01N 29/348; G01N 29/4418;
G01N 29/4436; G01N 29/4445; G01N 29/449;
(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.06.2024 IN 202411047057
28.06.2024 US 202463665988 P
08.10.2024 IN 202411076142
16.01.2025 US 202563745900 P

(71) Applicant: General Electric Company
Cincinnati, Ohio 45215 (US)

(72) Inventors:
• KLAASSEN, RICHARD EUGENE
Springdale, 45246 (US)
• WOODFIELD, ANDREW PHILIP
Evendale, 45215 (US)
• VAN ZANDT, NICHOLAS LEE
Springdale, 45246 (US)
• NGUYEN, LUC THE
Springdale, 45246 (US)
• ORUGANTI, RAMKUMAR KASHYAP
560066 Bengaluru (IN)
• KOYITHITTA MEETHAL, MANOJ KUMAR
560066 Bengaluru (IN)
• CHANDRA, K RAVI
560066 Bengaluru (IN)
• KOTHAWALA, ALIARSHAD AAMEER
560066 Bengaluru (IN)

(74) Representative: Openshaw & Co.
8 Castle Street
Farnham, Surrey GU9 7HR (GB)

(54) SYSTEMS AND METHODS FOR DETECTING MICROTEXTURE REGIONS IN A SPECIMEN

(57) Provided herein are inspection systems and methods for detecting MTR present within a subsurface volume of a specimen (102). The approaches use acoustic transducers (106) and, optionally, near-surface sensors (134) to introduce inspecting energy into the specimen (102). Signal data (120) representative of the inspecting energy is analyzed to detect MTRs. In some approaches, a shift in a frequency distribution of the signal data (130) is determined. In other approaches, a distribution of values for a given characteristic of the signal data (130), such as amplitude or frequency, is computed and a quantified description of the distribution is computed. Response scores and/or intensity maps can be generated for the specimen (102) based on the analysis of the signal data (130). MTR scores indicative of MTR in the specimen (102) can be correlated to the response score and/or intensity map (2724, 2728). The specimen (102) can then be dispositioned based on the response scores and/or intensity map (2724, 2728) and their correlation with the MTR scores.

FIG. 1A

EP 4 667 929 A1

(52) Cooperative Patent Classification (CPC): (Cont.)
G01N 29/48; G01N 2291/0231; G01N 2291/0289;
G01N 2291/0422; G01N 2291/0423;
G01N 2291/044; G01N 2291/106;
G01N 2291/2694

**Description**

CROSS-REFERENCE TO RELATED APPLICATIONS

This application claims the benefit of priority of Indian Provisional Application No. 202411047057, filed June 19, 2024, U.S. Provisional Application No. 63/665,988, filed June 28, 2024, Indian Provisional Application No. 202411076142, filed October 8, 2024, and U.S. Provisional Application No. 63/745,900, filed January 16, 2025, all of which are incorporated by reference in their entireties

TECHNICAL FIELD

These teachings relate generally to systems and methods for inspecting components and, in particular, for inspecting components to determine one or more microstructural characteristics.

BACKGROUND

Machine components in a variety of industries are often subject to periodic inspection to identify defects or anomalies present in the components that may be detrimental to component performance. Inspections may be used to assess component condition or quality, determine whether a component is fit for continued services, and/or to formulate maintenance or replacement schedules for the component.

In the aviation industry, various components are formed from metal alloys, such as titanium alloys. Certain metal alloys may include microstructures such as microtexture regions (MTR) that may reduce the performance of components formed from the alloys. Thus, it may be useful to have inspection devices and methods to assess the microstructural characteristics of such materials.

BRIEF DESCRIPTION OF DRAWINGS

Various needs are at least partially met through provision of the systems and methods for detecting microstructural characteristics described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:

FIG. 1A is a schematic diagram of an acoustic inspection system, in accordance with various embodiments;
FIG. 1B is a flow diagram of a method of operating an acoustic inspection system, in accordance with some embodiments;
FIG. 1C is a flow diagram of a method of operating an acoustic inspection system, in accordance with some embodiments;
FIG. 1D is a flow diagram of a method of operating an acoustic inspection system, in accordance with some embodiments;
FIG. 2 is a schematic diagram of a sensor arrangement, according to some embodiments;
FIG. 3 is a schematic diagram of a sensor arrangement, according to some embodiments;
FIGS. 4A and 4B are schematic diagrams of a sensor arrangement, according to some embodiments;
FIG. 5 is a schematic diagram of a sensor arrangement, according to some embodiments;
FIGS. 6A and 6B are schematic diagrams of a sensor arrangement, according to some embodiments;
FIGS. 7A and 7B are schematic diagrams of a sensor arrangement, according to some embodiments;
FIG. 8 is a schematic diagram of a sensor arrangement, according to some embodiments;
FIG. 9A is a schematic side elevation view of a sensor arrangement, according to some embodiments;
FIG. 9B is a schematic side cross-sectional view of a sensor arrangement, according to some embodiments;
FIG. 9C is a schematic bottom end view of the sensor arrangement of FIG. 9B;
FIG. 9D is a schematic side cross-sectional view of a sensor arrangement, according to some embodiments;
FIG. 9E is a schematic bottom end view of the sensor arrangement of FIG. 9D;
FIG. 9F is a schematic side elevation view of a sensor arrangement, according to some embodiments;
FIG. 9G is a schematic bottom end view of the sensor arrangement of FIG. 9F;
FIG. 9H is a schematic top view of the specimen of FIG. 9F;
FIG. 9I is a schematic side elevation view of a sensor arrangement, according to some embodiments;
FIG. 9J is a schematic bottom end view of the sensor arrangement of FIG. 9I;
FIG. 9K is a schematic side cross-sectional view of a sensor arrangement, according to some embodiments;
FIG. 9L is a schematic side elevation view of a sensor arrangement, according to some embodiments;

FIG. 9M is a schematic side cross-sectional view of a sensor arrangement, according to some embodiments;
FIG. 9N is a schematic bottom end view of the sensor arrangement of FIG. 9M;
FIG. 9O is a schematic side cross-sectional view of a sensor arrangement, according to some embodiments;
FIG. 9P is a schematic bottom end view of the sensor arrangement of FIG. 9O;
FIG. 9Q is a schematic side cross-sectional view of a sensor arrangement, according to some embodiments;
FIG. 9R is a schematic bottom end view of the sensor arrangement of FIG. 9Q;
FIG. 9S is a schematic side elevation view of a sensor arrangement, according to some embodiments;
FIG. 9T is a schematic bottom end view of the sensor arrangement of FIG. 9S;
FIG. 10 is a schematic diagram of a sensor arrangement, according to some embodiments;
FIG. 11A is a flow diagram of a method of analyzing signal data, according to some embodiments;
FIG. 11B includes exemplary data from the analysis described in FIG. 11A;
FIG. 11C includes exemplary data from the analysis described in FIG. 11A;
FIG. 12 is a flow diagram of a method of analyzing signal data, according to some embodiments;
FIG. 13 is a flow diagram of a method of analyzing signal data, according to some embodiments;
FIG. 14 is a flow diagram of a method of analyzing signal data, according to some embodiments;
FIG. 15 is a flow diagram of a method of analyzing signal data, according to some embodiments;
FIG. 16A is a flow diagram of a method of analyzing signal data, according to some embodiments
FIG. 16B includes exemplary data from the analysis described in FIG. 16A;
FIG. 16C shows expressions used in the method of FIG. 16A;
FIG. 17 is a flow diagram of a method of analyzing signal data, according to some embodiments;
FIG. 18 is a flow diagram of a method of analyzing signal data, according to some embodiments;
FIG. 19 is a flow diagram of a method of analyzing signal data, according to some embodiments;
FIG. 20A is a flow diagram of a method of analyzing signal data, according to some embodiments;
FIG. 20B shows expressions used according to some embodiments;
FIG. 21 is a flow diagram of a method of analyzing signal data, according to some embodiments;
FIG. 22 is a flow diagram of a method of analyzing signal data, according to some embodiments;
FIG. 23 is a flow diagram of a method of analyzing signal data, according to some embodiments;
FIG. 24 is a flow diagram of a method of analyzing signal data, according to some embodiments;
FIG. 25 is a flow diagram of a method of analyzing signal data, according to some embodiments;
FIG. 26A is a flow diagram of a method of analyzing signal data, according to some embodiments;
FIG. 26B includes exemplary data from the analysis described in FIG. 26A;
FIG. 26C includes exemplary data from the analysis described in FIG. 26A;
FIG. 27A is a flow diagram of a method of analyzing signal data, according to some embodiments;
FIG. 27B shows a schematic diagram of a specimen and macroslice;
FIG. 27C shows a sensor inspecting the macroslice;
FIG. 27D shows an intensity map for the macroslice;
FIG. 27E shows a raw intensity map for the macroslice after calibration;
FIG. 27F shows am intensity map for the macroslice after calibration;
FIG. 28 is a graph of signal envelopes for exemplary waveform data, according to some embodiments;

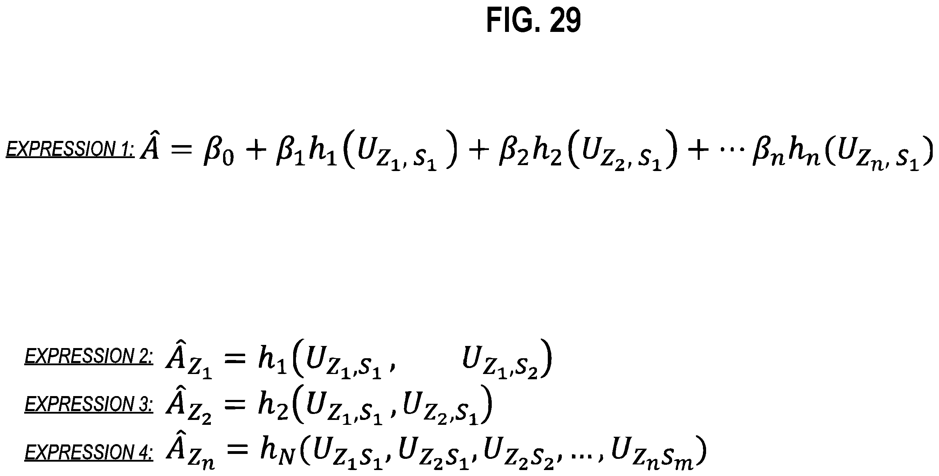

FIG. 29 shows expressions used in signal data analysis, according to some embodiments. Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

DETAILED DESCRIPTION

Traditional inspection systems and methods used to determine the microstructural characteristics in a sample utilize destructive testing such as electron backscatter diffraction (EBSD). In general, specimens to be inspected via EBSD testing are also highly prepared. For example, preparing specimens for EBSD testing may involve polishing the specimen to a mirror finish. The acoustic inspection devices and methods described herein involve nondestructive approaches for detecting microstructural characteristics of a specimen formed from a material having a crystalline structure. Nondestructive inspection may assess a component while avoiding damage to the component during the inspection process. Further, the inspection systems and methods described herein may be performed on a simple surface that is not highly prepared and does not need to be polished to a mirror finish. Advantageously, the inspection systems and methods herein can be used to evaluate peened and machined surfaces.

The inspection systems and methods described herein may be used to determine one or more characteristics of a specimen without destroying the specimen or requiring labor or time intensive surface preparation. The material characteristics that can be identified or detected by the inspection systems and methods include microstructure characteristics that relate to the microstructure of the specimen. For example, the inspection systems and methods may be used to identify microstructure characteristics related to extrinsic discontinuities such as cracks, voids, inclusions, material anomalies (areas of different density or modulus), etc. The microstructure characteristics detected by the inspection systems and methods may also be intrinsic characteristics (e.g., non-discontinuity type characteristics).

Advantageously, the inspection systems and methods described are able to identify or detect microstructural characteristics that are indicative of a microtexture region (MTR) that is present within a volume or near surface volume of the specimen. Examples of MTR characteristics that can be detected or identified by the inspection systems described herein include but are not limited to a grain (crystal) size, a grain (crystal) orientation, a grain shape, a grain volume, a microstructural discontinuity, a grain phase, a grain chemical composition, a presence of an MTR, a size of an MTR, a quantile of an MTR distribution, etc. determined via an experimental distribution, a Weibull distribution, etc., such as B50 MTR size (50th percentile of MTR size or area distribution), B70 MTR size, B95 MTR size, etc., an intensity of an MTR, an orientation of an MTR, a combination of adjacent MTRs having different orientations, an MTR fraction, a macrotexture, a dislocation content, residual elastic compressive or tensile stresses, or similar. The material characteristic may be a property of a specimen that is indicative of an MTR or any property of an MTR such as size, shape, intensity, density, frequency, orientation, orientation spread, neighboring region characteristics, volume fraction, etc.

As used herein, B50, B70 and B95 refers to the 50th, 70th and 95th percentile of a distribution, respectively, of an MTR characteristic, such as MTR size, MTR area, etc.

In addition to standard statistical measures derived from MTR characteristics such as size data such as average, median, etc., it is also possible to fit each set of raw MTR distribution data with multiple statistical distributions. It is contemplated that statistical measures from such distributions could be related to signal data derived from one or more of the transducer arrangements and/or analysis methods described herein.

As used herein, an MTR may refer to aggregates of grains having a similar crystal orientation in titanium and nickel alloys. As used herein, macrotexture may refer to MTRs or individual grains having a preferred crystal orientation with respect to the sample axes. It should be noted that as the material characteristics change, alloy performance may be impacted. For example, as MTRs increase in size and/or intensity in titanium alloys, cold dwell fatigue properties decrease. Similarly, as macrotexture intensifies (as measured by the intensity of crystal c-axis alignment in a sample) in titanium alloys, 0.2% yield strength and ultimate tensile strength increases. In nickel alloys, as grain size increases, fatigue properties deteriorate.

As used herein, an MTR score is derived from one or more MTR characteristics or statistics of those MTR characteristics. For example, an MTR score might be average MTR size, B50 MTR size, B70 MTR size, B95 MTR size, MTR fraction, MTR intensity, or combinations of one or more MTR characteristics, such as MTR size multiplied by MTR fraction, MTR size divided by MTR intensity, MTR orientation gradient, MTR area multiplied by MTR fraction, MTR area divided by MTR intensity, etc. MTR characteristics for a specimen can be obtained from EBSD which is viewed as the authoritative method. An example code used to calculate MTR characteristics is DREAM.3D that includes MTR characteristic definitions that correlate with cold dwell fatigue performance and is described in detail in A. Pilchack et al., DOT/FAA/TC-23/40, U.S. Dep't of Transp., F, Cold Dwell Fatigue of Titanium Alloys: History, Current State, and Aviation Industry Perspective, Sept. 2024. In the current case, the DREAM.3D code definitions conventionally used to correlate MTR scores to cold dwell fatigue performance may be adjusted such that good correspondence of such MTR scores with ultrasonic or electromagnetic signals (or parameters derived therefrom) is obtained.

It is to be understood that an "MTR score" may also be referred to interchangeably with one or more of alternative terms or phrases that reflect ground truth measurement of MTR or MTR characteristics. For example, the phrase "indicative of MTR present" may indicate that an MTR score is calculated to indicate the MTR present within a portion of a specimen, such as within a subsurface volume. In another example, "predictive of a level of subsurface MTRs" may indicate that an MTR score is calculated. In addition, the term "MTR characteristic" may be used interchangeably with "MTR score."

Grains and clusters of grains (MTRs) in metals and alloys scatter and attenuate acoustic or electromagnetic energy. When acoustic or electromagnetic signals strike grains or MTRs, the grains or MTRs may either reflect the signals or act as point sources that vibrate and generate signals with frequencies that are characteristic of the MTRs. The resulting scattered and reflected signals, referred herein as scatter or backscatter, carry information about the scatterers. Due to this scattering/reflection process, the amplitude/energy of the transmitted signals will be diminished and hence can provide information about the nature and size of the MTRs. This effect may be visible when comparing the time, frequency, or time-frequency spectrum from various positions and time windows of signal data.

Given a known relationship between the acoustic or electromagnetic signal characteristics and the MTR characteristics, the approaches described herein use acoustic or electromagnetic response scores generated from one or more inspection methods to guide the disposition of a specimen (accept, reject, grading). The inspection methods can use different combinations of transducer arrangements, sensor arrangements and analysis methods described herein to obtain one or more intensity maps or response scores for a specimen. The acoustic or electromagnetic response scores are related to MTR scores. In addition, the analysis methods described herein may be used to classify a specimen based on its response score, or sub-regions of a specimen based on individual sub-region response scores.

As used herein, a response score is generated from the analysis of acoustic, electromagnetic, or other signals, produced when inspecting a piece of metal, which correlate with the MTR score. A response score can be generated from any of the analysis methods that are described herein for analyzing signal data. Certain phrases may indicate that a response score is or can be generated. In one example, a response score can be generated from a spatial intensity map. In another example, a response score can be generated from a linear MTR profile or spatial MTR profile can be used to generate a response score. In some examples, the response score characterizes the specimen based on macroslice quantified signal data and specimen signal data. The response score corresponds solely to the signal data. MTR scores are representative of the "ground truth" of the specimen. By correlating a sufficient number of "response scores" to "MTR scores", one can make decisions about what "response score" is indicative of an undesirable "MTR score" and then disposition a specimen accordingly.

After classification or other determinations are made, various actions may take place. In aspects, if classification is favorable (e.g., acoustic or electromagnetic response score that has been correlated to an MTR score that is below a threshold), the specimen is moved from inspection area to the next station of the manufacturing process (e.g., moved manually or by electronically controlling a machine such as a robot to physically move the specimen forward in the manufacturing process for its intended application). In other aspects, if classification is unfavorable (e.g., acoustic or electromagnetic response score that has been correlated to an MTR score that is above a threshold), the affected material may be cut out or otherwise removed (manually or by electronically controlling a band saw or similar instrument) of the specimen or the entire specimen could be scrapped (e.g., moved to a specified scrap area manually or by electronically controlling a machine such as a robot) or downgraded to a lower quality manufacturing application. In still other aspects, the determined acoustic or electromagnetic response score that has been correlated to an MTR score may be used in future manufacturing processes. For example, the parameters of a manufacturing process or machine that manufactures a new part may be adjusted, set, and/or altered based on the acoustic or electromagnetic response scores to reduce MTRs scores formed during production of the new part. Adjusting, setting, or altering the parameters may involve changing parameter values stored in an electronic memory associated with the manufacturing process or machine to take one example. In other aspects, this may involve manually adjusting actuators at a machine or actuators that control a process. In some examples, the adjusted, set, or altered parameters cause the manufacturing process or machine to operate differently than before the parameters were adjusted, set, or altered. In yet other aspects, parameters may be periodically or continuously updated.

The inspection systems and methods described herein can be used for parts and components of an engine, such as a gas turbine engine. Example components include but are not limited to components made of titanium (Ti) or nickel (Ni) alloys such as fan discs/blades, compressor discs/blades, etc. In addition, the systems and methods described herein can be used to inspect titanium or nickel billets or forgings.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

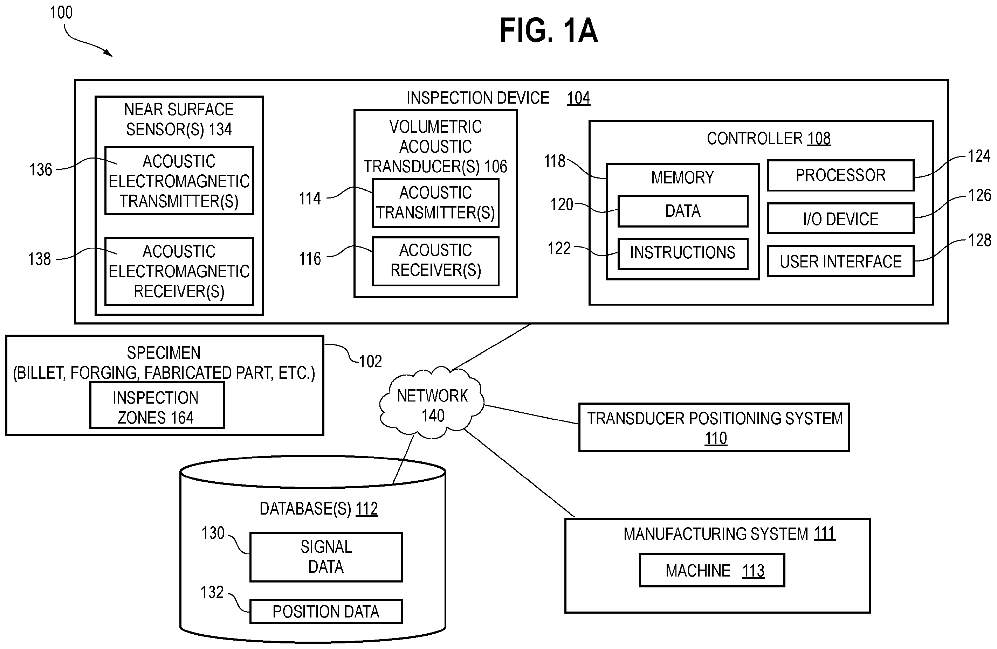

Referring now to the drawings, and in particular to FIG. 1A, an inspection system 100 is illustrated. The inspection system 100 may be used to inspect a specimen 102 in order to determine at least one MTR characteristics that is present within a volume of the specimen 102.

The specimen 102 can be any milled product (e.g., a billet, a bar, a plate, a sheet, a slab etc.), an intermediate machined product, or a component formed from a milled product. The specimen 102 can also be a forging or fabricated part. The specimen 102 may be alpha-beta processed, beta annealed, or it may be an as-cast structure in the form of a casting or an additively built part that cools through the beta transus. It is contemplated that the specimen 102 can be formed from other material processing methods that include cooling through the beta transus, such as welding, etc.

The specimen 102 can be a billet, such as a titanium or nickel billet. In some examples, the specimen 102 is an end slice of a billet, a macroslice of a forged part (e.g., a fan disc), a surface of a forged part, or any other suitable sample taken of a billet, forging, or part before or after any step of the thermomechanical processing of a metal alloy. In some approaches, the specimen 102 is a part or component of a gas turbine engine (e.g., a part or component before assembly or a part or component that has been disassembled from a gas turbine engine). As used herein, a macroslice refers to a thin cross-section sample extracted from a larger sample. The specimen 102 can be non-destructively and destructively characterized for the purpose of indicating the properties of the larger sample.

The inspection system 100 includes an inspection device 104 comprising one or more volumetric acoustic transducer(s) 106, one or more near surface sensor(s) 134 and a controller 108. The system 100 further includes a transducer positioning system 110 and, optionally, one or more database(s) 112.

The inspection device 104 is configured to transmit and/or receive inspecting energy that travels through a volume of the specimen 102. The inspection device 104 can use a variety of types of inspecting energy including acoustic energy (e.g., acoustic waves), electromagnetic energy (e.g., induced electric currents), or combinations thereof. In some examples, the inspecting energy is ultrasonic waves. The inspecting energy is used to interrogate the specimen 102 in order to detect or identify material characteristics such as MTR or other grain characteristics present within a volume of the specimen 102. MTR or grain characteristics may impact the manner in which inspecting energy travels through the specimen 102. In this manner, properties of the acoustic waves, which are scattered, reflected, and/or transmitted through the specimen 102, by the acoustic transducer(s) 106 of the inspection device 104 may be analyzed by the controller 108 to identify or detect MTR characteristics associated with the specimen 102.

The inspection device 104 can be configured to transmit and/or receive acoustic waves or induced electric currents along or near a surface of the specimen 102. In some examples, the acoustic waves are Rayleigh surface waves. In some examples, the induced electric currents are eddy currents generated by a coil. The acoustic waves and/or the induced electric currents are used to interrogate the specimen 102 in order to detect or identify MTR characteristics present on or near the surface of the specimen 102. MTR characteristics may impact the manner in which the acoustic waves or induced currents travel through the specimen 102. In this manner, properties of the acoustic waves or induced electric current, sensed by the near surface sensor(s) 134 may be analyzed by the controller 108 to identify or detect MTR characteristics associated with the specimen 102.

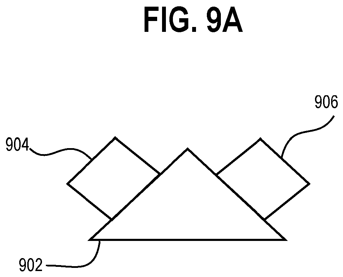

The near surface sensor(s) 134 may include various sensor arrangements. One such embodiment is described in detail with reference to FIGS. 9A-9T. In some embodiments, the near surface sensor(s) 134 may include separate acoustic or electromagnetic transmitter(s) 136 and acoustic or electromagnetic receiver(s) 138. The near surface sensor(s) 134 may include one or more of ultrasonic sensors, eddy current sensors, light polarization sensors or combinations thereof.

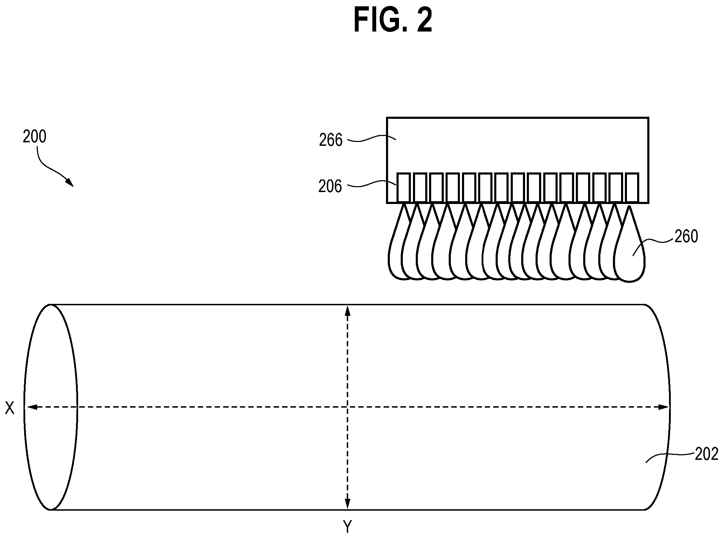

The acoustic transducer(s) 106 may include various transducer arrangements. Specific embodiments of transducer arrangements that can be used for the acoustic transducer(s) 106 are described in detail with reference to FIGS. 2-7B.

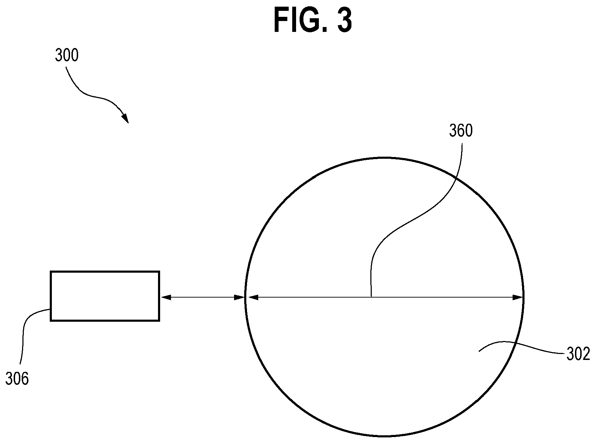

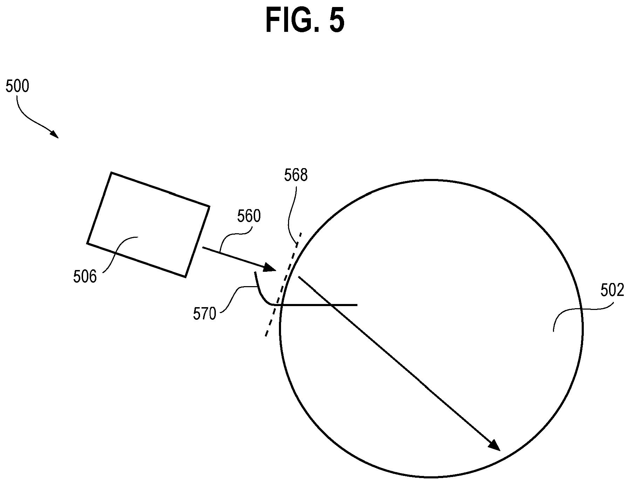

In some embodiments, the acoustic transducer(s) 106 may be a transducer array comprising a plurality of transducer elements that act as transmitters and receivers. In some configurations, a single transducer array may be used to generate and receive acoustic waves that travel through a volume of the specimen 102. As such, the transducer array may be configured to generate and receive acoustic waves that travel through a volume of the specimen 102. The elements may operate in a transmit mode in which the transducer operates to activate the piezoelectric element to produce acoustic waves. The elements may also operate in a receive (or listening) mode in which the transducer waits to receive acoustic waves. The elements may be activated or operated between the transmit mode and the receive mode. FIG. 2 shows example transducer arrangements that use a transducer array comprising a plurality of transducer elements that act as transmitters and receivers. It is also contemplated that such a transducer array may be implemented as the acoustic transducer in FIGS. 3 and 5.

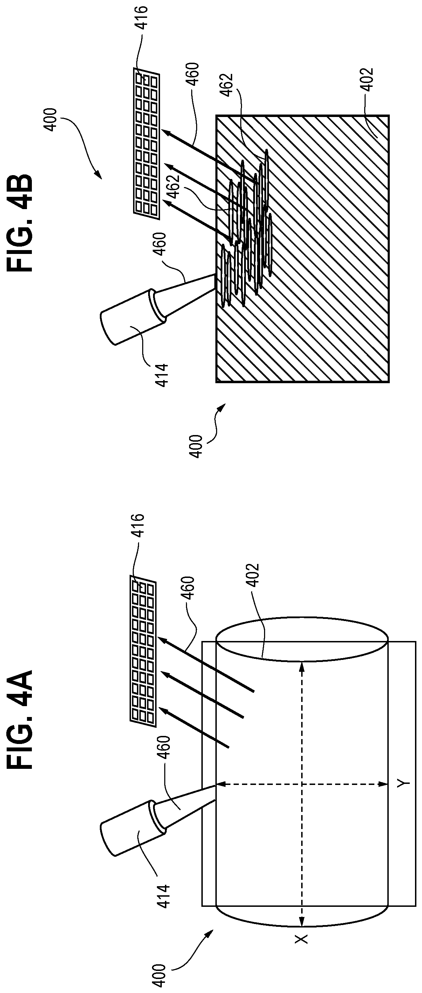

In some embodiments, the acoustic transducer(s) 106 may include separate acoustic transmitter(s) 114 and acoustic receiver(s) 116. FIGS. 4A-4B,6A-6B, and 7A-7B show example transducer arrangements that use separate acoustic transmitter(s) and receiver(s).

In some configurations, the acoustic transmitter(s) 114 may be a single-element acoustic transmitter that is configured to transmit acoustic waves through the volume of the specimen 102. In other configurations, the acoustic transmitter(s) 114 may be a transmitting acoustic transmitter array that comprises a plurality of acoustic transmitters (e.g., elements) configured to generate acoustic waves that travel through a volume of the specimen 102. The transmitting acoustic transmitter array may be a linear array or a matrix array. In some configurations, the acoustic receivers(s) 116 and the acoustic transmitters 114 are a single device, for example a single sensor element that is configured to transmit acoustic waves through the volume of the specimen 102 and the acoustic waves from the specimen 102. In other configurations, the acoustic receiver(s) 116 may be a receiving acoustic transmitter array that comprises a plurality of acoustic receivers (e.g., elements) configured to receive or detect acoustic waves. The receiving acoustic transmitter array may be a linear array or a matrix array.

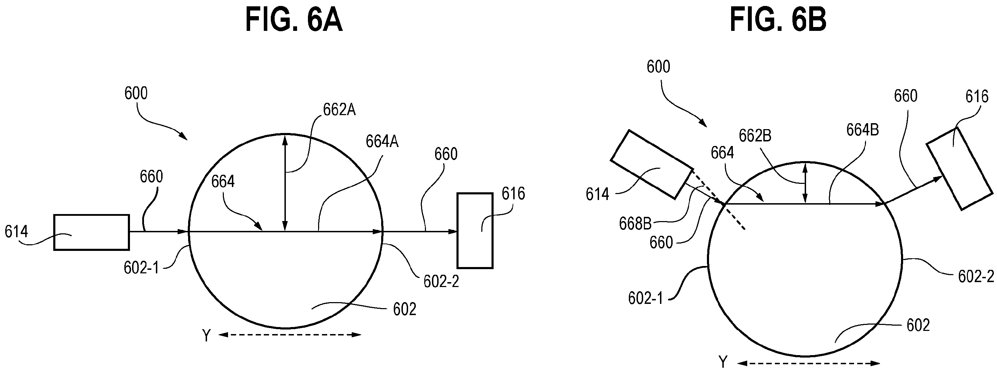

The acoustic transducer(s) 106 and/or the near surface sensor(s) 134 can be configured to inspect or interrogate a plurality of inspection zones 164 in the specimen 102. FIG. 6 shows inspection zones 664 that can be used as the inspection zones 164 according to one exemplary and non-limiting embodiment. It is contemplated that the specimen 102 can be divided into any number of inspection zones 164 to facilitate inspection of the specimen 102 for MTR. The inspection zones 164 can have any suitable shape or configuration relative to the larger area or volume of the specimen 102. In some embodiments, the inspection zones 164 are chords (e.g., see the first inspection zone 664A and the second inspection zone 664B in FIG. 6). In some embodiments the inspection zones 164 are areas that extend across the specimen from one side to another, for example, the inspection zones 164 may extend in an axial, longitudinal, radial direction or otherwise. In some embodiments, the inspection zones 164 can be arranged at a variety of different depths within the specimen 102.

The acoustic transducer(s) 106 can be configured to generate shear, longitudinal, mixed-mode acoustic waves, or a combination thereof. In some examples, when the specimen 102 is round, transducer arrangements that use shear waves may not reach deep into the specimen 102 so transducer arrangements that use shear waves may be used to inspect shallower inspection zones 164 or areas of the specimen while transducer arrangements that use longitudinal waves may be used to inspect both shallow and deeper inspection zones 164 or areas of the specimen 102.

The controller 108 is in operative communication with the acoustic transducer(s) 106. The controller 108 is configured to operate the acoustic transducer(s) 106, for example, to control the transmission and receipt of acoustic waves. By some approaches, the controller 108 is configured to control the timing and/or frequency of acoustic waves transmitted or generated by acoustic transducer(s) 106. The controller 108 also receives signal data that is representative of the acoustic waves generated by the acoustic transducer(s) 106 and scattered, reflected, and/or transmitted through the specimen 102. For example, in some aspects, the controller 108 receives signal data 130 discussed further below. In some embodiments, the controller 108 receives electrical measuring signals that are indicative of the acoustic waves received by the acoustic transducer(s) 106.

In some embodiments, when the acoustic transducer(s) 106 include a transducer array, the controller 108 is configured to activate or fire the elements (e.g., individual acoustic transducers) of the transducer array simultaneously or at specified times to adjust an incident wavefront. For example, the controller 108 can activate elements of the transducer array with timing delays to control when each element of the transducer array is activated or pulsed. The controller 108 can control the timing at which each of the elements of the transducer array is fired to steer the wavefront and/or to generate a coherent or focused wave through the interaction of the acoustic waves generated by each element. In some approaches, the controller 108 can operate the transducer array to form a focused acoustic wave with a focal point at a predetermined or controlled focal depth.

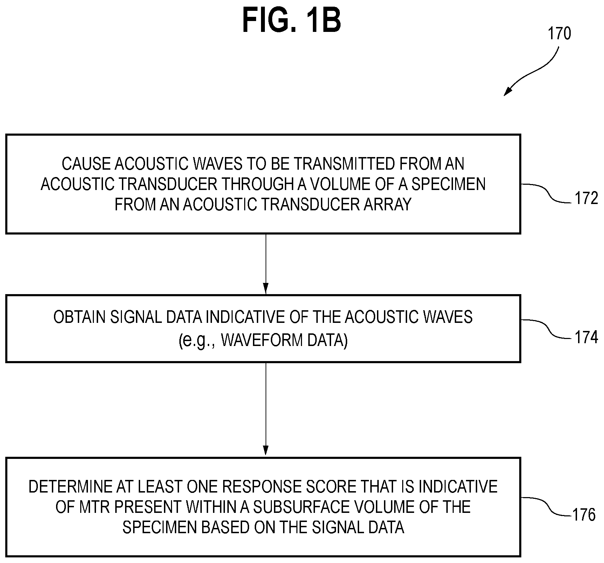

In some embodiments, the controller 108 may be configured to excite elements of the transducer array with arbitrary waveform shapes, such as a negative square wave, bipolar square wave, chirp excitation, toneburst excitation, or a coded excitation. The controller 108 may function as a computing device to perform the functions and methods described herein. For example, the controller 108 may perform one or more of the methods described in FIGS. 1B-1D. Further, the controller 108 may be configured to perform one or more of the signal analysis techniques described herein. In some embodiments, the controller 108 is configured to receive signal data from the near surface sensor(s) 134 and/or the acoustic transducer(s) 106.

The controller 108 may also be able to perform one or more signal transformation techniques to transform the signal data 130. Such signal transformation techniques may include one or more of a Hilbert transform, a fast Fourier transform, a wavelet analysis, convolution, or deconvolution. The controller 108 may be configured to perform a Hilbert transform, fast Fourier transform, etc. on the signal data 130 to separate amplitude and phase characteristics of the signal data 130. The controller 108 may also be configured to re-scale the signal data into a standardized magnitude or a time framework for direct comparison to other signal data 130.

The controller 108 may include one or more processors 124, input/output (I/O) devices 126, and memory devices 118. The processors 124 may include any suitable processing device such as a microprocessor, microcontroller, integrated circuit, logic device, or other suitable processing device. The processors 124 may be used to execute or assist in executing the steps of the processes, methods, functionality, and techniques described herein, and to control various communications, decisions, programs, content, listings, services, interfaces, logging, reporting, etc. Further, the one or more processors 124 may access the memory devices 118, which may store instructions 122, code and the like that are executed by the processors 124 to implement intended functionality.

The memory devices 118 typically include one or more processor-readable and/or computer-readable media accessed by at least the processors 124 and may include volatile and/or nonvolatile media, such as RAM, ROM, EEPROM, flash memory and/or other memory technology. Further, the memory devices 118 are shown as internal to the controller 108; however, the memory devices 118 may be internal, external or a combination of internal and external memory. Similarly, some or all of the memory devices 118 can be internal, external or a combination of internal and external memory of the processors 124. The memory devices 118 may be substantially any relevant memory such as, but not limited to, solid-state storage devices or drives, hard drive, one or more of universal serial bus (USB) stick or drive, flash memory secure digital (SD) card, other memory cards, and other such memory or combinations of two or more of such memory, and some or all of the memory may be distributed at multiple locations over a computer network.

The memory devices 118 may store data 120 such as code, software, executables, scripts, data, content, lists, programming, programs, log or history data, engine information, component information, and the like. While FIG. 1A illustrates the various components being coupled together via a bus, it is understood that the various components may actually be coupled to the controller 108 and/or one or more other components directly. The memory devices 118 store the operational code or set of instructions 122 that is executed by the controller 108 and/or processor 124 to implement the functionality of the inspection system 100 or parts thereof. In some embodiments, the memory devices 118 may also store some or all of the data 120 that may be needed to inspect the specimen 102.

The I/O devices 126 may be any relevant port or combination of ports, such as but not limited to USB, Ethernet, or other such ports. The I/O devices 126 may be configured to allow wired and/or wireless communication coupling to external components. For example, the I/O devices 126 may provide wired communication and/or wireless communication (e.g., Wi-Fi, Bluetooth, cellular, RF, and/or other such wireless communication), and in some instances may include any suitable wired and/or wireless interfacing device, circuit and/or connecting device, such as but not limited to one or more transmitters, receivers, transceivers, or combination of two or more of such devices.

The user interface 128 may be used to control one or more components of the inspection system 100. The inspection system 100 and various components thereof may be operated and controlled via the user interface 128. The user interface 128 may be used for user input and/or output display. For example, the user interface 128 may include any known input devices, such as one or more buttons, knobs, selectors, switches, keys, touch input surfaces, audio input, displays, etc. Additionally, the user interface 128 may include one or more output display devices, such as lights, visual indicators, display screens, etc., to convey information to a user, such as but not limited to communication information, status information, order information, delivery information, notifications, errors, conditions, and/or other such information. Similarly, the user interface 128 in some embodiments may include audio systems that can receive audio commands or requests verbally issued by a user, and/or output audio content, alerts, and the like.

The transducer positioning system 110 is in operative communication with the inspection device 104. More particularly, the transducer positioning system 110 is in operative communication with the acoustic transducer(s) 106 and the controller 108. The transducer positioning system 110 is configured to adjust the position of the acoustic transducer(s) 106 relative to the specimen 102. Further, the controller 108 may send signals to instruct the transducer positioning system 110 to adjust the position of the acoustic transducer(s) 106 or the near surface sensor(s) 134.

The transducer positioning system 110 may include a movable platform, a turntable, a robotic arm, or any other device that holds and/or is capable of moving the specimen 102. The transducer positioning system 110 may also include a device operable to move the acoustic transducer(s) 106 or the near surface sensor(s) 134 such as a robotic arm or a mast that moves via a system of drives. Such a mast may be a straight X-Y scanner or may have a gimbal and/or swivel angle controls. The transducer positioning system 110 may be two separate controllable devices working in conjunction with each other. In some approaches, the transducer positioning system 110 may also be configured to adjust the incidence angle of one or more of the acoustic transducer(s) 106 or the near surface sensor(s) 134.

In some embodiments, controller 108 may cause the transducer positioning system 110 to move the acoustic transducer(s) 106 or the near surface sensor(s) 134 adjacent to a plurality of zones of within the specimen 102. In this manner, the transducer positioning system 110 positions the acoustic transducer(s) 106 or the near surface sensor(s) 134 so that the acoustic transducer(s) 106 or the near surface sensor(s) 134 can interrogate a plurality of zones within the specimen 102.

In some embodiments, the controller 108 is in communication with a manufacturing system 111, for example, via a network 140. The manufacturing system 111 may be configured to perform a manufacturing process or portions thereof, such as a manufacturing process that is used to make the specimen 102 or components similar to the specimen. The manufacturing system 111 includes one or more machines 113 for making, processing handling, and/or manipulating the specimen 102 or components similar to (e.g., of the same type) the specimen 102. The machines 113 can be operatively coupled to the controller 108.

The machine 113 can be a device that is used to move the specimen 102 from an inspection area associated with the manufacturing process to another portion (e.g., a station) of the manufacturing system 111. For example, the machine 113 can be a robot, a conveyor belt, etc. In some examples, the machine 113 is a device that is used to separate or handle the specimen 102. The specimen 102 can be part of a batch of components made via the manufacturing process and the machine 113 can be used to sample or physically move the specimen 102 for testing via the inspection system 100. The machine 113 can also be a device that can be used to move or separate the batch of components with which the specimen 102 is associated. In this manner, the machine 113 can be used to physically sort or separate the batch of components. The machine 113 can also be used to physical sort or separate the specimen 102 from the batch of components.

The machine 113 can also be a device to process the specimen 102, for example, to remove portions of the specimen 102 in which MTR is detected (e.g., affected portions of the specimen 102). For example, the machine 113 can be a band saw or similar instrument that is electronically controlled by the controller 108.

The machine 113 can also be an actuator or other device that is used control the manufacturing system 111 or portions thereof. The machine 113 can be operative coupled to the controller 108 such that the controller 108 can adjust one or more parameters of the manufacturing system 111.

The database(s) 112 may be in communication with the inspection device 104 and/or the transducer positioning system 110. The database(s) 112 can include any data collected or used by the inspection system 100. In some examples, the database(s) 112 includes data collected, generated, and/or otherwise received by the acoustic transducer(s) 106, the near surface sensor(s) 134, the transducer positioning system 110, and/or the controller 108. In one example, the database(s) includes signal data 130, such as acoustic waves generated and/or received by the acoustic transducer(s) 106. In another example, the database(s) 112 includes data, such as position data 132 recorded by the transducer positioning system 110. The database 112 need not be a single database but may include one or more databases. In some examples, the database 112 includes signal data 130 and position data 132.

The signal data 130 includes any data that relates to properties of a sensor signal that is representative of the recorded signal, such as acoustic waves, electromagnetic waves, sensor voltage, or sensor impedance, which may be referred to herein as waveform(s) or signal data 130. Waveforms may be from rectified or unrectified signals. Waveforms may be from an impulse excitation, a single excitation frequency, multiple frequencies, or progressively changing frequency spectra, such as a chirp. The signal data 130 can include any property of an analog or digitized signal. In some examples, the properties of the signal data 130 include at least one of a time-of-travel, a signal amplitude, a voltage, an impedance, etc. In some examples, the signal data 130 can be used to generate one or more intensity maps or histograms generated by the approaches described herein.

Position data 132 includes data that indicates a position on the specimen 102 at which data was acquired. In some examples, the position data 132 indicates the position on specimen 102 at which the signal data 130 was acquired.

In some examples, the database(s) 112 are separate from the controller 108 and/or the inspection device 104. In other examples, the database(s) 112 are part of the controller 108 and/or the inspection device 104. In some embodiments, the controller 108 performs analysis of the signal data 130 without storing the signal data 130. For example, the processor of the controller 108 may only have access to the signal data 130 in RAM and can perform analysis of the data in real-time.

In some embodiments, one or more components of the inspection system 100 including the acoustic transducer(s) 106, the controller 108, the transducer positioning system 110, the near surface sensor(s) 134 and the database(s) 112 communicate information to or from one another over the network 140. The network 140 can be any suitable communication network such as, for example, LAN, WAN, Internet, cellular, Wi-Fi, and other such communication networks or combinations of two or more of such networks. The network 140 may also include wired communications.

In some embodiments, in operation, the controller 108 operates the acoustic transducer(s) 106 to transmit acoustic waves that propagate through a volume of the specimen 102 or a portion thereof. The controller 108 then receives data that is indicative of the acoustic waves, either from the acoustic transducer(s) 106 or from the databases 112. The controller 108 then detects or determines an MTR characteristic of the specimen 102 based on the signal data.

Turning to FIG. 1B, a method 170 of operating the controller 108 (FIG. 1A) is shown. At block 172, the controller 108 causes the acoustic transducer(s) 106 (FIG. 1A) to transmit acoustic waves through a volume of the specimen 102 (FIG. 1A). In the method 170, the acoustic transducer(s) 106 comprise a transducer array that transmits the acoustic waves through the specimen 102. Transmitted, reflected, and/or scattered waves from the acoustic transducer(s) 106 are received by the acoustic transducer(s) 106 and/or the acoustic receiver(s) 116 (FIG. 1A), which then output or generate signals that are received by the controller 108. At block 174, the controller 108 then obtains signal data. At block 176, based on the signal data, the controller 108 determines at least one MTR score that is indicative of MTR present within a subsurface volume of the specimen 102 based on the signal data.

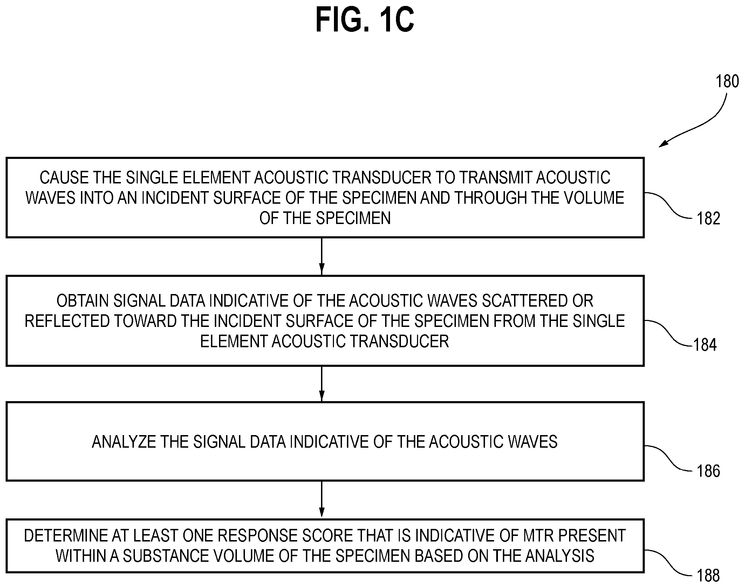

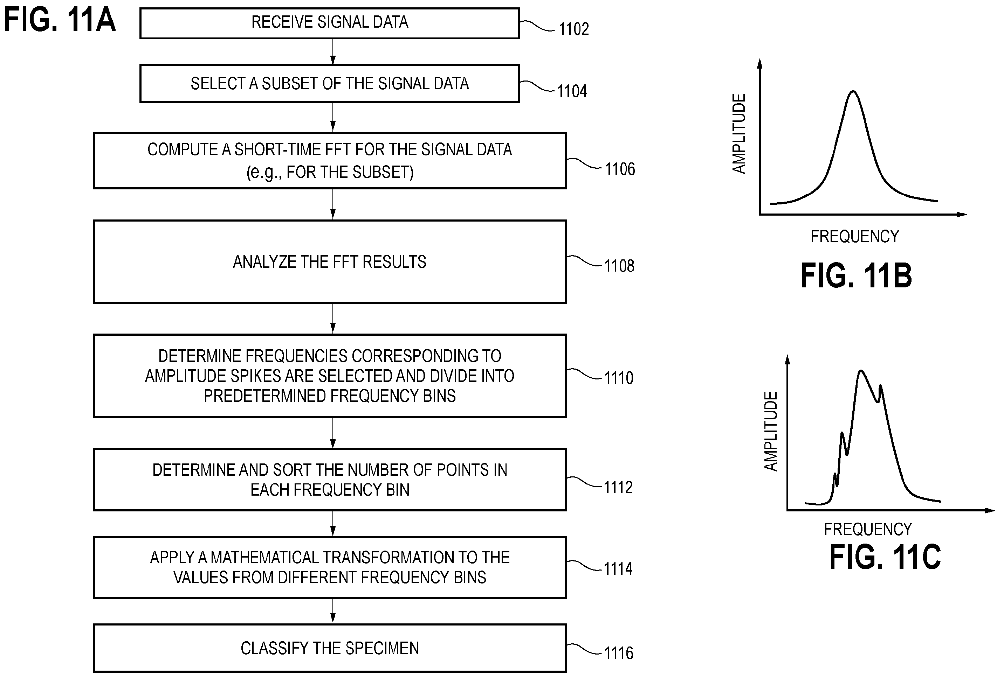

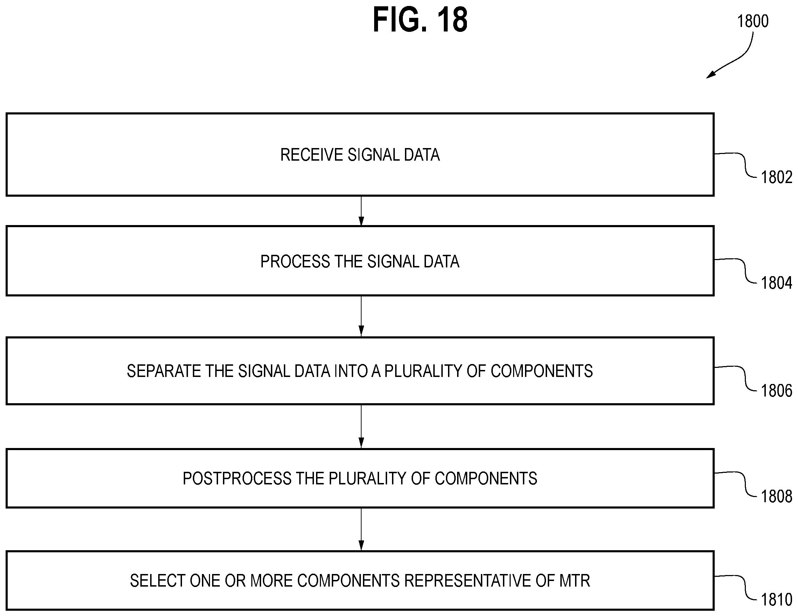

Turning to FIG. 1C, a method 180 of operating the controller 108 (FIG. 1A) is shown. At block 182, the controller 108 causes inspection device 104 (e.g., the acoustic transducer(s) 106 (FIG. 1A) and/or the near surface sensor(s) 134) (FIG. 1A) to transmit inspection energy (e.g., acoustic waves) to the specimen 102 (FIG. 1A) at two or more locations in time, space, or frequency. The controller may cause the controller 108 to transmit the inspection energy into an incident surface of the specimen 102 (FIG. 1A) and through a volume of the specimen 102. At block 184, the controller 108 obtains signal data (e.g., acoustic signals) indicative of the acoustic waves scattered or reflected toward the incident surface of the specimen 102 from the inspection device 104 (e.g., the acoustic transducer(s) 106) at the two or more locations in time, space, or frequency. At block 186, the controller 108 analyzes signal data indicative of the acoustic waves using at least one of the methods described with reference to FIGS. 11-27.

In some embodiments, the controller 108 is configured to determine or compute a quantified description of the two or more acoustic signals relative to each other. In some examples, the quantified description includes at least one of a wavelet analysis, a statistical property of the signal data; an information entropy determination for the specimen; a joint probability or co-occurrence matrix; a phase coherence between features of the waveform representative of the acoustic waves; a comparison of similarity among elements of the transducer array; a comparison between waveforms obtained through full matrix capture; a recognition and cataloging of regions within the specimen; and/or a pattern of a signal envelope representative of the acoustic waves. In some examples, the quantified description includes at least one of a Hilbert transform, a continuous wavelet transform, a Fourier transform; or a short-time Fourier transform.

At block 188, the controller 108 determines at least one response score that is indicative of MTR characteristics that present within a subsurface volume of the specimen 102 based on the analysis.

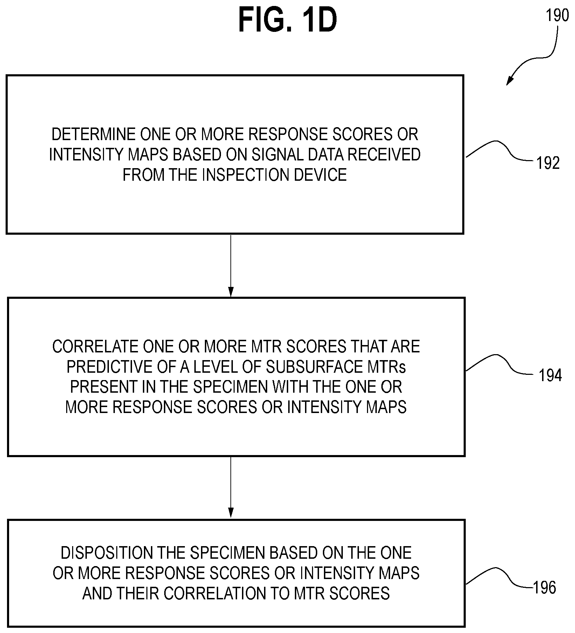

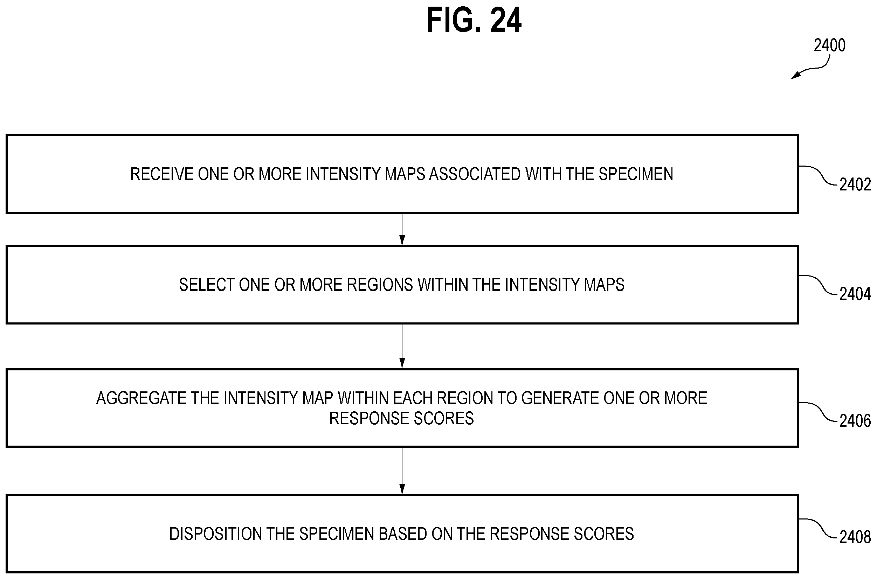

Turning now to FIG. 1D, a method 190 of operating the controller 108 (FIG. 1A) is shown. At block 192, the controller 108 determines or generates one or more response scores and/or one or more intensity maps for the specimen 102 (FIG. 1A). The controller 108 determines or generates the response score(s) and/or intensity map(s) using or based on the signal data. The signal data can be acquired via one or more of the approaches or sensor configurations described herein. FIG. 24 details one exemplary method for determining a response score for the specimen 102 based on the signal data. The signal data can be obtained using one or more of the transducer arrangements shown in FIGS. 2-10. The response scores and/or intensity maps can be obtained or generated using one or more of the analysis methods described herein, include those shown and described with reference to FIGS. 11-27.

At block 194, the controller 108 generates or determines one or more MTR scores based on the response scores and/or the intensity maps. For example, the response scores and/or the intensity maps can be correlated to an MTR score that represents the ground truth MTR content or level of the specimen 102. As used herein, ground truth MTR content or level refers to MTR levels that are from direct observation that reflect actual MTR content or levels such as from measurements via EBSD. The MTR scores are indicative or predictive of a level of subsurface MTRs present in the specimen 102.

At block 196, the controller 108 dispositions the specimen 102 based on the one or more response scores and/or intensity maps and their correlation to the one or more response scores. For example, the controller 108 may determine whether to accept or reject the specimen based on the MTR score. In some approaches, the controller 108 may not determine the MTR score (e.g., may omit block 194) and determine whether to accept or reject the specimen based on the response scores and/or intensity maps. The controller 108 may also assign a material grade to the specimen 102 based on the signal, based on the response scores and/or the intensity maps, or based on the MTR scores. For example, the controller 108 may assign a material grade that acts as an industry specification for the inspection of a particular material, such as titanium (Ti). It is contemplated that the material may be graded into a plurality of classes. The classes may reflect different design requirements.

In some embodiments, the accept/reject decision and/or the material grade for the specimen 102 is output on the user interface 128 (FIG. 1A) of the controller 108. For example, the accept/reject decision and/or the material grade can be output on a screen of the user interface 128 to display the results to an operator. In some examples, the controller 108 may assign an accept or reject identifier to the specimen 102 based on the at least one MTR score and/or based on the accept/reject decision.

In other embodiments, the controller 108 adjusts, operates, or controls the manufacturing system 111 (FIG. 1A) to take an action based on the dispositioning the material grade for the specimen 102. In some examples, the controller 108 the controller 108 controls, operates, or adjusts one or more machines 113 of the manufacturing system 111. It is contemplated that the controller 108 may also cause the manufacturing system 111 to take an action based on the response scores and/or intensity map or based on the MTR score.

## SENSORS

Turning now to FIGS. 2-10, various embodiments of sensor arrangements that can be used in the inspection device 104 of the inspection system 100 of FIG. 1A are illustrated. Any one or combinations of the sensors arrangements, including options shown in FIGS. 2-10, can be selected to be consistent with the inspection systems and methods described herein.

### Volumetric Sensor Configurations

FIGS. 2-7B include sensor arrangements for a volumetric sensor that include acoustic transducers. Although FIGS. 2-7B show the transducer arrangements relative to a cylindrical specimen, it is contemplated that the specimen to be inspected using the inspection system and transducer arrangements described herein may have any shape and/or geometry. FIGS. 2, 3, 5 illustrate transducer arrangements that use a pulse echo transducer configuration and interrogate a specimen using scattered or reflected acoustic waves. As used herein, a pulse echo transducer configuration refers to a transducer configuration in which one or more transducers or transducer arrays are used to emit an acoustic wave (e.g., a pulse) and receive or detect the acoustic wave that is scattered or reflected from a specimen being inspected (e.g., an echo).

FIGS. 4A, 4B, 6A, 6B, 7A, 7B illustrate transducer arrangements that use a pitch-catch transducer configuration and interrogate a specimen using transmitted acoustic waves.

As used herein, a pitch-catch transducer configuration refers to a transducer configuration in which two transducers or transducer arrays are used and one acts as the transmitter (e.g., pitch) and the other acts as the receiver (e.g., catch). In a pitch-catch transducer configuration, the transmitter emits an acoustic wave which propagates through at least a portion of the specimen and is subsequently detected by the receiver.

FIG. 2 illustrates a sensor arrangement 200, in accordance with a first embodiment. The sensor arrangement 200 may be implemented as the acoustic transducer(s) 106 shown and described with reference to FIG. 1A. The sensor arrangement 200 uses a transducer array 266 in a pulse-echo configuration to interrogate the subsurface volume of a specimen 202. In some examples, the specimen 202 is the specimen 102 described with reference to FIG. 1A. The sensor arrangement 200 leverages acoustic waves scattered and/or reflected from the specimen 202 to detect MTR characteristics within the subsurface volume of the specimen 202. The sensor arrangement 200 leverages interactions between an MTR and reflection properties such as reflectivity and scattering.

The transducer array 266 comprises a plurality of acoustic transducers 206. Each of the plurality of acoustic transducers 206 may act as an acoustic transmitter and an acoustic receiver. The transducer array 266 may be implemented as the acoustic transducer(s) 106 of FIG. 1A. As such, the transducer array 266 may be in operative communication with the controller 108 (FIG. 1A). The transducer array 266 is configured to transmit and receive acoustic waves 260 that travel through a volume of the specimen 202.

In some examples, the transducer array 266 is a linear array with the plurality of acoustic transducers 206 arranged in a line. In other examples, the transducer array 266 is a matrix array, with the plurality of acoustic transducers 206 having a two-dimensional arrangement of transducer elements.

In the embodiment shown in FIG. 2, the specimen 202 has a geometry defining a longitudinal direction X and a transverse direction Y that extends perpendicular to the longitudinal direction X. Although the transducer array 266 is oriented along the longitudinal direction X of the specimen 202, it is contemplated that the transducer array 266 could be positioned in other orientations, depending on the geometry of the specimen 202. For example, in some embodiments, the transducer array 266 may be oriented along the transverse direction Y.

In operation, the controller 108 may be configured to cause the transducer array 266 to transmit acoustic waves through the volume of the specimen 202. The controller 108 then obtains signal data of the acoustic waves from the transducer array 266. The controller 108 then determines at least one MTR characteristic present within a subsurface volume of the specimen 202 based on the signal data.

The controller 108 may be configured to implement one or more of the signal analysis techniques described herein to analyze the signal data that is received from the transducer array 266.

FIG. 3 illustrates a sensor arrangement 300, in accordance with a second embodiment. The sensor arrangement 300 may implemented as the acoustic transducer(s) 106 shown and described with reference to FIG. 1A. The sensor arrangement 300 uses a transducer 306 in a pulse-echo configuration to interrogate the subsurface volume of a specimen 302. In some examples, the specimen 302 is the specimen 102 described with reference to FIG. 1A. The sensor arrangement 300 leverages acoustic waves scattered and/or reflected from the specimen 302 to detect MTR characteristics within the subsurface volume of the specimen 302. The sensor arrangement 300 leverages interactions between an MTR and reflection properties such as reflectivity and scattering.

The transducer 306 acts as an acoustic transmitter and an acoustic receiver. In some elements, such as the embodiment depicted in FIG. 3, the transducer 306 is a single element transducer that acts as an acoustic transmitter and an acoustic receiver. In some embodiments, the transducer 306 is a transducer array that includes a plurality of elements acting as both acoustic transmitters and acoustic receivers. The transducer 306 can be implemented as the acoustic transducer(s) 106 of FIG. 1A. As such, the transducer 306 may be in operative communication with the controller 108 (FIG. 1A). The transducer 306 is configured to transmit and receive acoustic waves that travel through a volume of the specimen 302. In some configurations, the transducer 306 is positioned at an incidence angle of 0 degrees and transmits longitudinal waves through the volume of the specimen 302.

In operation, the controller 108 may be configured to cause the transducer 306 to transmit acoustic waves 360 through a subsurface volume of the specimen 302. The controller 108 then obtains signal data from the transducer 306. The controller 108 may analyze the signal data and, based on the analysis, determine at least one MTR characteristic present within a subsurface volume of the specimen 302.

FIGS. 4A-4B illustrate a sensor arrangement 400, in accordance with a third embodiment. The sensor arrangement 400 may be implemented as the acoustic transducer(s) 106 shown and described with reference to FIG. 1A. The sensor arrangement 400 uses an acoustic transmitter 414 and an acoustic receiver array 416 in a pitch-catch configuration to interrogate the subsurface volume of a specimen 402. In some examples, the specimen 402 is the specimen 102 described with reference to FIG. 1A. The sensor arrangement 400 leverages acoustic waves 460 scattered and/or reflected from the specimen 402 to detect MTR characteristics within the subsurface volume of the specimen 402. The sensor arrangement 400 leverages interactions between an MTR and reflection properties such as reflectivity and scattering.

The acoustic transmitter 414 and the acoustic receiver array 416 may be implemented as the acoustic transducer(s) 106 of FIG. 1A. As such, the acoustic transmitter 414 and the acoustic receiver array 416 may be in operative communication with the controller 108 (FIG. 1A).

The acoustic transmitter 414 is configured to transmit acoustic waves 460 through a subsurface volume of the specimen 402. In some embodiments, the acoustic transmitter 414 comprises a single acoustic transmitter element. In other embodiments, the acoustic transmitter 414 is a transducer array comprising a plurality of acoustic transmitter elements.

The acoustic receiver array 416 is configured to receive acoustic waves 460 transmitted by the acoustic transmitter 414. The acoustic receiver array 416 is disposed on the same side of the specimen 402 as the acoustic transmitter 414. In this manner, the acoustic receiver array 416 may receive acoustic waves 460 scattered or reflected from the specimen 402. In some embodiments, the acoustic receiver array 416 can be an acoustic receiver comprising a single acoustic receiver element.

In the embodiment shown in FIGS. 4A and 4B, the specimen 402 has a geometry defining a longitudinal direction X and a transverse direction Y that extends perpendicular to the longitudinal direction X. Although the acoustic transmitter 414 and the acoustic receiver array 416 are aligned on the same side of the specimen 402 and oriented along the longitudinal direction X, it is contemplated that the acoustic transmitter 414 and the acoustic receiver array 416 could be positioned in other orientations, depending on the geometry of the specimen 402. For example, in some embodiments, the acoustic transmitter 414 and the acoustic receiver array 416 may be oriented along the transverse direction Y.

In operation, the controller 108 may be configured to cause the acoustic transmitter 414 to transmit acoustic waves 460 through the volume of the specimen 402. The acoustic transmitter 414 may cause the acoustic waves 460 to travel through the volume of the specimen 402 and to the acoustic receiver array 416 via at least one of scattering or refraction. The controller 108 obtains signal data from the acoustic receiver array 416. The controller 108 then determines at least one MTR characteristic present within a subsurface volume of the specimen 402 based on the signal data.

As shown in the cross-section view of the specimen 402 shown in FIG. 4B, individual MTRs 462 present in the volume of the specimen 402 scatter acoustic waves 460 back to the surface of the specimen 402. The scattered or reflected acoustic waves 460 are received or detected by the acoustic receiver array 416.

FIG. 5 illustrates a sensor arrangement 500, in accordance with a fourth embodiment. The sensor arrangement 500 may be implemented as the acoustic transducer(s) 106 shown and described with reference to FIG. 1A. The sensor arrangement 500 uses a transducer 506 in a pulse-echo configuration to interrogate the subsurface volume of a specimen 502 at various incidence angles 570. In some examples, the specimen 502 is the specimen 102 described with reference to FIG. 1A. The sensor arrangement 500 leverages acoustic waves scattered and/or reflected from the specimen 502 to detect MTR characteristics within the subsurface volume of the specimen 502. The sensor arrangement 500 leverages interactions between an MTR and reflection properties such as reflectivity and scattering.

The transducer 506 acts as an acoustic transmitter and an acoustic receiver. In some embodiments, such as the embodiment depicted in FIG. 5, the transducer 506 is a single element transducer that acts as both an acoustic transmitter and an acoustic receiver. In some embodiments, the transducer 506 is a transducer array that includes a plurality of elements acting as both acoustic transmitters and acoustic receivers. The transducer 506 may be implemented as the acoustic transducer(s) 106 of FIG. 1A. As such, the transducer 506 may be in operative communication with the controller 108 (FIG. 1A). The transducer 506 is configured to transmit and receive acoustic waves that travel through a volume of the specimen 502. In some approaches, the transducer 506 is configured to transmit at least one of longitudinal, shear, or mixed mode acoustic waves.

The transducer 506 is configured to transmit acoustic waves at the incidence angle 570. The incidence angle 570 is an angle defined relative to the normal 568 of an incidence surface of the specimen 502. The incidence angle 570 is the angle between incoming acoustic waves 560 and the normal 568 of the incident surface. As used herein, the incidence surface refers to the surface through which acoustic waves enter the specimen 502. In some approaches, the transducer 506 may transmit acoustic waves at an incidence angle of greater than 0 degrees to about 40 degrees.

In operation, the controller 108 may be configured to cause the transducer 506 to transmit acoustic waves through a subsurface volume of the specimen 502. The controller 108 then obtains signal data from the transducer 506. The controller 108 may analyze the signal data and, based on the analysis, determine at least one MTR characteristic present within a subsurface volume of the specimen 502.

FIGS. 6A-6B illustrate a sensor arrangement 600, in accordance with another embodiment. The sensor arrangement 600 may implemented as the acoustic transducer(s) 106 shown and described with reference to FIG. 1A. The sensor arrangement 600 uses an acoustic transmitter 614 and an acoustic receiver array 616 in a pitch-catch configuration to interrogate the subsurface volume of a specimen 602. The sensor arrangement 600 leverages acoustic waves 660 scattered from and/or transmitted through the specimen 602 to detect MTR characteristics within the subsurface volume of the specimen 602. The sensor arrangement 600 leverages interactions between an MTR and transmission properties such as variations in attenuation and scattering, in addition to variations in velocity and refraction.

FIGS. 6A-6B show end views of the specimen 602. Although the specimen 602 is depicted with a circular cross-sectional area, when viewed from the end views, it is contemplated that the sensor arrangement 600 can be implemented with a specimen 602 having any cross-section shape. In some examples, the specimen 602 is the specimen 102 described with reference to FIG. 1A. The specimen 602 has a first side 602-1 (e.g., spanning a first half of the specimen 602) and a second side 602-2 (e.g., spanning a second half of the specimen 602). The first side 602-1 is spaced from and opposite the second side 602-2 of the specimen 602.

The acoustic transmitter 614 is disposed on the first side 602-1 of the specimen 602. The acoustic transmitter 614 is configured to transmit acoustic waves 660 through a subsurface volume of the specimen 602. In some embodiments, the acoustic transmitter 614 comprises a single acoustic transmitter element. In other embodiments, the acoustic transmitter 614 is a transducer array comprising a plurality of acoustic transmitter elements.

The acoustic receiver array 616 is disposed opposite the acoustic transmitter 614. In particular, the acoustic receiver array 616 is disposed on the second side 602-2 of the specimen 602. The acoustic receiver array 616 is configured to receive acoustic waves 660 transmitted by the acoustic transmitter 614. In this manner, the acoustic receiver array 616 may receive acoustic waves 660 transmitted through the specimen 602. In some embodiments, the acoustic receiver array 616 is an acoustic receiver comprising a single acoustic receiver element.

The acoustic transmitter 614 and the acoustic receiver array 616 may be implemented as the acoustic transducer(s) 106 of FIG. 1A. As such, the acoustic transmitter 614 and the acoustic receiver array 616 may be in operative communication with the controller 108 (FIG. 1A).

In FIGS. 6A-6B, the specimen 602 has a geometry defining a longitudinal direction X (not shown) and a transverse direction Y that extends perpendicular to the longitudinal direction X. Although the acoustic transmitter 614 transmits acoustic waves along the transverse direction Y, it is contemplated that the acoustic transmitter 614 and the acoustic receiver array 616 could be positioned in other orientations, depending on the geometry of the specimen 602, to transmit waves through the specimen 602 in other directions. For example, in some embodiments, the acoustic transmitter 614 and the acoustic receiver array 616 may be positioned to transmit acoustic waves along the longitudinal direction X.

In operation, the controller 108 may be configured to cause the acoustic transmitter 614 to transmit acoustic waves 660 through the volume of the specimen 602. The acoustic transmitter 614 may cause the acoustic waves 660 to travel through the volume of the specimen 602 from the acoustic transmitter 614 to the acoustic receiver array 616 via transmission in at least one of the longitudinal direction X (not shown) and the transverse direction Y. The controller 108 obtains signal data for the acoustic waves 660 from the acoustic receiver array 616. The controller 108 then determines at least one response score for the specimen 602 based on the signal data for the acoustic waves 660.

In some embodiments, the controller 108 may cause the acoustic transmitter 614 to transmit acoustic waves 660 through a plurality of zones within the specimen 602. For example, the controller 108 may be in operative communication with a transducer positioning system such as the transducer positioning system 110 described with reference to FIG. 1A. The transducer positioning system 110 may move one or more of the acoustic transmitter 614 or the acoustic receiver array 616 to position the acoustic transmitter 614 and/or the acoustic receiver array 616 adjacent to one or more zones of the sample.

FIG. 6A-6B illustrate variations in the positioning of the of the acoustic transmitter 614 and the acoustic receiver array 616 relative to the specimen 602 in order to interrogate various zones of the specimen 602.

In FIG. 6A, the acoustic transmitter 614 and the acoustic receiver array 616 are positioned at a normal incidence corresponding to a first depth 662A such that the acoustic waves 660 traverse a first inspection zone 664A of the specimen 602. Thus, the acoustic transmitter 614 can interrogate a plurality of different inspection zones 664, including but not limited to the first inspection zone 664A and the second inspection zone 664B. Due to the circular shape of the specimen 602, the first zone 664A is a first chord of the specimen 602. In FIG. 6B, the acoustic transmitter 614 and the acoustic receiver array 616 are positioned at a second angle of incidence corresponding to a second depth 662B such that the acoustic waves 660 traverse a second inspection zone 664B of the specimen 602. Due to the circular shape of the specimen 602, the second inspection zone 664B is a chord. Selection of the angle of incidence 668B can place the second inspection zone 664B at any desired depth or sound path. Selection of angle of incidence 668B can also be used to choose a sound wave mode such as longitudinal or shear.

In some approaches, the controller 108 is configured to analyze the signal data that is received from the acoustic receiver array 616 using statistical properties of the signal data. Amplitude is one example of a property of the signal data that is analyzed. Due to the pitch-catch configuration of the acoustic transmitter 614 and the acoustic receiver array 616, the amplitude is a transmitted amplitude.

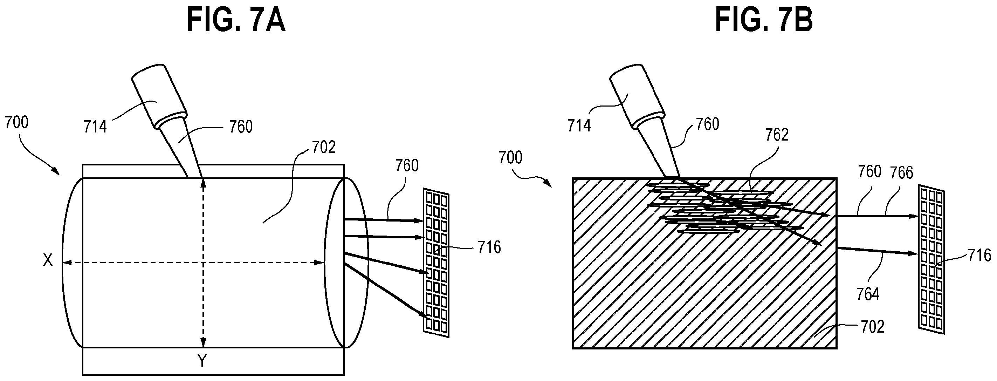

FIGS. 7A-7B illustrate a sensor arrangement 700, in accordance with a sixth embodiment. The sensor arrangement 700 may be implemented as the acoustic transducer(s) 106 shown and described with reference to FIG. 1. The sensor arrangement 700 uses an acoustic transmitter 714 and an acoustic receiver array 716 in a pitch-catch configuration to interrogate the subsurface volume of a specimen 702. In some examples, the specimen 702 is the specimen 102 described with reference to FIG. 1A. The sensor arrangement 700 leverages acoustic waves 760 scattered and/or reflected from the specimen 702 to detect MTR characteristics within the subsurface volume of the specimen 702. The sensor arrangement 700 leverages interactions between an MTR and transmission properties such as variations in velocity and refraction.

The acoustic transmitter 714 and the acoustic receiver array 716 may be implemented as the acoustic transducer(s) 106 of FIG. 1. As such, the acoustic transmitter 714 and the acoustic receiver array 716 may be in operative communication with the controller 108 (FIG. 1A).

The acoustic transmitter 714 is configured to transmit acoustic waves 760 through a subsurface volume of the specimen 702. In some embodiments, the acoustic transmitter 714 comprises a single acoustic transmitter element. In other embodiments, the acoustic transmitter 714 is a transducer array comprising a plurality of acoustic transmitter elements.

The acoustic receiver array 716 is configured to receive acoustic waves 760 transmitted by the acoustic transmitter 714. The acoustic receiver array 716 is disposed substantially perpendicular to the acoustic transmitter 714. In this manner, the acoustic receiver array 716 may receive acoustic waves 760 transmitted through the specimen 702. In some embodiments, the acoustic receiver array 716 can be an acoustic receiver comprising a single acoustic receiver element.

In the embodiment shown in FIGS. 7A and 7B, the specimen 702 has a geometry defining a longitudinal direction X and a transverse direction Y that extends perpendicular to the longitudinal direction X. Although the acoustic transmitter 714 transmits acoustic waves along the longitudinal direction X, it is contemplated that the acoustic transmitter 714 and the acoustic receiver array 716 could be positioned in other orientations, depending on the geometry of the specimen 702, to transmit waves through the specimen 702 in other directions. For example, in some embodiments, the acoustic transmitter 714 and the acoustic receiver array 716 may be positioned to transmit acoustic waves along the transverse direction Y.

In operation, the controller 108 may be configured to cause the acoustic transmitter 714 to transmit acoustic waves 760 through the volume of the specimen 702. The acoustic transmitter 714 may cause the acoustic waves 760 to travel through the volume of the specimen 702 and to the acoustic receiver array 716 via transmission. The controller 108 obtains signal data from the acoustic receiver array 716. The controller 108 then determines at least one MTR characteristic present within a subsurface volume of the specimen 702 based on the signal data.

As shown in the cross-section view of the specimen 702 shown in FIG. 7B, individual MTRs 762 present in the volume of the specimen 702 refract some of the acoustic waves 760. For example, the acoustic waves 760 enter and are transmitted through the specimen 702 in a primary beam 764 and the MTR 762 causes a secondary beam 766 to be refracted away from the primary beam 764. The refracted acoustic waves in the secondary beam 766 are received or detected by the acoustic receiver array 716. The acoustic receiver array 716 may receive acoustic waves in the secondary beam 766 and/or in the primary beam 764.

The transducer arrangement, including options shown in FIGS. 2-7B, can be selected to be consistent with existing inspection configurations used for other purposes, such as the inspection for melt-related anomalies, cracks, or voids in multiple types of materials. For example, the approach shown in FIG. 2 might be used to detect voids or hard alpha inclusions in titanium billet, or the approach shown in FIG. 5 might be used to detect voids in nickel billet. Such an approach could be used in combination with the analysis methods listed herein to accomplish multiple purposes in a single scan. This approach enables one to perform the MTR inspection simultaneously without additional inspections. This approach also enables one to avoid re-configuration of the transducers or instruments between inspections.

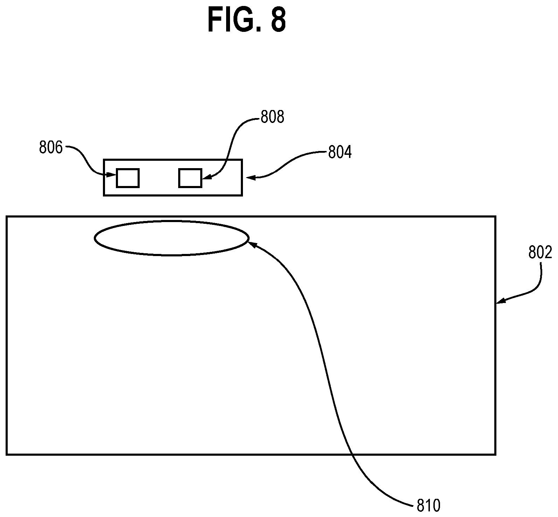

FIG. 8 illustrates an interaction volume 810 that is interrogated by inspecting energy transmitted or generated by a sensor arrangement that includes an inspection device 804 to interrogate a specimen 802. The inspection device 804 can be implemented as the inspection device 104 of FIG. 1A. In FIG. 8, the inspection device 804 is placed on or above the specimen 802.

The inspection device 804 contains one or more excitation sources 806 and one or more signal receiver(s) 808. In some configurations, a single sensor may act as both an excitation source 806 and a signal receiver 808. The excitation source 806 can be any device that is operable to introduce the inspecting energy into the specimen 802 or portions thereof. In some examples, the excitation source 806 is a transducer comprising a piezoelectric element that is configured to generate acoustic waves. In other examples, the excitation source 806 comprises a laser that is configured to generate acoustic waves within a specimen. In some examples, the excitation source 806 comprises one or more coils configured to generate induced electric currents such as eddy currents.

In some embodiments, the excitation source 806 comprises a transmitting sensor array of one or more active elements (e.g., acoustic transducers, coils) arranged to transmit, generate, or otherwise introduce the inspecting energy to the specimen 802. The transmitting sensor array can be a linear array or a matrix array. In some configurations, transmitting sensor array is an acoustic transducer array. The acoustic transducer array can comprise a plurality of acoustic transducers as the active elements that act as an acoustic transmitter and as an acoustic receiver. So configured the acoustic transducer array transmits and receives acoustic waves as the inspecting energy. In other embodiments, the transmitting sensor array is an eddy current sensor array.

The excitation sources 806 generate one or more of: acoustic waves, laser pulses, electromagnetic waves, and/or induced currents within the interaction volume 810 of the specimen 802, and the signal receiver(s) 808 return the corresponding signal data to the inspection system 100 (FIG. 1A). The excitation for an acoustic wave may be in the 1 MHz - 100 MHz frequency range, using a pulse, chirp, toneburst, or coded excitation. The excitation for an induced electric current may be in the 100 KHz - 50 MHz frequency range, using a single frequency, multiple frequencies, or a frequency sweep such as a pulse, chirp, toneburst, or coded excitation.

In some embodiments, the signal receiver(s) 808 comprises a receiving sensor array of one or more elements arranged to receive the inspecting energy from the specimen 802. The inspecting energy may be scattered, reflected, or otherwise transmitted or transferred to the receiving sensor array from the specimen 802. In some embodiments, the receiving sensor array is an acoustic transducer array. In other embodiments, the receiving sensor array is an eddy current transducer array.

The interaction volume 810 refers to the volume of a material that produces a discernable change in the sensor response. It is to be understood that both surface inspection and volumetric inspection of a specimen have an interaction volume 810, however, the interaction volume 810 in surface inspection approaches is very small and adjacent to a surface of the specimen being inspected. For example, volumetric inspection of a specimen may reach greater depths of penetration with a volume of the specimen than surface inspection methodologies. In an example Rayleigh wave inspection, the interaction volume 810 may generally reach a depth of less than two wavelengths into the specimen 802. In an example of an eddy current inspection, the interaction volume is on the order of twice the skin depth. Skin depth may represent effective penetration depth of the eddy currents within the material (e.g., an effective inspection depth).

The inspection device 804 may steer or preferentially orient the interaction volume 810 actively or passively. In an example of passive orientation, the excitation source 806 is shaped in a manner that generates an anisotropic interaction volume 810 due to the geometry of the excitation source 806. In an example of active orientation, the excitation source is mounted on a rotating fixture which rotates relative to the orientation of the specimen 802, providing rotation of the interaction volume 810. In another example of active orientation, multiple excitation sources 806, such as an eddy current array or transducer phased array are excited by the inspection system 100 to adjust, steer, or otherwise form the interaction volume 810 based upon the electrical input to the inspection device 804.

Although FIG. 8 shows the sensor arrangement relative to a flat specimen, it is contemplated that the specimen to be inspected using the inspection system and sensor arrangements described herein may have any shape and/or geometry

### Near-Surface Sensor Configurations

Turning now to FIGS. 9A- 9T, examples of sensor arrangements for the inspection device 104 of FIG. 1A are shown. In particular, FIGS. 9A-9T show example sensor arrangements for near surface sensors. The inspection device 104 in FIG. 1A may be composed of any combination of one or more of the devices shown in FIGS. 9A-9T configured by the inspection system 100 to act separately or in combination. It is further contemplated that any one or combinations of inspection systems and transducer arrangements described in US Non-Provisional Application No. 18/678,918, which is incorporated by reference in its entirety herein, may be used

Referring specifically to FIG. 9A, in one example, the inspection device may include a phased-array pitch-catch configuration configured to generate a Rayleigh Surface wave. In such configuration, multiple transducers are arranged in a specific pattern including one or more acoustic transmitters 904 and one or more acoustic receivers 906. The transducers may be single elements or arrays of multiple elements, such as a linear array. The acoustic transmitters 904 are positioned at a first position with respect to a specimen 902 through a coupling medium and configured at a position and angle which suffice to generate and transmit an acoustic surface wave, e.g. Rayleigh surface wave, across a surface or near surface volume of the specimen 902. The acoustic receivers 906 are positioned at a second location with respect to the specimen 902 and configured to simultaneously receive the acoustic surface wave. The acoustic transmitters 904 are spaced apart from the acoustic receivers 906 at any suitable distance.

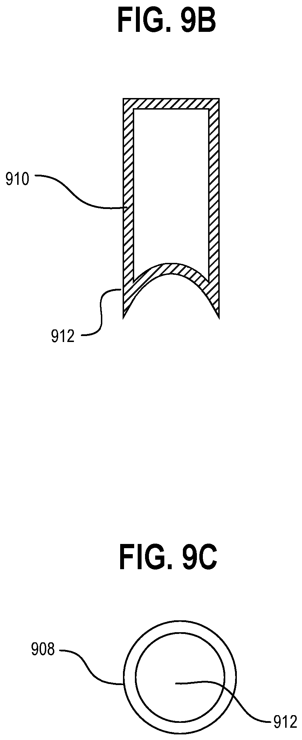

Referring to FIGS. 9B and 9C, in another example, the inspection device may include a single element transducer 910 which generates a spherically-focused wave on a specimen. FIG. 9C is a bottom end view of the single element transducer 910 of FIG. 9B. The transducer 910 includes a concave face 912 and an active excitation element 908. In some approaches, a lens may be positioned between the excitation element and the concave face 912. In other approaches, the excitation element 908 itself may be placed upon the concave face 912, The radius of curvature of the concave face 912 may be selected to achieve a particular wave incidence angle 982 that results in surface acoustic waves (Raleigh waves) that travel across the surface of the specimen. In some approaches, the incidence angle 982 of the acoustic wavefront is greater than 0 degrees to about 40 degrees. The acoustic waves are then received by the acoustic receiver portion of the transducer 910.

In some examples, the concave face 912 may further include one or more acoustic transmitters spaced apart from one or more acoustic receivers. In some examples, the acoustic transmitter and acoustic receiver are separate elements. In other examples, the acoustic transmitter and acoustic receiver are a single piezoelectric element, in which the acoustic wave emitted by one portion of the element may be received on another portion of the concave face 912.

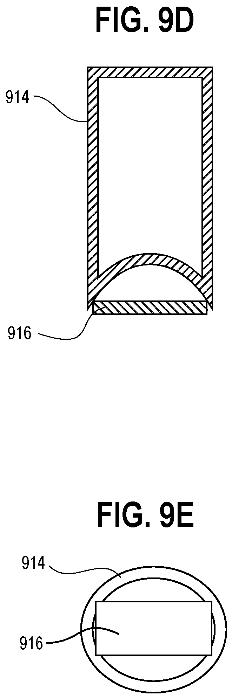

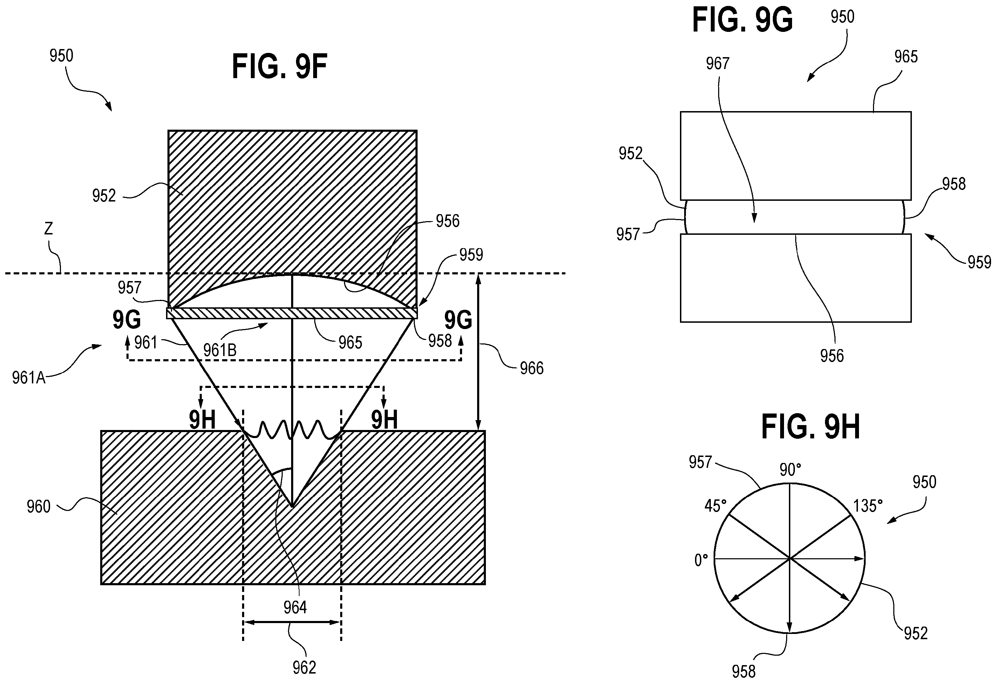

Referring to FIGS. 9D and 9E and 9F and 9G, the inspection device 104 may include single element transducers which generate a preferentially-oriented Rayleigh surface wave.

In FIGS. 9D and 9E, a transducer 914 includes a shaped element 916 to generate a preferentially-oriented Rayleigh wave. FIG. 9E is a bottom end view of the transducer 914 of FIG. 9D. The shaped element 916 may include a single element strip, which may be curved in one or more directions.

In FIGS. 9F, 9G, and 9H, an inspection device 950 includes a transducer 952 that includes a spherical element with a mask 965 which shapes the Rayleigh wave. The mask 965 may include a slit which defines an opening to provide a path through which the acoustic wave travels. The mask 965 may be comprised of foam or other material which sufficiently blocks sound. The shape of the mask 965 may be adjusted to optimize inspection performance for a specific feature size. The mask 965 may be adjustable, removable, or permanently affixed.

The transducer 952 is cylindrical in shape, though, in other embodiments the transducer 952 may be other suitable shapes. The transducer 952 has a concave face 956. The transducer 952 is mounted adjacent to a surface of a specimen 960. The concave face 956 of the transducer 952 is disposed at an end of the transducer 952. The concave face 956 is spaced from the surface of the specimen 960 by a distance 966. The concave face 956 may be a hemispherical or non-hemispherical surface bounded by a peripheral edge 959. In one example, a non-hemispherical surface that forms the concave face 956 may be a concave rectangular strip with a curved surface. Such a strip may or may not possess curved corners. The peripheral edge 959 of the concave face 956 includes an acoustic transmitter portion 957 and an acoustic receiver portion 958. The acoustic transmitter portion 957 and the acoustic receiver portion 958 create a travel gap 962 therebetween. The acoustic transmitter portion 957 is opposite the acoustic receiver portion 958. In this embodiment, the acoustic transmitter portion 957 and the acoustic receiver portion 958 are part of a single piezoelectric device.

The concave face 956 is the active element of the transducer 952 and is a single piezoelectric element that operates as both an acoustic transmitter and an acoustic receiver. The piezoelectric element may operate in a transmit mode in which the transducer operates to activate the piezoelectric element (e.g., the concave face 956) to produce acoustic waves. The piezoelectric element also operates in a receive (or listening) mode in which the transducer waits for acoustic waves to reflect off the surface of the specimen 960 and bounce back to the piezoelectric element (e.g., the concave face 956). Applying electrical energy to the concave face 956 causes the concave face 956 to expand and contract, causing the concave face 956 to vibrate. The vibration of the concave face 956 results in acoustic waves that travel from the acoustic transmitter portion 957 of the transducer 952 to the specimen 960. The thickness of the concave face 956 (e.g., the active element) may determine the frequency of the acoustic waves. The acoustic waves travel across the surface of the specimen 960. The acoustic waves are reflected back to the concave face 956 to the acoustic receiver portion 958 of the transducer 952.

Because the concave face 956 is a piezoelectric material, when the acoustic wave reaches the concave face 956 the motion converts back into an electrical signal. When the acoustic wave is an ultrasonic wave, the electrical signal may be referred to as an ultrasonic waveform. The transducer 952 may emit acoustic waves at a particular pulse repetition rate. The pulses (e.g., the transmission of acoustic waves) may be spaced to allow time between pulses so that the acoustic waves have enough time to reach the specimen 960 and return to the transducer 952 before the next pulse is generated. It is also contemplated that the acoustic transmitter portion 957 may act as an acoustic receiver and that the acoustic receiver portion 958 may act as an acoustic transmitter so that the acoustic waves may also travel across the specimen 960 in the opposite direction or in two directions between the acoustic transmitter portion 957 and the acoustic receiver portion 958.

The acoustic transmitter portion 957 generates or transmits acoustic waves. As shown, the acoustic waves generated by the acoustic transmitter portion 957 of the transducer 952 encounter the surface of the specimen 960 at an incidence angle 964. The incidence angle 964 is such that the acoustic waves travel across the surface of the specimen 960 across the travel gap 962. In some approaches, the incidence angle is from about 20 degrees to about 40 degrees. In other approaches, the incidence angle is from about 25 degrees to about 35 degrees. In yet other approaches, the incidence angle is from about 28 to about 32 degrees, and, in some aspects, the incidence angle is about 30 degrees. The radius of curvature of the concave face 356 may be selected to focus the acoustic energy and achieve a particular incidence angle that results in surface acoustic waves (Raleigh waves) that travel across the surface of the specimen 960. It is contemplated that the radius of curvature the concave face 956 may correspond to the incidence angle and, accordingly, the aforementioned ranges for the incidence angle also apply to the radius of curvature. For example, the radius of curvature may also be from about 20 degrees to about 40 degrees.

The travel gap 962 is the distance that the acoustic waves travel across the surface of the specimen 960. The acoustic waves travel across the travel gap 962 and are received by the acoustic receiver portion 958 of the transducer 952. The time of travel for the acoustic waves across the travel gap 962 is impacted by the characteristics, such as the microstructure, of the specimen 960. For example, the size and orientation of the crystalline grain structure may impact the time of travel for the acoustic waves across the travel gap 962.

The inspection device 950 further includes a coupling medium (not shown). In some approaches, the space surrounding the travel gap 962, the specimen 960, and the concave face 956 is filled with the coupling medium. In some approaches, the entire inspection device 950 is submerged in the coupling medium. In some approaches, a first volume 961A, which submerges an entirety of the concave face 956, is filled with the coupling medium. The first volume 961A includes a volume below the line Z in FIG. 9F. In other approaches, a second volume 961B, which encompasses the space between the acoustic transmitter portion 957 and the acoustic receiver portion 958 through which acoustic waves may travel between the transducer 952 and the surface of the specimen 960, is filled with the coupling medium. The second volume 961A includes a volume of space between the acoustic transmitter portion 957A and the acoustic receiver portion 958 and a volume between the acoustic transmitter portion 957A and the acoustic receiver portion 958 and the specimen 960.

The bottom end of the transducer 952 includes the concave face 956. The peripheral edge 959 of the concave face 956 is an annular edge that has the mask 965 coupled thereto. A portion of the peripheral edge 959 of the concave face 956 is blocked by the mask 965. The mask 965 includes a slit 967 (FIG. 9G) that creates a path from the acoustic transmitter portion 957 to the acoustic receiver portion 958. The slit 967 may help to guide or direct the acoustic waves from the acoustic transmitter portion 957 to the acoustic receiver portion 958. In some approaches, the mask 965 may be omitted by not including the portion of the piezoelectric active element that is covered by the mask 965.

FIG. 9H is a top view of a portion of the upper surface of the specimen 960 of FIG. 9F. FIG. 9H illustrates various sound path angles for acoustic waves transmitted and received by the inspection device 950, when the mask 965 is not present. As shown, the inspection device 950 may perform scans at a plurality of different sound path angles. As illustrated, the inspection device 950 performs four scans including a scan at a sound path angle of 0 degrees, a scan at a sound path angle of 45 degrees, a scan at a sound path angle of 90 degrees, and a scan at a sound path angle of 135 degrees. The direction between the acoustic transmitter portion 957 and the acoustic receiver portion 958 is used to determine or set the sound path angle. It is to be understood that the specific sound path angles that are illustrated are not limiting and that the inspection device 950 may perform scans at any combination of angles and at any number of different angles.

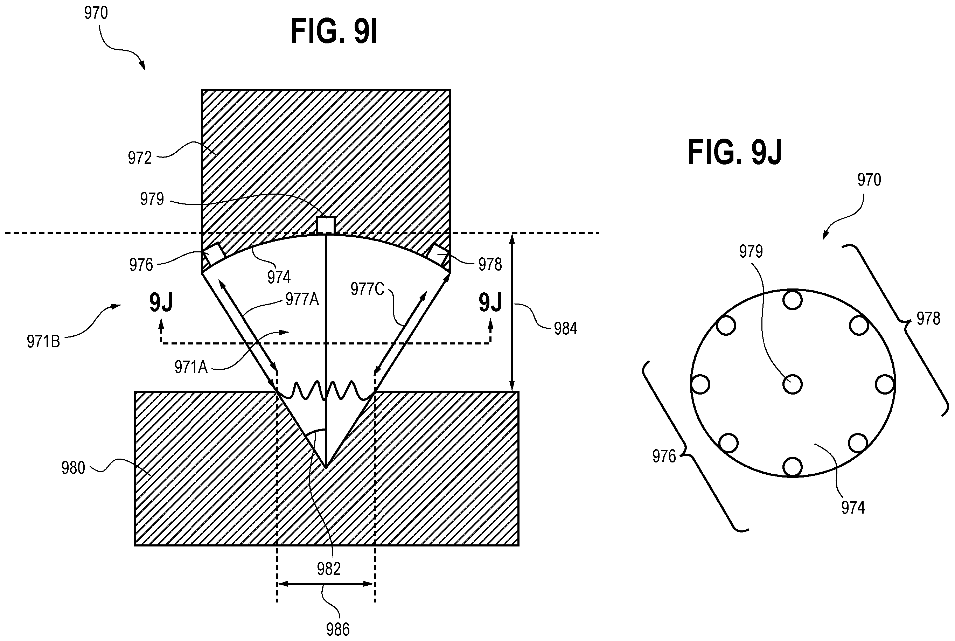

FIGS. 9I and 9J illustrate an inspection sensor 970 with an alternative configuration to that shown in FIGS. 9F, 9G, and 9H. FIG. 9A provides a cross-sectional side view of the inspection device. The inspection sensor 970 is generally the same as the inspection device 950 shown in FIGS. 9F, 9G, and 9H, with a difference being that an acoustic transmitter portion 976 and an acoustic receiver portion 978 on a concave face 974 of a transducer 927 are separate piezoelectric elements. In contrast to FIGS. 9F, 9G, and 9H the transducer 972 includes an acoustic transmitter portion 976 and an acoustic receiver portion 978 in a single piezoelectric element). The acoustic transmitter portion 976 may include one or more acoustic transmitters. Similarly, the acoustic receiver portion 978 may include one or more acoustic receivers.

The inspection sensor 970 further includes a sensor 979 for indicating the position of the transducer 972 relative to a specimen 980. The sensor 979 may sense, detect, or otherwise determine a distance 984 between the concave face 974 and a surface of the specimen 980. The sensor 979 may be a piezoelectric device that acts as an acoustic transmitter and an acoustic receiver. Accordingly, the sensor 979 may transmit acoustic waves to the specimen 980 and receive reflected waves from the specimen 980. The time of travel of the acoustic waves to the specimen 980 and back to the sensor 979 and the velocity of sound through a coupling medium such as water may then be used to determine the distance 984. In some embodiments, the sensor 979 may also be used to ensure that the specimen 980 is level with respect to the transducer 972. For example, the sensor 979 may be used to measure the distance 984 between the transducer 972 and the specimen 980. The level of the specimen 980 may be adjusted until the distance 984 is substantially the same at different points across the entire surface of the specimen 980 or otherwise is substantially the same at a plurality of points along the specimen 980. To achieve this, the level of the specimen 980 may be adjusted until the time of travel is substantially the same at different points along the surface of the specimen 980. It is contemplated that the surface of the specimen 980 may be substantially flat.

The distance 984 may be used to determine a travel distance that the acoustic waves travel between the acoustic transmitter portion 976 and the acoustic receiver portion 978. The travel distance is illustrated by the sum of a first distance 977A, a travel gap 986, and a second distance 977C. The first distance 977A extends between the acoustic transmitter portion 976 and the surface of the specimen 980. The second distance 977C extends between the surface of the specimen 980 and the acoustic receiver portion 978. In some approaches, the travel distance may be determined via one or more geometric formulas when the distance 984 is known. The travel gap 986 may also be determined by one or more geometric formulas when the distance 984 is known. The travel gap 986 is used, along with the time of travel, to determine the velocity of surface acoustic waves that travel across the surface of the specimen 980.

FIG. 9J is a bottom view of the transducer 972 of FIG. 9I. The bottom end of the transducer 972 includes the concave face 974. The concave face 974 does not include a mask. FIG. 9J illustrates the acoustic transmitter portion 976, which in this embodiment includes an array of acoustic transmitters, and the acoustic receiver portion 978, which includes an array of acoustic receivers. The acoustic transmitter portion 976 and the acoustic receiver portion 978 are positioned on opposing sides of the concave face 974. It is also contemplated that the acoustic transmitter portion 976 may act as an acoustic receiver and that the acoustic receiver portion 978 may act as an acoustic transmitter so that the acoustic waves may travel across the specimen 980 in the opposite direction simultaneously.

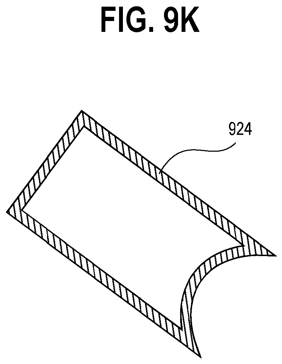

Referring to FIG. 9K, in another example, the inspection device may include a transducer 924 which generates a high-angle shear wave to perform a near-surface inspection. The transducer 924 generates a high angle shear wave by transmitting sound into the specimen, transmitting at an incident angle near the second critical angle. This incident angle refracts a shear wave inside the sample at an angle nearly parallel to the surface of the sample. This incident angle may be generated for a pulse-echo method by orienting the central ray of the transducer 924 at the preferred incident angle, or it may be generated for a pitch-catch method by orienting the central ray normal to the surface, while the transducer 924 lens curvature creates marginal rays that are at the preferred incident angle.

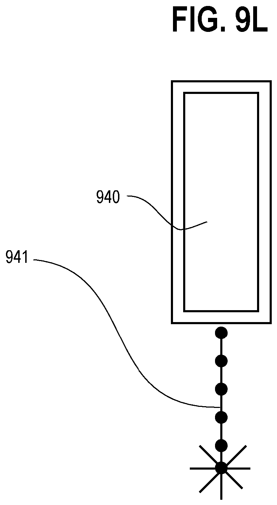

In FIG. 9L, the inspection device may include one or more laser(s) 940 which may generate acoustic waves on or near the specimen surface. The one or more laser(s) 940 may emit a pulsed laser beam 941 to generate the acoustic waves on or near the specimen surface.

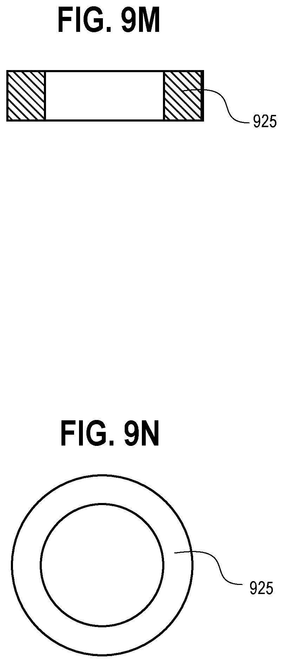

FIGS. 9M-9T show examples of eddy current sensors which may be used to generate induced current near the specimen surface which may be used for the near-surface inspection method as provided herein. Near-surface inspection may be accomplished by a near-surface inspection device. The near-surface inspection device may include any combination of sensors herein, such as the combination of an absolute coil and two opposing D-shaped differential coils. All eddy current sensors shown herein may be augmented with magnetic cores and/or magnetic shielding. In some examples, a magnetic core may be made from ferrite. All eddy current sensors described herein may also be combined with electric or magnetic field sensors, such as magnetoresistive sensors. All eddy current sensors described herein may be controlled via any pattern of driver coil and receiver coil, and may be multiplexed. Further the eddy current sensors described herein can be a single coil that operates as an excitation source and detector (e.g., receiver) or can include separate coils for excitation and detection.

Referring to FIGS. 9M and 9N, the Eddy Current sensor may include an absolute coil 925. The absolute coil 925 may include or be a single coil which generates a circumferentially symmetric induced current field.

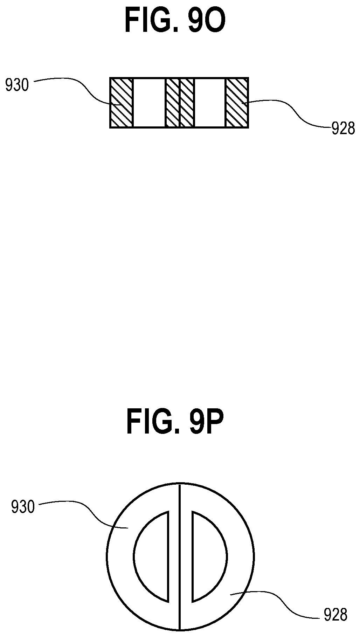

Referring FIGS. 9O and 9P, the eddy current sensor may include a differential coil. In a differential coil, the measured response is based upon the change in signal between a first coil 928 and a second coil 930. In some embodiments, the shape of the first coil 928 and the second coil 930 may resemble the letter "D". In other embodiments, the first coil 928 and the second coil 930 may differ in aspect ratio or other geometric parameters.

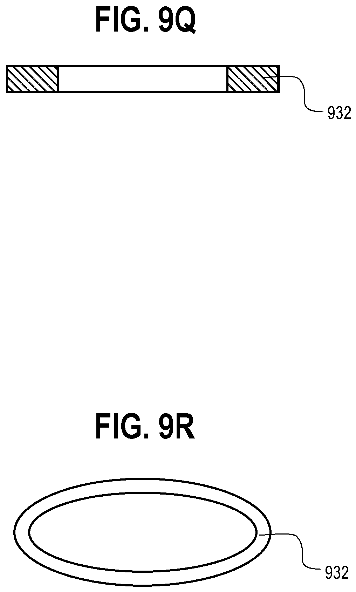

Referring to FIGS. 9Q and 9R, the eddy current sensor may include a "racetrack" coil, which generates an anisotropic induced current field in the specimen. The "racetrack" coil 932 has an elongated, oval shape to alter the spatial distribution of induced electric current. A racetrack configuration may also be combined with differential coils.

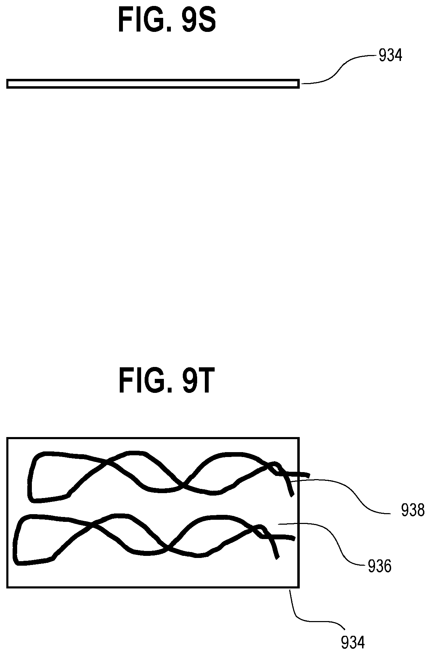

Referring to FIGS. 9S and 9T, the eddy current sensor may include an eddy current array 934, which combines multiple printed circuits to form a customizable coil. The eddy current array 934 may include a flexible array. The eddy current array 934 includes multiple eddy current coils or wires 938 arranged on a printed or flexible circuit substrate 936. The multiple eddy current coils or wires 938 may be multiplexed to control the distribution of induced currents within the specimen. In some configurations, the coils or wires 938 may directionally steer the induced currents within the specimen.

Any one or combinations of inspection system and transducer arrangements, including options shown in FIGS. 9A to 9T, can be selected to be consistent with the inspection configurations used with the inspection methods or signal data analysis methods described herein, including the methods shown and described with reference to FIGS. 11-27.

Any one or combinations of inspection system and transducer arrangements, including options shown in FIGS. 9A-9T can be selected to be consistent with the inspection configurations used for the methods of FIGS. 1B-1D and those described below.

## Near Surface and Volumetric Sensor Configuration

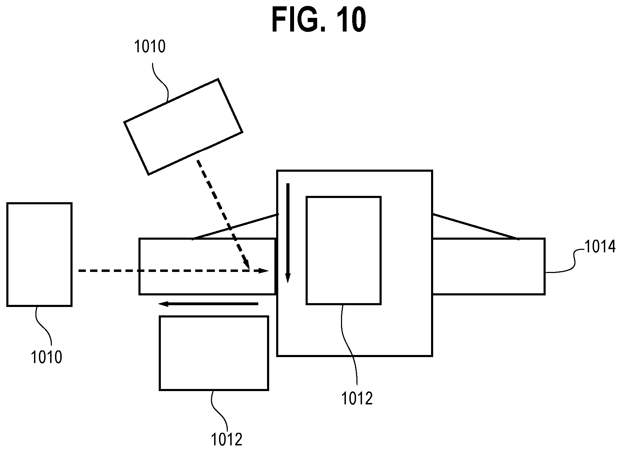

FIG. 10 Illustrates a sensor arrangement that uses a near surface sensor configuration and a volumetric acoustic transducer configuration to compare near-surface measurements and bulk measurements. Near surface measurements may be acquired with a Rayleigh surface wave generated by an ultrasonic transducer, or using induced electric currents generated by a coil. Bulk measurements may be acquired using one or more of the transducer arrangements herein.

The sensor arrangement may include one or more volumetric ultrasonic transducers 1010 arranged at different angular positions with respect to a specimen. The sensor arrangement may further include one or more surface wave ultrasonic transducers or eddy current sensors 1012 arranged at different angular positions with respect to the specimen 1014.

## Chirp Excitation

It is contemplated that any of the above-described sensor arrangements of FIGS. 2-10 can use a time-varying excitation signal is used to expand the frequency content of the signal data. In one example, as the ultrasonic response of an acoustic wave to a grain feature depends on frequency, examining a specimen with a wider range of frequencies may offer improved inspection capability. Advantageously, a time-varying excitation can provide a larger frequency range than the square-wave excitation commonly used in the current industry, and the varying frequency content may allow for frequency-based analysis methods to discern one or more MTR characteristics of the specimen. Also advantageously, since the ultrasonic response to a feature is based upon the wavelength of the wave, a time-varying excitation may be sensitive to a wider range of MTR characteristics than a traditional square-wave excitation.

Additionally, it is contemplated that a longer time-varying excitation may allow for inspection of larger specimen and/or deeper regions within a specimen.

In one approach, the controller 108 of FIG. 1A generates a time-varying excitation signal and applies it to the inspection device 104 (FIG. 1A). The time-varying excitation signal may be a chirp, a toneburst, a gaussian pulse, or other frequency-modulated signal. In some embodiments, a linearly-swept chirp is used, starting at a low frequency $f_0$ and sweeping to a higher frequency $f_1$. In one example, the low frequency may be in the 0.1 MHz - 2 MHz range, and the high frequency may be in the 10 MHz - 20 MHz range. In some examples, the time-varying signal may be a logarithmic chirp.

In other embodiments, a coded excitation may be used, in which an amplitude and/or frequency-modulated excitation is applied in a specific pattern, such as a Golay code, Barker code, or a convolution of Barker and Golay code. Advantageously, modulation of the excitation signal may allow the controller to search the signal data for the excitation pattern, which may allow for an improved signal to noise ratio (SNR) during inspection of the specimen.

As discussed above and consistent with chirp excitation, in some embodiments, the inspection device 104 may comprise a single transducer. In other embodiments, the inspection device 104 may comprise multiple transducer elements, connected into one or more phased arrays. When multiple elements are used, the controller 108 may individually alter the time-varying excitation signal for each element.

In some embodiments, the excitation signal may have a constant voltage. In other embodiments, the excitation may be amplitude-modulated, such as Hanning modulation.

Transducer responds to the time-varying excitation by emitting an ultrasonic wave which has a frequency spectrum similar to the excitation signal. In some embodiments, the characteristics of the excitation signal are selected to optimize the characteristics of the emitted pulse.

The frequency-varying acoustic wave interacts with the specimen. The controller 108 records the waveform response.

In some embodiments, the time-frequency response of the back surface may be used as an intensity metric representative of one or more MTR characteristics.

In other embodiments, the time-frequency response of the backscattered signal may be analyzed using any method herein.

## ANALYSIS METHODS

Turning now to FIGS. 11-27, the various signal analysis methods that can be implemented by the controller 108 of FIG. 1A are illustrated. The signal analysis methods can be used to analyze the signal data and can be implemented with any one of the sensor arrangements described above. It is contemplated that any of the signal analysis methods or combinations thereof can be used in conjunction with any of the sensor arraignments described with reference to FIGS. 2-10.

### Frequency Shift Method

FIG. 11A illustrates a method 1100 of analyzing the signal data acquired using the inspection system 100 (FIG. 1A) based on the frequency response, according to some embodiments. The method 1100 is a frequency-shift based method of classifying specimens based on the MTR severity and localized MTR presence. The method 1100 can be implemented by a controller, such as, the controller 108 as shown in FIG. 1A. Any one or combinations of inspection system and sensor arrangements, including options shown in FIGS. 1-10 can be selected to be consistent with the inspection configurations used for the method 1100.

The method 1100 leverages changes in frequency distribution or content that can occur in an acoustic wave that has interacted with an MTR relative to incident waves. Grains and clusters of grains (MTRs) in metals and alloys scatter and attenuate ultrasound energy. When ultrasound waves strike grains or MTRs, the latter act as point sources that vibrate and generate waves detectable by a transducer. The resulting scattered and reflected waves, referred to herein as back-scatter, carry information about the scatterers. The central frequency of the back-scattered signal may match that of the incident wave (transducer central frequency). But due to the inertial nature of grains and MTRs, a change in frequency distribution or content (e.g., broadening and shift of the frequency spectrum) in the back-scattered signal can occur. Therefore, depending on their size, MTRs can cause spikes in amplitude at frequencies other than central frequency of the transducer. Large MTRs will downshift the scattered wave frequency to a greater extent than smaller MTRs. In other words, apart from a shift in the central frequency, sub-peaks can occur thereby indicating the presence of MTRs of varying sizes.

Other approaches of assessing MTR severity may calculate the crystallographic orientations of features of interest based on the dominant frequency of signals reflected from such features. The intent of the method 1100 is not to carry out such a characterization of specific features but to enumerate features that show frequency shifts away from the expected central frequency. Further, other approaches use the one dominant frequency from the segmented fast Fourier transform to calculate the ultrasound velocity and therefrom, the crystallographic orientation of the reflecting feature. The approach in the method 1100 chooses one or more peaks whose amplitudes are above a fixed fraction of the peak amplitude and uses their rate of occurrence to classify materials as being acceptable or not.

The method 1100 can be used to calculate a shift of frequency distribution in frequency characteristics of the signal data. The shift of frequency distribution in frequency characteristics can be determined between two or more locations of the specimen 102 (FIG. 1A). Changes or shifts in the frequency distribution can include any changes or shifts in the magnitude of a frequency spectrum that is derived from or associated with the signal data. In some embodiments, such changes or shifts are quantified by the changes in peaks within the frequency spectrum.

The method 1100 can be used to analyze the specimen 102 referred to in FIG. 1A. In some examples, the specimens analyzed via the method 1100 include billets, specifically, titanium or nickel billets. In some examples, the specimen may be an end slice of a billet, a macroslice of a forged part (e.g., a fan disc), a surface of a forged part, or any other suitable sample taken of a billet, forging, or part before or after any step of the thermomechanical processing of a metal alloy. In some approaches, the specimen may also be a part or component of a gas turbine engine (e.g., a part or component before assembly or a part or component that has been disassembled from a gas turbine engine). Any one or combinations of inspection system and transducer arrangements, including options shown in FIGS. 2-10 can be selected to be consistent with the inspection configurations used for the method 1100.

At block 1102, signal data indicative of signal energy received from the specimen 102 is received. The signal data can be received from the specimen 102 at two or more locations of the specimen 102. The signal data may be representative of acoustic waves transmitted through a volume of the specimen 102. As used herein, the signal data may include the backscattered signal of the incident acoustic wave. The acoustic waves may be transmitted between a front-wall and a back-wall of the specimen 102. In some approaches, the signal data may be collected by one or more transducers in a pulse-echo or pitch-catch configuration and may be representative of acoustic waves scattered or reflected from the specimen 102. The controller 108 may be configured to collect and/or receive the signal data.

At block 1104, a subset of the signal data is selected. The subset of the signal data may be a window of appropriate width. The window may include a spatial region, a temporal region, or a combination thereof. The window may further include a window of signal data corresponding to the incident wave and/or a window of signal data corresponding to the back-scattered wave.

At block 1106, a short-time fast Fourier transform (FFT) is computed for the signal data (e.g., for the subset or windowed segment). A short-time FFT can be used to determine a power spectrum with the subset or window of the signal data. Various windows may be used for the short-time Fourier transform, such as a box window, a Gaussian window, or discrete prolate spheroidal sequence window. Other suitable windows can be used for the short-time FFT. The FFT converts the spatial or temporal domain signal data into the frequency domain. The FFT also separates frequency characteristics from phase characteristics of the signal data. The properties of the FFT results are analyzed in the selected region to determine the power spectrum. The controller 108 may be configured to compute the fast Fourier transform.

At block 1108, the FFT results are analyzed. The FFT results may be analyzed to determine and identify amplitude spikes that are within a threshold value of the peak frequency. In aspects, the threshold value is equal to a fraction of the highest peak value detected. The amplitude spikes may occur at frequencies other than the central frequency of the transducer. The controller 108 may be configured to use a peak detection algorithm to detect and identify the amplitude spikes. For example, FIG. 11B illustrates a power spectrum of an incident wave with an amplitude at the central frequency of the transducer and FIG. 11C illustrates one example of a power spectrum with amplitude spikes at frequencies other than the central frequency of the transducer.

Next, a shift in frequency distribution is determined for the signal data between the two or more locations based on the frequency characteristics of the signal energy. As used herein a frequency distribution refers to the spectrum of energy for a given frequency within the signal. Changes or shifts in the frequency distribution may be measured by changes in the magnitude of the frequency spectrum. In some embodiments, the changes may be quantified by the changes in peaks within the frequency spectrum. Blocks 1102 to 1116 provide one illustrative approach for determining a shift in frequency distribution between two or more locations of the specimen 102.

At block 1110, the frequencies corresponding to the amplitude spikes are selected and divided into predetermined frequency bins. In some examples, the frequency bins may include bins encompassing a 1MHz window such as (1-2MHz), (2-3MHz), (3-4MHz), (4-5MHz), (5-6MHz), ... (Xn-1-Xn). In some examples, the frequency bins include frequencies within a 1MHz-2 MHz upshift or downshift from a center frequency of the transmitting transducer used to acquire the signal data. In some examples, the frequency bins are defined prior to obtaining the signal data. In some examples, the frequency bins are defined after obtaining the signal data and prior to dividing the frequencies corresponding to the amplitude spikes. The controller 108 may be used to implement this approach. The controller 108 may be configured to create frequency bins, determine the frequencies corresponding to the amplitude spikes and collate each respective frequency into a respective frequency bin.

The steps described at blocks 1102-1110 can be repeated for all scans in a cross-section and/or for all cross-sections of the specimen 102. In other words, the selected window is moved (or slid) to the next set of signal data. The amount by which the window moves (e.g., hop size) may be chosen based on a desired temporal or frequency resolution.

The FFT results from each window are analyzed and the frequencies corresponding to the amplitude spikes are selected and collated into the respective frequency bins.

At block 1112, after repeating the steps described at blocks 1102-1108, the number of points in each frequency bin is determined for a plurality of locations or positions of the specimen 102 analyzed. In this manner, the number of MTRs (corresponding to the amplitude spikes) can be identified and counted. The controller may be configured to count the total number of points in each frequency bin.

At block 1112, the number of points in each frequency bin for each cross section are sorted. In some examples, the number of points are sorted in ascending order. In some examples, the number of points are sorted in descending order. In some embodiments, a statistical distribution may be generated from the points, such as a cumulative distribution function. The controller is configured to sort the number of points in each frequency bin for each cross-section. In some examples, the controller may be configured to plot the number of points in each frequency bin in ascending order across a length of the specimen 102.

At block 1114, a mathematical transformation is applied to the values (corresponding to the number of points) from different frequency bins. In some examples, the mathematical transformations may include addition, subtractions, multiplication, or the like. The mathematical transformation may be any suitable transformation to maximize the differences between cross-sections of a specimen or the differences between two or more specimens. The controller may be configured to apply the mathematical transformation to the values from the respective frequency bins.

At block 1116, the specimens 102 may be classified based on the results of the mathematical transformation. The specimen 102 can be classified, for example, by determining at least one response score for the specimen 102. In some examples, a suitable statistic is calculated from the bin values, such as median, quartile, etc., and this statistic is used to classify the specimen 102. The controller 108 may be configured to classify the specimens 102 based on the mathematical transformation. In this manner, the specimens 102 may be classified based on having high or low MTR content based on the number and/or density of the amplitude spikes. Additionally, the locations of the MTRs can be identified using the position information related to the amplitude peak.

In some embodiments, an intensity map is generated for the specimen 102 based on analysis of the signal data. The intensity map can also be used to characterize the specimen 102, for example, based on MTR content. The intensity map can be used to determine an MTR score for the specimen 102. In some examples, the intensity map is generated or quantified using an Otsu threshold. In some examples the intensity map is generated or quantified using a Gaussian mixture. In some examples, the intensity map is based upon a continuous wavelet transform or a short-time Fourier transform for a specific period of time. In some examples, the intensity map is generated based upon an upshift or a downshift of frequency content of the signal data.

In some embodiments, the intensity map is quantified to determine a shift of frequency distribution of the signal energy. In some examples, the intensity map is quantified based at least in part on enumeration of spots which show a change in frequency distribution below or above a threshold. In some examples, the intensity map is quantified using a statistical measurement of sizes of regions having a uniform frequency shift. In some examples, the intensity map is quantified using a cumulative distribution function of a size of regions having a uniform frequency shift.

In some embodiments, a transmitting sensor array is configured to steer the direction of inspecting energy, such that an upshift or a downshift of frequency distribution can be compared to other steered angles.

In some embodiments, one or more frequency peaks in the signal data are quantified in exclusion of a primary frequency peak. The frequency peaks may be selected to have amplitudes above a fixed fraction of a magnitude of the primary frequency peak to quantify a rate of occurrence of the frequency peaks.

In some embodiments, a spectrogram of a frequency distribution of the signal energy is formed.

In some embodiments, the intensity map is compared to a reference intensity map and a difference or a variance score between the intensity map and the reference intensity map is calculated.

## Spectrogram

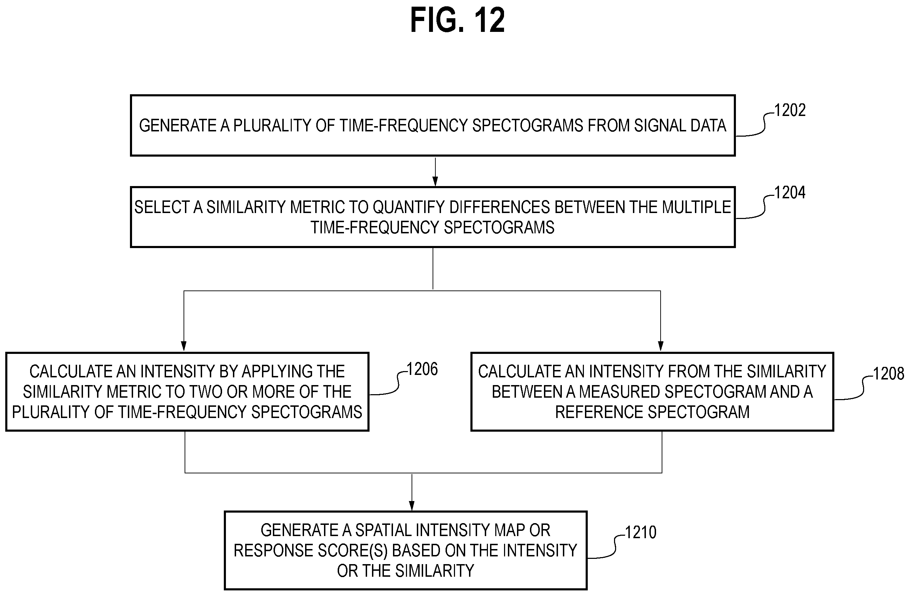

FIG. 12 shows a method 1200 of analyzing signal data that uses time-frequency analysis to generate an intensity map representative of the interaction of the inspecting energy with the specimen 102.

When used herein, a spectrogram is understood as a multi-dimensional dataset where one dimension is a frequency spectrum, a second axis is at least one of position or time, and a third dimension is a measure of the signal intensity. Spectrograms may include multiple spatial dimensions that correspond to the dimensions of the specimen.

At block 1202, a spectrogram (e.g., a time frequency spectrogram) is generated from the signal data. In some embodiments, the spectrogram is generated by a fast Fourier transform, a short-time Fourier transform, a continuous wavelet transform, a discrete wavelet transform, a continuous chirplet transform, a chirp-Z transform, a fractional Fourier transform, or a Gabor transform. It is contemplated that any signal method that calculates the variation of a signal in both time and frequency may be used.

In some examples, various wavelets may be used for the continuous wavelet transform, including both orthogonal and nonorthogonal wavelets, such as a Morlet wavelet, a Mexican hat wavelet, and a generalized Morlet wavelet. It is contemplated that other forms of wavelets could be used.

In some embodiments, a synchrosqueezed version of the fast Fourier transform, a short-time Fourier transform, a continuous wavelet transform, a discrete wavelet transform, a continuous chirplet transform, a chirp-Z transform, a fractional Fourier transform, or a Gabor transform is used. Advantageously, a synchrosqueezed transform may provide finer resolution on details of the frequency behavior of the signal data.

At block 1204, a similarity metric is selected to quantify the differences between a plurality of spectrograms. In some embodiments, the similarity metric is a function that takes two spectrogram matrices as inputs and returns a scalar value representing the difference between the spectrograms. In other embodiments, the matrix is generated by subtracting one spectrogram from another spectrogram, and the similarity function may take only a single matrix as input. It is contemplated that the optimal choice of similarity metric may depend upon the characteristics of the sensor used and manufacturing conditions of the specimen.

In some examples, a Pearson correlation coefficient is used as a metric of spectrogram similarity. In other examples, the selected similarity metric is one of: mean-squared error, peak signal-to-noise, feature similarity index, or structural similarity index.

In other examples, the cross-correlation and/or cross-coherence of the spectrograms may be used as the similarity metric. In other additional examples, the time-frequency ridges are extracted from the spectrogram, representing patterns in the time-frequency space, and the similarity of the ridge curves are compared.

In some approaches, a metric may be generated to measure the area of extent of a uniform characteristic of the spectrogram.

At block 1206, an intensity $I$ is calculated by applying the selected similarity metric to two or more of the plurality of time-frequency spectrograms. Comparing the two spectrograms may give intensity at a single point. Generating an intensity map involves comparing spectrograms at multiple points on the specimen 102.

Alternatively, at block 1208, an intensity $I$ may be calculated from the similarity between a measured spectrogram and a reference spectrogram. In some embodiments, the reference spectrogram may be obtained from a calibration standard of a neutral material, such as a titanium alloy processed to have desirable MTRs conditions, a powder metal alloy, and/or quartz. In another example, the reference spectrogram may be obtained from a physics-based simulation of ideal material. In other examples, the reference spectrogram may be the average signal response from the specimen 102.

In some examples, the intensity map is generated based upon a structural similarity function of the signal data. In some examples, the intensity map is generated based upon cross coherence of the signal data. In some examples, the intensity map is generated based upon mean square error of the signal data. In some examples, the intensity map is generated based upon a phase shift in the signal data. In some examples, an intensity map is generated based on a Pearson correlation coefficient of the signal data. In some examples, the intensity map is generated by calculating features within the signal data which have phase coherence and determining statistics of the features with phase coherence.

At block 1210, this process is repeated to generate a spatial intensity map representative of one or more MTR scores within a region of the specimen 102, or one or more response scores representative of the aggregate MTR state of the specimen 102. An MTR score indicative of MTRs present in the specimen 102 can then be calculated for the specimen 102 based on the response score and/or the spatial intensity maps.

**Phase Coherence**

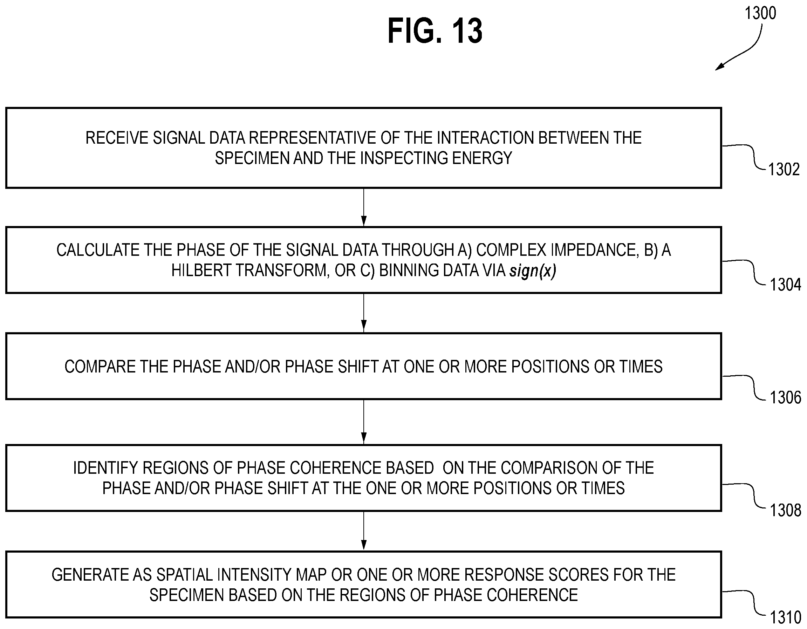

FIG. 13 shows a method 1300 of analyzing signal data. The method 1300 involves determining or calculating coherent features (e.g., phase coherence) within the signal data. In some examples, for signal data acquired from a single element transducer, phase coherence of within signal data is based on spatiotemporal coherence of signal data within a specimen and/or within a waveform. In other examples, for signal data acquired using an array transducer (e.g., a phased array) phase coherence within signal data is based on the coherence of signals from multiple positions, times, and/or elements. The acoustic waves analyzed via the method 1300 may be scattered or reflected acoustic waves.

At block 1302, signal data representative of the interaction of inspecting energy and the volume of the specimen is collected or received. The controller 108 may be configured to collect or receive the signal data, for example, from the inspection device 104.

At block 1304, the phase of the signal data is calculated at one or more positions, times, frequencies, or excitation modes. The phase may be calculated via one or more of: the argument of the complex impedance or voltage of the inspection device; a Hilbert transform; and/or applying the *sign*($x$) function to the signal data.

At block 1306, the phase and/or phase shift of the signal data at one or more positions or times is compared.

At block 1308, regions where the phase of one region of the signal data aligns with the phase of one or more other signal (e.g., regions of phase coherence) are identified. The one or more other signal may be separated in space and/or time from the waveform. In some examples, the controller 108 is configured to identify regions where the phase of one region of the signal aligns with the phase of one or more other signal. In one example, coherence within the signal data is based on regions in the sample with correlated phase. In one example, the phase correlation is calculated using the *sign*(*x*) function (e.g., grouping by "up-peaks" and "down-peaks"). Such regions may apply to signal data collected using single-element and/or array transducers. In another example, coherence within the signal data may be envelope based, for example, based on Hibert transforms. In yet another example, coherence within the signal data may be based on *sign*(*x*)for separate elements of an array transducer.

In one example, the signal data is acoustic waveform and the signal phase is calculated via the Sign function. A coherence vector $\vec{C}$ may be calculated via:

$$\vec{C} = sign\big(X(\vec{r}, t, f)\big)$$

Where $X(\vec{r}, t, f)$ is the signal data at position $\vec{r}$, time *t*, and frequency *f*. Multiple coherence vectors may be compared by varying any of $\vec{r}$, *t*, or *f*. In some examples, a response score may be generated by summing Coherence vectors together. In other examples, the local change in coherence vectors may be represented as an image. It is contemplated that other metrics that represent the similarity between multiple coherence vectors may be used to generate a response score. In other examples, the coherence vectors may be applied as a mask and/or filter to signal data used in other analysis methods described herein or in US Non-Provisional Application No. 18/678,918,

In one example, the signal data is from an acoustic waveform generated from a Rayleigh wave. The signal data may be processed via a Hilbert transform to obtain the signal envelope.

In another example, the signal data is the complex impedance of an eddy current coil. The phase of the complex signal is calculated at multiple positions or times, and the phase coherence and/or change in phase coherence is determined at differing positions, times, or frequencies.

At block 1310, one or more response scores and/or intensity maps are generated based on the regions of phase coherence. An MTR score indicative of MTRs present in the specimen 102 can then be calculated for the specimen 102 based on the response score and/or the spatial intensity maps.

**Instantaneous Phase**

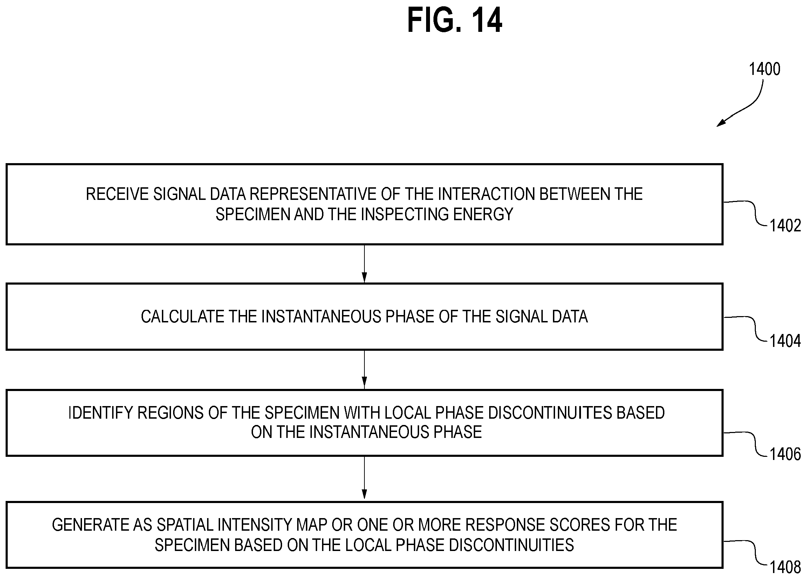

FIG. 14 shows a method 1400 of analyzing signal data based upon localized discontinuities in the phase of the signal data.

At block 1402, signal data that is representative of the interaction of inspecting energy with the specimen 102 (FIG. 1A) is received. The signal data may represent the interaction of an acoustic wave with the specimen or an induced electric field with the specimen. The inspecting energy can be an acoustic wave or an induced electric field. The controller 108 (FIG. 1A) may be configured to collect or receive the signal data, for example, via the inspection device 104 (FIG. 1A). The signal data is collected at multiple regions of the specimen 102.

At block 1404, the instantaneous phase of the signal data is calculated. In some embodiments, the instantaneous phase is calculated from the argument of the complex-valued Hilbert transform. In other embodiments, the instantaneous phase may be calculated from a Taeger Operator. In other embodiments, the instantaneous phase may be calculated from the zero-crossings of the signal data. The instantaneous phase of the signal data can be calculated at one or more positions, times, frequencies, or excitation modes. In some embodiments, the instantaneous phase is calculated based on the argument of the complex impedance or voltage of the inspection device 104. In some embodiments, the instantaneous phase is calculated by applying the sign(x) function to the signal data. In some examples, the phase variation of the signal data is calculated at a specific moment of time. In some examples, an amplitude variation of the signal data is calculated at a specific moment of time.

In one example, the signal data selected may be an acoustic waveform generated from a Rayleigh wave. The signal data may be processed via a Hilbert transform to obtain the instantaneous phase. The Hilbert transform separates amplitude and phase characteristics of the received signal energy captured by the signal data. It is contemplated that other methods that calculate the instantaneous frequency of a signal may also be used as a substitute for the instantaneous phase. In some embodiments, when the inspecting energy is electromagnetic energy, an instantaneous eddy current phase is determined.

At block 1406, regions with a local phase discontinuity are identified. In some examples, discontinuities are identified by unwrapping the phase into a linearly-increasing signal. In other examples, discontinuities may be identified by comparing the phase at nearby locations in time or space.

It may be noted that the method described in FIG. 13 calculates regions with aligned phase, whereas this method identifies discontinuities in the phase.

In some embodiments, the phase data may be filtered to keep only regions where the phase discontinuity exceeds a threshold value of size or magnitude.

At block 1408 this process is repeated to generate a spatial intensity map representative of one or more MTR characteristics within a region of the specimen, or one or more response scores representative of the aggregate MTR state of the specimen. One or more response scores and/or intensity maps may be generated by comparing the instantaneous phase and/or change in instantaneous phase at differing positions, times, or frequencies. The phase signal may be combined or contrasted with other properties of the signal data, such as the signal envelope, time-of-travel peaks, amplitude peaks, or any other signal property described herein. An MTR score indicative of MTRs present in the specimen 102 can then be calculated for the specimen 102 based on the response score and/or the spatial intensity maps.

**Nakagami**

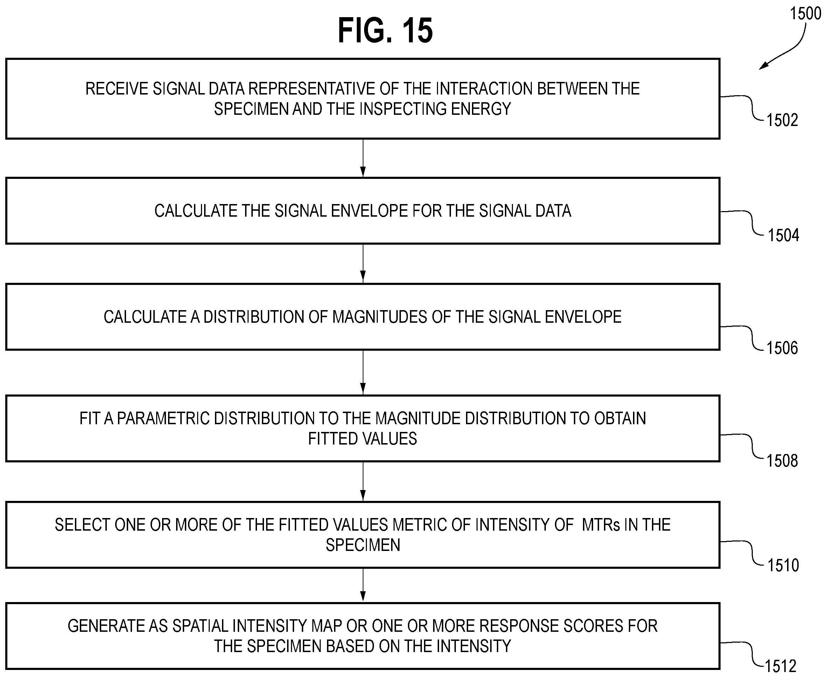

FIG 15 shows a method 1500 of analyzing signal data by examining the distribution of values within the magnitude envelope.

At block 1502, signal data indicative of signal or inspecting energy received from the specimen 102 (FIG. 1A) is received. The signal data can be collected using and/or received from the inspection device 104 (FIG. 1A).

At block 1504, a signal envelope may be calculated for the signal data. In some embodiments, the envelope is calculated via a Hilbert transform. The Hilbert transform may be performed to separate amplitude characteristics and phase characteristics of the signal data. In another embodiment, a moving root mean square (RMS) filter may be used to calculate the envelope. In another embodiment, a spline fit may be used. In another embodiment, an infinite impulse response (IIR) or finite impulse response (FIR) filter may be used to calculate the envelope. It is contemplated that other methods that calculate the envelope of a signal may be used.

At block 1506, a distribution of values is determined or computed for a given characteristic of the signal data. The distribution of values for the given characteristic can be calculated using the signal envelope of the signal data. The given characteristic of the signal energy can include at least one of an amplitude, a phase, a frequency, or a shape associated with the signal data, for example, associated with the envelope of the signal data. In some approaches, a distribution of envelope magnitudes associated with the envelope is calculated.

At block 1508, a quantified description of the distribution of values for the given characteristic is determined or computed. In one example, a parametric distribution may be numerically fit to the magnitude distribution to obtain fitted values. In one embodiment, a Nakagami distribution with a shape and scale parameter is fit. For example, a distribution of amplitude values associated with the signal data can be extracted and fit to at least one of a Nakagami distribution, a generalized Nakagami distribution, or a Rayleigh distribution having a specific parameter descriptive of the shape of the distribution (e.g., a parametric distribution). In another embodiment, a descriptive characteristic function is fit to the shape of the distribution of values for the given characteristic of the signal energy. In some embodiments, a gradient of a shape of the distribution is measured.

In some embodiments, the parametric distribution may include one or more of:
a Nakagami distribution, a Rayleigh distribution, a Gamma distribution, a Homodyned K (HK) distribution, a generalized Nakagami distribution, or a Rician distribution.

In some embodiments, amplitude values are extracted from the signal data and one or more higher order statistics are computed. The higher-order statistics can include one or more of Skewness, Kurtosis, etc. In such an approach, the amplitude values are not limited to a specific model of a distribution function.

At block 1510, one or more of the fitted values is selected as a metric of the intensity, $I$, corresponding to a location on the specimen 102.

At block 1512, the calculation of $I$ is repeated at one or more additional locations on the specimen 102 to generate a spatial intensity map representative of one or more MTR scores within a region of the specimen, or one or more response scores representative of the aggregate MTR state of the specimen. An MTR score indicative of MTRs present in the specimen 102 can then be calculated for the specimen 102 based on the response score and/or the spatial intensity maps.

**Shape Fitting**

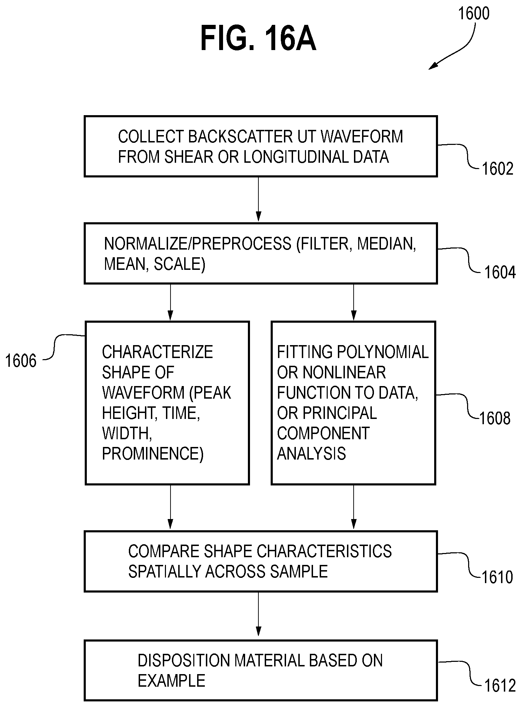

FIG. 16A shows a method 1600 of analyzing one or more sets of signal data to generate an intensity map representative of one or more MTR characteristics within a specimen. The focusing and defocusing of an acoustic wave is dependent upon geometry and material. When signal data is collected at increasing time intervals, the shape of the received signal may be representative of one or more MTR characteristics within the specimen.

At block 1602, signal is collected from a longitudinal, shear, Rayleigh, or mixed-mode wave, which may be generated and received with any of the inspection methods shown and described with reference to FIGS. 1-7B. In some approaches, the scattered acoustic waveform data may be generated with the inspection system 100 and inspection device 104 of FIG.1A.

At block 1604, the signal data is preprocessed through one or multiple filtering and/or normalization processes. Preprocessing can involve various operations.

In one example, the signal data may be preprocessed by performing an envelope calculation, using one or more of: a Hilbert transform, a spline fit, an FIR or IIR filter, or a moving RMS filter.

In some embodiments, the signal data may be averaged across multiple nearby locations within a specimen.

At block 1606, the shape of the signal data is characterized and/or parametrized. In one example, various signal processing parameters may be used including, but not limited to, peak height, time-to-peak, peak width, peak prominence, or integrated area. The signal processing parameters may further include scaling the data to a specified range, one or more frequency-based filters, or one or more statistics-based filters.

At block 1608, the shape of the signal data (e.g., the shape of waveform data and signal profile characteristics) is determined. The shape of the signal data can be quantified by or fit to a shape-descriptive function.

The shape-descriptive function can be a parametric function. The parametric function can include at least one of a polynomial function, an exponential function, a parametric function with exponential and polynomial factors, a parametric function associated with a probability density function (PDF) or a cumulative distribution function (CDF) of a statistical distribution, or a parametric function associated with a physics-based model. The parametric function is fitted to match the signal data based on numerical methods including least-squares, nonlinear least squares, and principal component regression. It is contemplated that any numerical method to fit a parametrized function to data may be used. The function may be fit to any region of interest within the signal data. Characteristic shape parameters can be fit to the signal data. The characteristic shape parameters may further include at least one of a height of a signal peak, a position of a signal peak, a width of a signal peak, a prominence of a signal peak, an integrated area of a signal envelope, or an integrated area of the parametric function to mention a few examples. Quantifying the waveform data and/or signal profile characteristics is one approach for computing a distribution of values for a given characteristic of the signal data. In such an approach, the shape of the distribution is the given characteristic.

In some embodiments, the parametric function used to quantify the signal data may be a polynomial, exponential, gaussian, or a nonlinear combination thereof. It is contemplated that, in some examples, the parametric functions used to quantify the signal data can be in the form of statistical distributions, such as Levy, Log-normal, Weibull, or the like. The parametric function may also be associated with a probability density function (PDF) or a cumulative distribution function (CDF) of a statistical distribution; or a physics-based model. It is also contemplated that a numerical model based on physical principles of acoustic interaction with grain or MTR features may be fit in this regard. One or both approaches described in blocks 1606 and 1608 can be used to quantify the waveform shape.

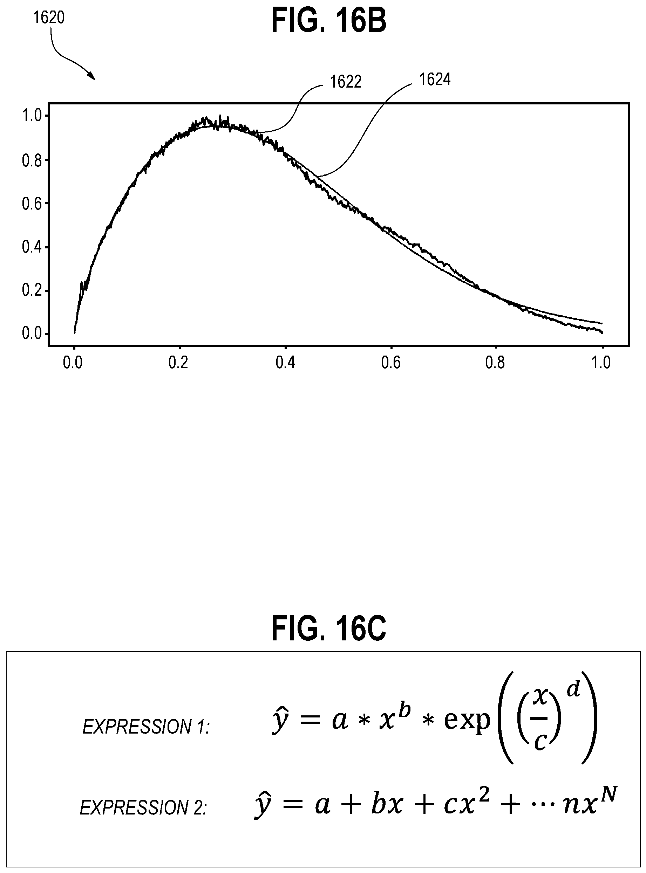

Turning briefly to FIG. 16B, in one example, the preprocessed waveform data is fit to a modified exponential. Expressions 1 and 2 are example expressions that may be used to fit the signal data. Graph 1620 shown in FIG. 16C provides a graph illustrating a preprocessed signal data 1622 fit with a modified exponential expression 1624. The modified exponential expression 1624 may include the expressions 1 and 2 as shown in FIG. 16B. Information about the MTR levels in the specimen can be derived from the fitted values of one or more function parameters (a, b, c, d, etc.).

In another example, the data is fit by a series of splines. In still another example, a linear function may be fit to a region of the waveform data.

In yet another example, the waveform data is preprocessed by averaging over a subregion of the sample and applying a median filter to each signal. The preprocessed signal data is then raised to a power, element by element. Subsequently, a spatial map of the specimen may be generated from the element-wise difference of the cumulative sum of the preprocessed signal data. The spatial map may be used as a representation of one or more MTR characteristics of the specimen, or to generate one or more scores. The score may be indicative of MTRs regions at the various locations on the specimen.

In another example, the shape of the signal data (e.g. waveform data) may be determined by calculating an area under the signal curve of the signal data.

In another example, the shape of the signal data (e.g., waveform data) may be determined by calculating an element-wise difference of a cumulative sum of the signal data raised to a specified power.

Returning to FIG. 16A, at block 1610, the quantified signal shape, including one or both approaches described in blocks 1606 and 1608, is compared spatially across the specimen. The quantified waveform shape data may be compared across multiple locations of the specimen, which may represent individual locations/points, locally-averaged locations, a profile of fit parameters across the specimen, etc.

In one example, the quantified shape of the signal data may be used as an intensity value *I*. The intensity may be calculated at multiple positions on the specimen to generate an intensity map representative of one or more MTR scores.

In another example, a response score for the specimen may be obtained from the quantified shape of the average signal waveform across a region of the specimen. An MTR score indicative of MTRs present in the specimen 102 can then be calculated for the specimen 102 based on the response score and/or the spatial intensity maps.

At block 1612, the specimen may be dispositioned or graded based on the values and distributions of the quantified signal shape at a single location or spatially across the specimen.

**Template Cross-Correlation**

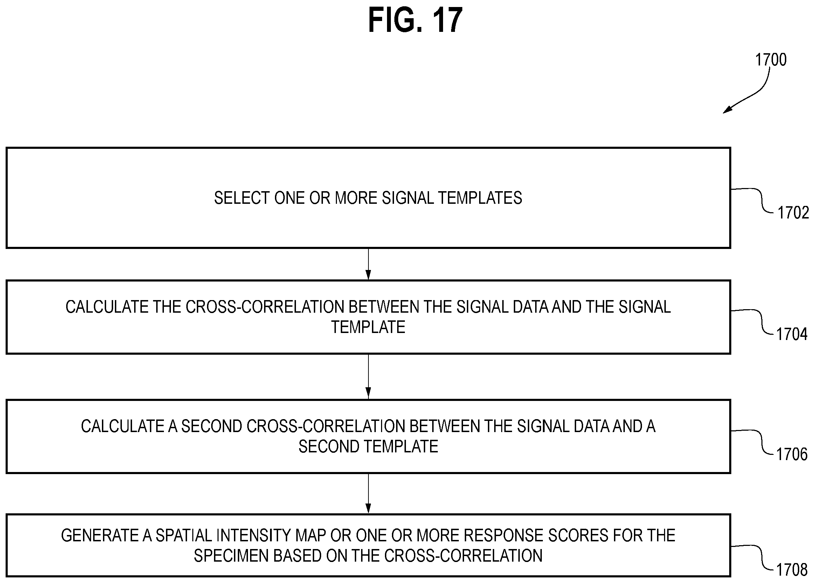

FIG. 17 shows a method 1700 of analyzing signal data by quantifying its correlation to a bank of one or more signal templates.

At block 1702, one or more signal templates are selected. The signal template(s) may be selected to allow for discernment of one or more MTR characteristics. In some embodiments, the signal template is a time-series that represents nominal material. In other examples, the signal template is a signal characteristic of undesirable material, such as the ultrasonic signal response of a single MTR.

In other embodiments, the signal template may be obtained from a calibration standard of a neutral material, such as a titanium alloy processed to have desirable MTRs conditions, a powder metal alloy, and/or quartz. In another example, the signal template may be obtained from a physics-based simulation of ideal material. In other examples, the signal template may be the average signal response from the specimen 102. In another example, the signal template may be derived from the excitation waveform.

At block 1704, the cross-correlation between the signal data and the template is calculated. A cross-correlation may refer to a measure of the similarity between the two signals. The cross-correlation is based on a comparison between the signal data and the signal template. Optionally, the template may be used as a matched filter by time-reversal before cross-correlation. In some examples, the received signal data is correlated with a signal template and a difference or variation score is calculated. In some aspects, a measure of the area extent of a uniform received energy associated with the signal data is measured. Any function which makes the cross-correlation to be an impulse function could qualify as a matched filter, such as in a pulse compression mode.

At block 1706, a second cross-correlation may be calculated between the signal data and a second template. The cross-correlation can optionally be repeated for another signal template. For example, the cross-correlation of the signal data can be repeated for multiple signal templates that are in a bank of signal template.

At block 1708, a spatial intensity map or one or more response scores for the specimen are generated based the cross-correlation and, in some approaches, the second cross-correlation. For example, the signal template is cross-correlated with signal data from multiple regions of the specimen, generating a spatial intensity map representative of one or more MTR characteristics within a region of the specimen, or aggregated into one or more response scores representative of the MTR state of the specimen. An MTR score indicative of MTRs present in the specimen 102 can then be calculated for the specimen 102 based on the response score and/or the spatial intensity maps.

It should be noted using the template cross-correlation, unlike other correlation-based approaches, the signal data is not autocorrelated with a time-lagging version of the signal data from the same position of the specimen, which is the algorithm used in the prior art. Advantageously, the approach herein does not require a shear wave, whereas the prior art specifies only shear-wave inspection. This allows the method herein to be applied during a longitudinal-wave, shear-wave, and/or Rayleigh-wave inspection of a specimen. In the inspection of a round billet, for example, a longitudinal wave may inspect a larger fraction of the specimen than a shear wave. In addition, a rotating specimen is not required for this approach, and the specimen may be scanned in any orientation. Further, advantageously, when a calibration specimen signal is included in the bank of signal templates, it may allow the inspection system 100 to operate with improved robustness in isolating the response of MTR characteristics of the specimen 102.

**Signal Decomposition**

FIG. 1800 shows a method 1800 of analyzing signal data by decomposing the signal data into multiple components. The signal response to an acoustic wave may be dominated by the base frequency and bandwidth of the excitation transducer. Decomposing the signal data into multiple components may allow the inspection system 100 to isolate and remove signal features that do not correspond to MTR characteristics. It is understood that, when used herein, components refer to separate vibrational modes of a signal, having different frequency spectra, time lags, and magnitudes.

At block 1802, signal data is received, for example, from the inspection device 104. The signal data is representative of the interaction between the specimen and the inspecting energy. In some approaches, the excitation energy is an acoustic wave.. The acoustic wave may be a longitudinal, shear, or Rayleigh wave.

At block 1804, the signal data may be preprocessed to improve the results of the decomposition. In some embodiments, the preprocessing may include filtering, an envelope calculation via a Hilbert transform, or FFT-based down sampling. In some embodiments, the signal data may be preprocessed using one or more of: a Hilbert transform, a spline fit, an FIR filter, an IIR filter, or a moving RMS filter.

At block 1806, the signal data is separated into a plurality of components. The signal data can be separated into the plurality of separate components using one or more of: Empirical Mode Decomposition, Variational Mode Decomposition, a Hilbert-Huang Transform, or a Multiresolution Mode Decomposition. In some embodiments, such methods are used to decompose the signal data into components. It is contemplated that any other suitable methods can be used to decompose the signal data into components. At block 1808, one or more of the plurality of separate components may be postprocessed before further analysis. Postprocessing may include filtering, such as a median filter, or a gaussian filter. Additional filtering may include high-pass filters, low-pass filters, and band-pass filter. Postprocessing may also include calculation of the signal envelope, a Hilbert transform, moving RMS filter, spline fitting, IIR filter, or FIR filter.

At block 1810, one or more components which are representative of one or more MTR characteristics are identified or selected. In some embodiments, the selection of relevant signal components may be guided by comparison to a calibration specimen, such as a titanium alloy processed to have desirable MTRs conditions or a powder metal alloy. Components that are present within a test specimen but not the calibration specimen may be representative of undesirable MTR characteristics.

In some embodiments, one or more intensity maps or response scores can then be generated for the specimen 102 based on the one or more components that are indicative of MTRs. The intensity maps or response scores can then be correlated to one or more MTR scores that are indicative of the ground truth MTR present within the specimen 102.

In some embodiments, it is contemplated that the components that are representative of the one or more MTR characteristics may be used as input signal data for any additional analysis method detailed herein. Advantageously, selecting a specific signal component may improve the performance of the selected additional analysis method.

## Rolling A-Scan Dissimilarity

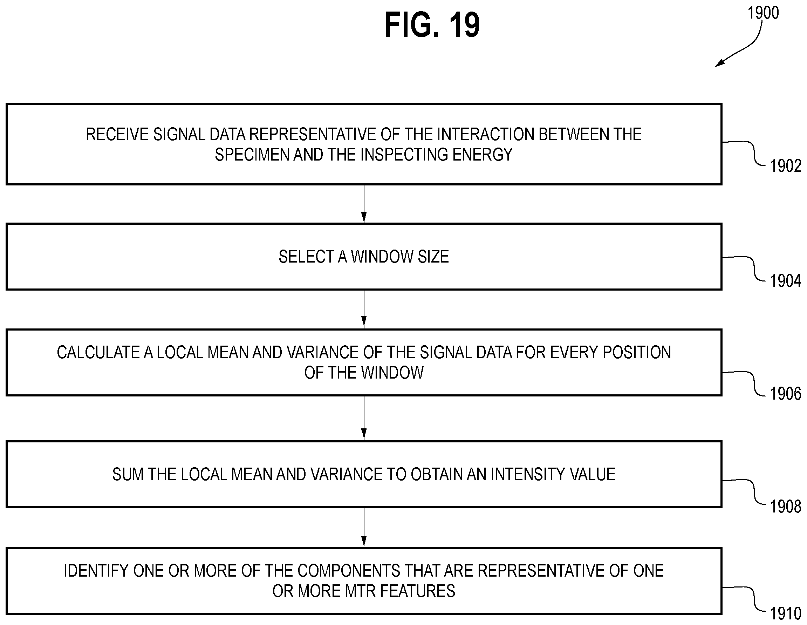

FIG. 19 shows a method 1900 of analyzing signal data based upon the localized variation in the signal data.

At block 1902, signal data is received, for example, from the inspection device 104. The signal data is representative of the interaction between the specimen and the inspecting energy. In some approaches, the excitation energy is an acoustic wave. The signal data may correspond to a longitudinal wave, a shear wave, or a Rayleigh wave.

At block 1904, a window size is selected. The window may be sized include a spatial region associated with the signal data, a temporal region associated with the signal data, or a combination thereof. The selection of window size may be influenced by shape of the interaction volume of the transducer beam. The choice of window size may also be influenced by the size and orientation of the MTR characteristics of the specimen. In some embodiments, the signal data may be limited to a subseries within the focal zone of the transducer.

In one example, the window may be 31 pixels in a horizontal direction, 5 pixels in a vertical direction, and 1 time sample in depth.

In another example, the window may be 3 pixels in a circumferential direction, 3 pixels in an axial direction, and 3 time samples in depth.

At block 1906, the local mean and variance of the signal data are calculated for a plurality of positions and, in some aspects, every position of the window.

At block 1908, the variance and mean are summed across multiple windows to obtain an intensity value. In some embodiments, this intensity value is calculated from the following expression:

$$ I = \Sigma \left( \frac{\sigma_{t_i}^2}{\mu_{t_i}} \right) $$

Where $\sigma_{t_i}^2$ is the variance of the signal data within the window and $\mu_{t_i}$ is the mean of the signal data within the windowed region.

In some embodiments, this expression may be modified by weighting or a nonlinear transformation, such as coefficient weights, a power transform, or a log transform.

At block 1910, the intensity calculation is repeated at one or more locations on the specimen to generate an intensity map representative of at least one MTR characteristic. An MTR score indicative of MTRs present in the specimen 102 can then be calculated for the specimen 102 based the spatial intensity map.

## Signal/Pattern Entropy

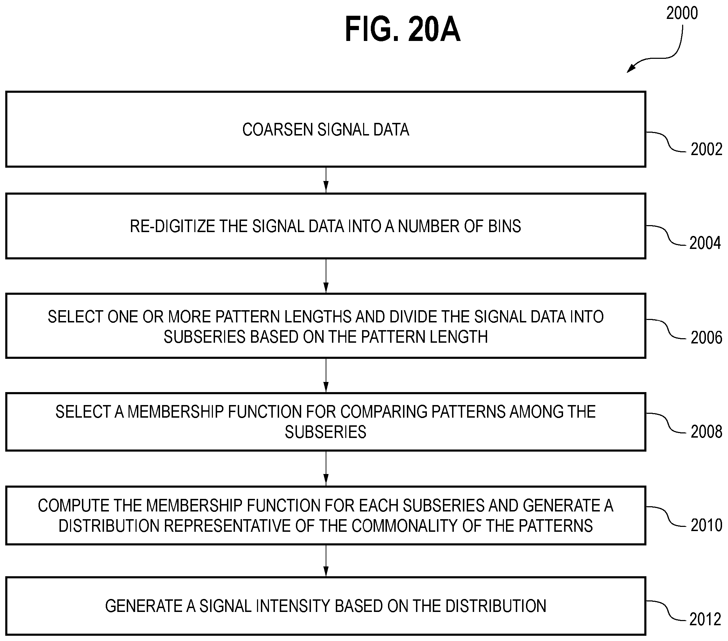

FIG. 20A shows a method 2000 of analyzing signal data based upon the Signal Entropy of the inspection signal data. As used herein, Signal Entropy refers to a metric that quantifies the likelihood of observing similar patterns within the signal data, depending on both the characteristics of the pattern, the number of times each pattern is observed, and how closely the patterns match.

At block 2002, the signal data is optionally coarsened to improve the pattern matching algorithm. Coarsening may refer to a process by which the signal data is modified or represented as a less precise or detailed version. Advantageously, coarsening the signal may allow the inspection system 100 to optimize the inspection for a given size of MTR characteristic.

In some embodiments, the signal data may be coarsened by selecting every N-th sample from the original signal. In other embodiments, the signal may be coarsened by application of a moving mean or median filter, to average neighboring sample points together. In other embodiments, the signal may be coarsened by an FFT-based downsampling. It is contemplated that the coarsening may be adapted based upon the size and depth of microstructural features within the specimen.

At block 2004, the signal data magnitudes are optionally re-digitized into a number of N bins. The bins may be equally or non-equally distributed, such as in a linear or a logarithmic scale. Advantageously, adjusting the number and distribution of bins allows additional control over pattern matching.

At block 2006, one or more pattern lengths $l \in [m, m + b]$ are selected, where m and b are arbitrary positive integers. The signal data is divided into a plurality of subseries of length $l$. In some embodiments, the signal subseries are overlapping windows of length $l$. In other embodiments, the signal subseries may be non-overlapping.

At block 2008, a membership function is selected for comparing patterns among the plurality of subseries. The membership function takes a subset of the signal data, S, and calculates whether it is a sufficiently similar pattern or a new pattern. The membership function may return a binary membership (1, 0) or a scalar value representing an amount of membership.

In some embodiments, multiple sets of signal data may be acquired, and the membership function may compare whether a pattern in one signal has been found in another signal. In one example, the membership function may compare patterns found in adjacent elements of a multiple-element sensor array.

In one example, subseries of the signal data may be matched if their amplitude values exactly match at each point in the subseries. In this approach, careful selection of the bin digitization and signal coarsening can strongly affect the results, as only exactly equal values are matched.

In another embodiment, permutation entropy is selected as the membership function. In the permutation entropy function, two subseries of the signal data are matched if their amplitude values exactly match at each point, but the membership function allows for the occurrence of multiple permutations of the order in which subseries values occur.

In another embodiment, approximate entropy is selected as the membership function. Approximate entropy is a variant that applies a tolerance in membership, using a scalar similarity based upon the vector distance between two signal subseries. Two subseries are considered a match if the vector distance between them is less than a specified threshold.

In another embodiment, the slope entropy function is selected as the membership function. In slope entropy, two signal subseries are considered a match based upon the algebraic slope between consecutive magnitudes of the signal data. In one example, all signal slopes between approximately 0 degrees and 15 degrees may be considered identical. In other examples, all signal slopes between approximately 45 degrees and 80 may be considered identical. Advantageously, slope entropy may ignore small changes in signal magnitude but identify rapid changes, which may be representative of MTR characteristics within the specimen. An extended description of one method to calculate the slope entropy membership function may be found in Cuesta-Frau, D. *Slope Entropy: A New Time Series Complexity Estimator Based on Both Symbolic Patterns and Amplitude Information.* Entropy 2019, 21, 1167.

In another embodiment, fuzzy entropy is selected as the membership function. Fuzzy entropy is a variant that, rather than calculating binary membership, calculates a scalar similarity based upon a function of the vector distance between two signal subseries. An extended description of the fuzzy entropy membership function may be found in W. Chen, Z. Wang, H. Xie and W. Yu, Characterization of Surface EMG Signal Based on Fuzzy Entropy, in IEEE Transactions on Neural Systems and Rehabilitation Engineering, vol. 15, no. 2, pp. 266-272, June 2007 and H. Azami, P. Li, S. E. Arnold, J. Escudero and A. Humeau-Heurtier, Fuzzy Entropy Metrics for the Analysis of Biomedical Signals: Assessment and Comparison, in IEEE Access, vol. 7, pp. 104833-104847, 2019 Advantageously, in fuzzy entropy, calculating the similarity based upon a function of the vector distance may allow the inspection system 100 more precise control over the scalar similarity between subseries.

In one example, the fuzzy entropy similarity may be calculated using a linear function ranging between 0 and 1, corresponding to a linear scaling of the distance between subseries.

In another example, the fuzzy entropy similarity may be calculated using an exponential decay function, such that subseries with a small vector distance are highly similar, but as distance increases, the membership rapidly decreases.

It is contemplated that other related membership functions may be advantageously applied to inspection of MTR characteristics, such as dispersion entropy, fluctuation-dispersion entropy, sample entropy, cosine similarity entropy, or phase entropy.

It is further contemplated that any method of quantifying the likelihood of classifying and counting patterns within a time-domain signal may be suitable as a membership function.

At block 2010, the membership function is computed for each subseries of the signal data. A distribution $p$ that is representative of the commonality of each pattern within the signal may then be generated based on the membership function. In some embodiments, this distribution $p$ is then summed into a scalar value $\phi_m$ representing the distribution of values.

In some embodiments, a weight function $g$ is optionally applied to the probability distribution before summation

into $\phi_m$, according to the expression:

$$\phi_m = \sum g(p_i)$$

At block 2012, a signal intensity is generated based on the distribution. In some embodiments, a signal intensity $I$ is generated from the negative logarithm of $\phi_m$ according to the expression:

$$I = -\log \phi_m$$

In other embodiments, the Signal Entropy is compared for two pattern lengths, which may allow for improved discernment of one or more MTR characteristics. In such examples, the signal intensity $I$ may be generated from the negative logarithm of the difference between $\phi_{m+b}$ and $\phi_m$:

$$I = -(\log \phi_{m+b} - \log \phi_m)$$

In other embodiments, the Signal Entropy may be compared for more than two pattern lengths. In such examples the signal intensity $I$ may be generated from the negative logarithm of the differences between $\phi_m, \phi_{m+1}, \ldots \phi_{m+b}$ according to the expresion:

$$I = -(\log \phi_{m+b} - \log \phi_m + \ldots)$$

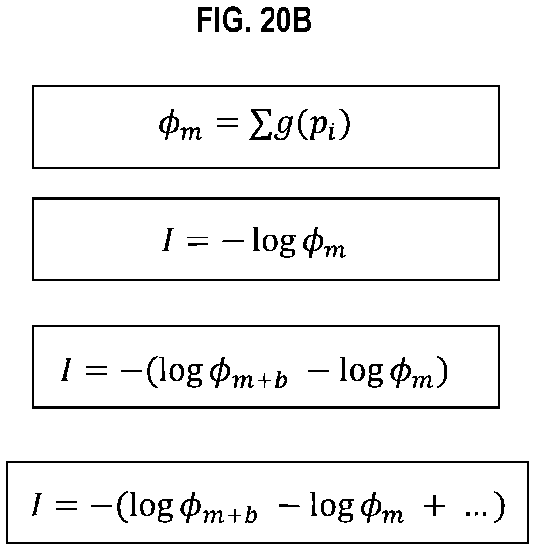

The expressions used in block 2012 are reproduced in FIG. 20B.

The calculation of $I$ is repeated at multiple positions across the specimen, generating a spatial intensity map representative of one or more MTR characteristics within a region of the specimen, or aggregated into one or more response scores representative of the MTR state of the specimen. An MTR score indicative of MTRs present in the specimen 102 can then be calculated for the specimen 102 based on the response score and/or the spatial intensity maps.

**Signal Spikiness**

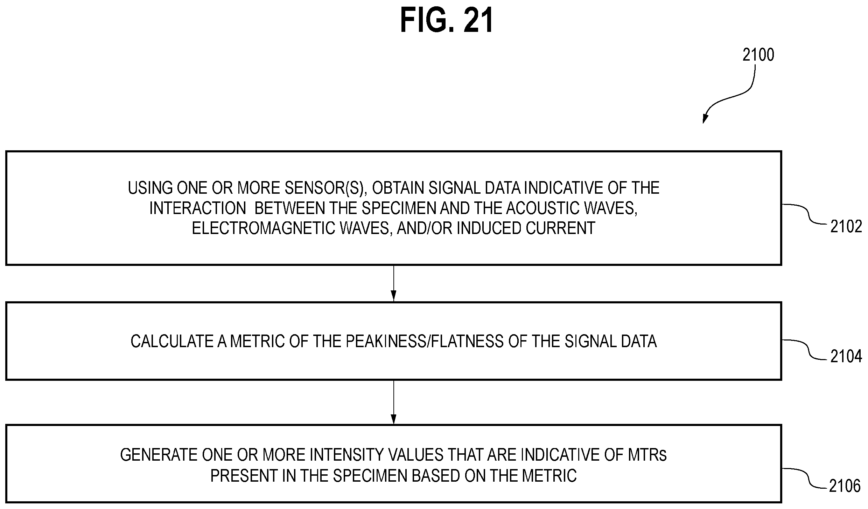

FIG. 21 shows a method 2100 of analyzing signal data based on one or more spectral descriptors of a signal. In this method, a frequency spectrum is necessary and may be obtained through any method described herein. In some embodiments, the method 2100 or portions thereof is performed or executed using the inspection system 100 of FIG. 1A. For example, controller 108 of FIG. 1A may perform or cause to be performed one or more steps of the method 2100.

At block 2102, using one or more sensor(s), such as the acoustic transducer(s) 106 and/or the near surface sensor(s) 134 described with reference to FIG.1A, signal data that is indicative of the interaction between a specimen and the acoustic waves, electromagnetic waves, and/or induced current is obtained.

At block 2104, one or more metrics are calculated that quantify the peakiness or flatness of the signal data. Where used herein, the terms "peakiness" and "flatness" describe the tendency of a signal to have sharp changes. As a low "peakiness" signal may also be understood as a high "flatness" signal, these terms may be used interchangeably.

In some examples, the peakiness/flatness of the signal data may be calculated by one or more of the following functions: spectral kurtosis, spectral skewness, spectral crest, spectral decrease, spectral slope, and spectral rolloff Point. A mathematical description of these functions may be found in Peeters, G. A Large Set of Audio Features for Sound Description (Similarity and Classification) in the CUIDADO Project. Technical Report; IRCAM: Paris, France, 2004.

In other examples, other functions may be used to quantify the signal peakiness including Spectral Flatness, and Spectral Entropy. Mathematical descriptions of these functions may be found in J. D. Johnston, Transform coding of audio signals using perceptual noise criteria, in IEEE Journal on Selected Areas in Communications, vol. 6, no. 2, pp. 314-323, Feb. 1988, and H. Misra, S. Ikbal, H. Bourlard and H. Hermansky, Spectral entropy based feature for robust ASR, 2004 IEEE International Conference on Acoustics, Speech, and Signal Processing, Montreal, QC, Canada, 2004, pp. 1-193,

In other examples, the signal peakiness may be quantified by calculating number of extrema within the signal data, amplitude of extrema within the signal data, width of extrema within the signal data, and prominence of extrema within the signal data.

At block 2106, one or more intensity values that are indicative of MTRs present in the specimen are generated based on the metric that represents the peakiness of the signal.

In another example, an intensity value is generated from the distribution resulting from calculating the spectral entropy within a window of the signal data at multiple locations on a specimen. Spectral entropy for waveform data may be calculated by

$$I = H_{spectral} = -\Sigma P(m) \log_2 P(m)$$

Where $I$ is the entropy, and $P(m)$ is a measure of the power spectrum of the waveform data, obtained through a Fourier transform or a wavelet transform. It is contemplated that $P(m)$ may be weighted or normalized before the calculation of entropy. It may be noted that, while spectral entropy shares a similar name to the other signal entropy methods detailed herein, this approach is concerned with the regularity/spikiness of the signal data, rather than finding specific patterns in the signal data.

In some approaches, the calculation of $I$ is repeated at multiple positions across the specimen, generating a spatial intensity map representative of one or more MTR characteristics within a region of the specimen, or aggregated into one or more response scores representative of the MTR state of the specimen. An MTR score indicative of MTRs present in the specimen 102 can then be calculated for the specimen 102 based on the response score and/or the spatial intensity maps.

**Spatial Segmentation**

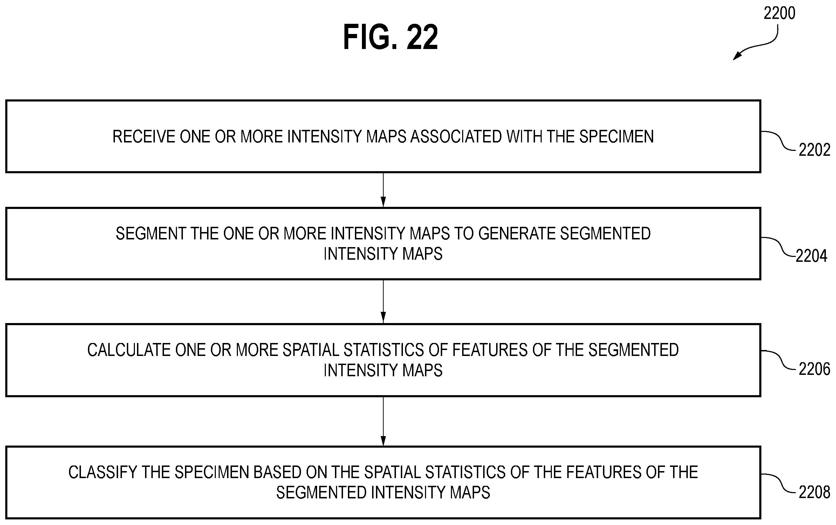

FIG. 22 shows a method 2200 for quantifying the feature size, feature shape, and feature texture of an intensity map by segmenting individual regions and measuring them. Advantageously, the spatial segmentation method described herein quantifies the spatial features of the specimen 102 (FIG. 1A), allowing for improved discernment between specimens which may possess similar intensity maps. Also advantageously, the spatial segmentation method allows for the fusion of intensity maps from multiple analysis methods or sensor configurations. The method 2200 is one exemplary approach for quantifying a size, a shape, or a texture of an intensity map that has been generated using one or more of the approaches described herein.

At block 2202, the inspection system 100 (FIG. 1A) receives as input one or more intensity maps associated with the specimen 102 where the intensity maps are representative of one or more MTR characteristics. In some embodiments, the intensity map(s) may be generated using one of the analysis methods described herein. In other embodiments, the intensity map(s) may include one or more of: a signal magnitude, a signal time-of-flight, a signal attenuation, a signal phase, a signal impedance, a signal voltage, a signal frequency.

At block 2204, the one or more intensity maps are segmented to generate segmented intensity maps. That is, the intensity maps are used to segment the specimen 102 into separate regions. In some embodiments, the intensity maps may be segmented by application of one or more of: an Otsu threshold, a Voronoi-Otsu threshold, a Gaussian mixture model, a Chan Vese model, a watershed, or a marching squares algorithm. The segmented intensity map may optionally be filtered to remove outlying features which are not indicative of MTR characteristics. The signal data is associated with the separate regions to generate segmented data.

At block 2206, one or more spatial statistics are calculated for features, in some aspects each feature, in the segmented intensity maps. The spatial statistics can quantify a shape, a size, or a texture associated with the intensity map. The spatial statistics may include at least one of: a size, a shape, an aspect ratio, an area, a perimeter, a volume, a homogeneity, an intensity, a surface area, or an angle. In some aspects, a signal energy characteristic is aggregated over a group of the separate regions and one or more of skewness, roll off, entropy, kurtosis, or prominence of the aggregated signal energy characteristic is calculated.

As used herein, a homogeneity of a feature is defined as a measure of the distribution of intensity values within a feature. A highly homogeneous feature has little variation in values within the feature, whereas a segmented feature with low homogeneity may have a gradient or other small changes within its internal intensity.

In some embodiments, coherent features with the signal data are calculated and statistics for the coherent features are determined.

At block 2208, the specimen is classified based on the spatial statistics of the features in the segmented intensity maps. In some embodiments, a distribution of the spatial statistic that is most representative of one or more MTR characteristics within the specimen is used to classify the specimen 102. In some embodiments, one or more response scores indicative of MTRs in the specimen are generated based on the statistics of the coherent features.

In one example, the intensity map corresponds to the shift of peak frequencies in a bulk acoustic wave. The area and aspect ratio of each feature are calculated and compared to a reference distribution, and if the distribution of area and aspect ratio is within an acceptable tolerance, the specimen 102 is graded as acceptable.

In some embodiments, an MTR score for the specimen is determined based at least in part on the spatial statistics, which quantify the shape, the size, and/or the texture of the intensity map.

**Co-Occurrence Matrix**

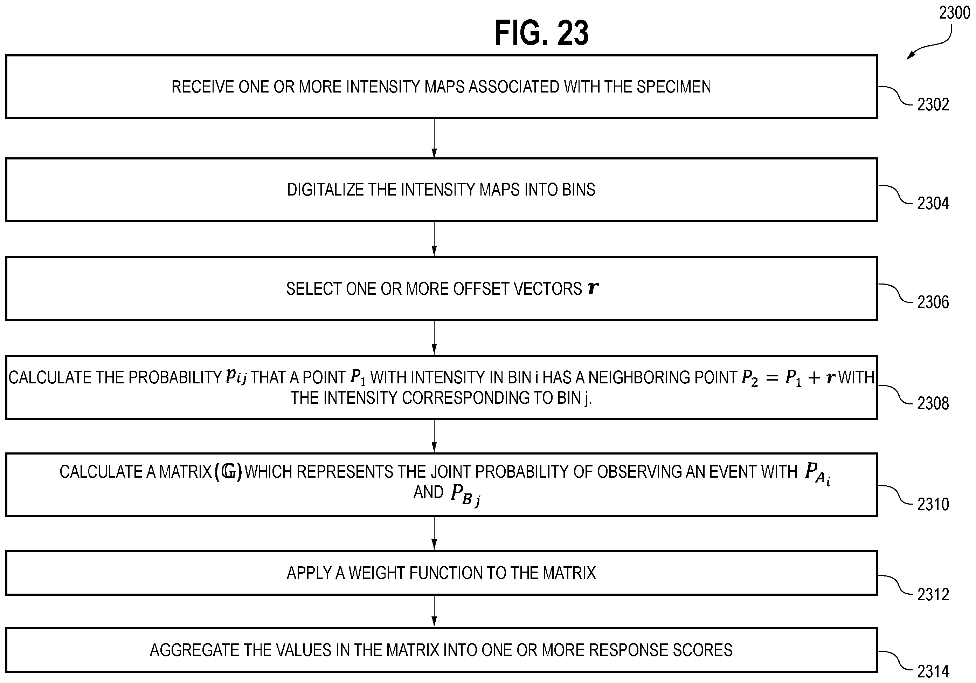

FIG. 23 shows a method for quantifying the feature size, feature shape, and feature texture of one or more intensity maps into one or more response scores, using a co-occurrence matrix method. Advantageously, the co-occurrence matrix method allows for the fusion of intensity maps from multiple analysis methods or sensor configurations. Also advantageously, the co-occurrence matrix method incorporates an offset vector allowing for sensitivity to the spatial size and spatial orientation of MTR features within the specimen. It is contemplated that the offset vector may be adjusted by the inspection system 100 (FIG. 1A) based upon the manufacturing process in question. The method 2300 is one exemplary approach for quantifying a size, a shape, or a texture of an intensity map that has been generated using one or more of the approaches described herein.

At block 2302, the inspection system 100 receives as input one or more intensity maps representative of one or more MTR characteristics is generated. In some embodiments, the intensity map(s) may be generated using one of the analysis methods described herein. In other embodiments, the intensity map(s) may include one or more of: a signal magnitude, a signal time-of-flight, a signal attenuation, a signal phase, a signal impedance, a signal voltage, a signal frequency. In some embodiments, the intensity map(s) may be generated based on one or more parameters associated with eddy current inspection data.

In one example where a first intensity map and second intensity map possess different coordinate systems, an affine transformation may be used to bring both intensity maps into a common coordinate system.

At block 2304, the intensity map is digitized into a number of bins in the range $[0, ... i, ... N]$. In some examples, the bins may be linearly distributed among the range of intensity values, while in other examples, the bins may be nonlinearly distributed, e.g. a logarithmic scale. Advantageously, adjusting the digitization bins allows for additional control over which features of the intensity map are classified as equivalent.

In an embodiment where multiple intensity maps are used, it is understood that the i -th bin of each map may represent different scales or values.

At block 2306, one or more vector offsets r are selected. The vector offset may be in distance, angle, time, or any other dimension of the intensity maps. In some embodiments, the vector offset r may correspond to an intensity map in the same specimen coordinates but measuring a separate metric of MTR intensity.

In one such example, a first intensity map may be the time-of-flight of an acoustic surface wave, and the second intensity map may be the complex impedance of an eddy current coil. In another such example, a first intensity map may be the phase response of an acoustic surface wave, and the second intensity map may be the attenuation of a longitudinal wave.

It is understood that the mathematical formulation of the offset vector and co-occurrence matrix may be adjusted to match the dimensionality of the selected intensity map(s), in embodiments where the signal data and intensity map may take dimensions not described otherwise herein.

At block 2308, the inspection system 100 calculates the probability $p_{ij}$ that a point $P_1$ with intensity in bin i has a neighboring point $P_2 = P_1 + r$ with the intensity corresponding to bin j. This calculation is repeated for each combination of bins and stored in a matrix $G$. In a case where a single two-dimensional intensity map is utilized, this approach mathematically corresponds to a Grey Level Co-Occurrence Matrix.

This process at block 2308 is optionally repeated for a set of multiple offset vectors $r$. Advantageously, use of a set of offset vectors may allow the inspection system 100 to determine the offset vector that is most representative of one or more MTR characteristics of the specimen.

At block 2310, the inspection system 100 calculates a matrix $G$ which represents the joint probability of observing an event with $P_{A_i}$ and $P_{B_j}$. The probability that the reference region (e.g., pixel) has one specific value $A_i$ and the offset region has a second specific value $B_j$ is calculated. This process is repeated for all bins of the data, creating a matrix ($\mathbb{G}$) which represents the joint probability distribution of the values at $P_0$ and $P_1$

At block 2312, a weight function w(ij) is optionally applied to the matrix, for example, to the co-occurrence matrix. Applying a weight function may allow the inspection system 100 to emphasize specific combinations of intensity bins, allowing for additional discernment on specific MTR characteristics.

The matrix generated via blocks 2302-2312 acts as a quantification of the texture of the intensity map. One or response scores for the specimen can then be generated for the specimen based on this quantification of the intensity map.

At block 2314, the values in the matrix are aggregated into one or more response scores. A weight function can be applied to the matrix to aggregate the values of the matrix into one or more response scores. For example, the values in $G$ are aggregated into one or more response scores R, indicative of one or more MTR characteristics across a region of the specimen. In one example, the response score is aggregated according to the expression below, using an optional weight and scaling function.

$$R = h(\Sigma\Sigma\left(w\left(p_{ij}\right)\right),\ p_{ij} \in G$$

In one example, the weight function w(ij) is given by *w(i,j) = p$_{ij}$ * log(p$_{ij}$)*, which is analogous to the Shannon entropy.

In another example, the weight function w(ij) is given by *w(i,j) = p$_{ij}$ * |i - j|*, and the scaling function is $h(x) = \sqrt{x}$.

In some embodiments, the calculation of R may be repeated for multiple values of the offset vector, and the change in R is calculated for multiple positions and feature orientations. The change in R may be used to calculate a characteristic length, characteristic orientation, characteristic size, characteristic shape, or characteristic texture of the intensity map.

In some embodiments, a plurality of matrices are used to determine or represent a likelihood that two energy signals are separated by a specific offset distance have the same characteristic. For example, the plurality of matrices could be calculated or generated from multiple intensity maps or different positions.

The inspection system 100 may then disposition the specimen according to the values of one or more response scores. An MTR score indicative of MTRs present in the specimen 102 can then be calculated for the specimen 102 based on the response scores.

The method 2300 illustrates one approach for characterizing the size, the shape, and/or the texture of the intensity maps described herein. In some approaches, the size, the shape, and/or the texture of the intensity map can be quantified by selecting two or more properties of the signal data that is used to generate the intensity map. Each of the two or more properties is then divided into a range of levels. A matrix containing a joint probability of observing each combination of the range of levels is then calculated. A weight and adjustment function can then be applied to the matrix and one or more MTR scores generated for the specimen based on the matrix.

**Aggregation of an Intensity Map**

FIG. 24 shows an additional method 2400 of aggregating an intensity map to generate one or more response scores indicative of one or more MTR characteristics across a region of the intensity map.

At block 2402, the inspection system 100 (FIG. 1A) receives one or more intensity maps associated with the specimen 102 (FIG. 1A). In some embodiments, the intensity map may be obtained from any combination of sensor configurations and analysis methods herein. In other embodiments, the intensity map may be obtained from any combination of sensor configurations described herein, and any analysis method detailed in US Non-Provisional Application No. 18/678,918, which is incorporated herein by reference in its entirety.

At block 2404, the inspection system 100 selects one or more regions within the intensity maps. In some embodiments, the regions may be overlapping, e.g. a filter. In other embodiments, the regions may be non-overlapping.

At block 2406, the inspection system 100 aggregates the intensity map within each region by applying a function to the intensity data corresponding to the selected region. One or more response scores can be generated based on the aggregation. In some embodiments, the aggregation function takes an input array of data and returns one or more scalar response scores. In other embodiments, the aggregation may be applied via a window across the entire intensity map, which advantageously may generate a gradient representative of the spatial distribution of one or more MTR characteristics across the specimen.

In some embodiments, the aggregation may be calculated from one or more of the following basic statistical measures: mean, median, skewness, kurtosis, moment, variance.

In other embodiments, the aggregation may be calculated from a measure of statistical entropy, such as the Shannon entropy, Rényi entropy, or Tsallis Entropy. The Rényi entropy may be defined via the expression:

$$R = \frac{1}{1 - \alpha} log \sum p_i^{\alpha}$$

Where R is the response score, $\alpha$ is a variable coefficient, and $p_i$ is the probability that the intenstity map has a value in the i-th bin. In the limit as $\alpha \to 1$, this is identical to the Shannon entropy.

In one example, the intensity map corresponds to the time-of-flight of a surface wave inspection. The specimen is divided into overlapping blocks, and the variance in the time-of-flight is computed for each block.

In another example, the intensity map may be the phase response of an eddy current inspection. The system is divided into non-overlapping blocks, and the Rényi Entropy is computed for each block. Advantageously, the parameter $\alpha$ may be optimized to provide an improved correlation to MTR characteristics.

At block 2408, the inspection system 100 dispositions the specimen 102 according to the values of one or more response scores.

**Beam Steering**

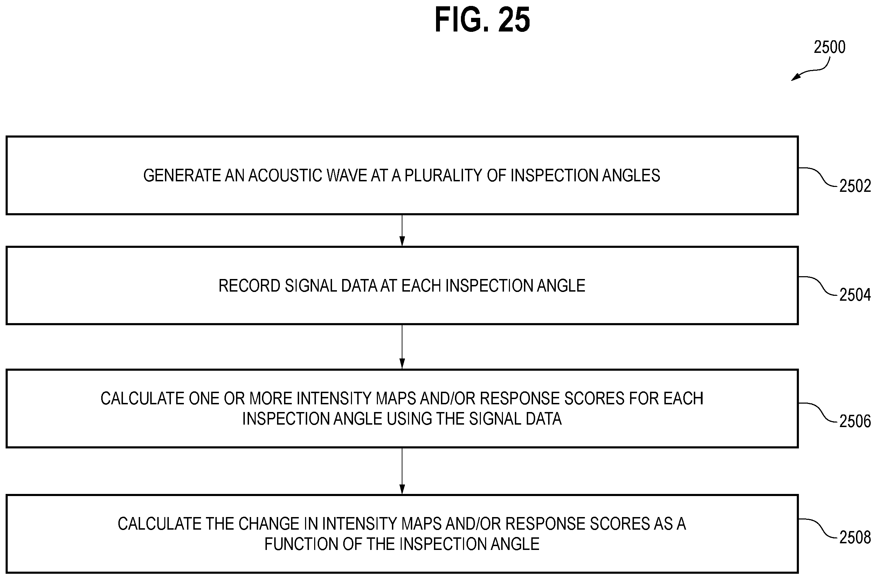

FIG. 25 shows a method 2500 of discerning one or more MTR characteristics by inspecting the specimen at a plurality of angles using one or more phased array transducers. Advantageously, as MTR characteristics may be sensitive to the angle at which a sound beam arrives, comparing a range of inspection angles may allow the inspection system 100 (FIG. 1A) to have additional discernment.

At block 2502, the inspection system 100 controls one or more phased array transducers to generate an acoustic wave at a plurality of inspection angles. In some embodiments, the incident angles might range between $\pm5°$ relative to the specimen surface. In other embodiments, the angles might range between about $\pm10°$ and about $\pm25°$.

In some embodiments, the system might control a refracted angle within the specimen, instead of the incident angle at the surface of the specimen.

In some embodiments, the inspection system might control the phased array transducer(s) to focus the ultrasound beam at a subsurface region, focusing at the selected depth(s) and angle(s). In other embodiments, the inspection system might control the transducer(s) to generate a plane wave within the specimen, propagating at the selected angle(s)

In one example, a plane wave is used, with a refracted inspection angle varying between about -3° and 3° degrees within the specimen.

At block 2504, the inspection system 100 records the signal data as each acoustic wave interacts with the specimen for each inspection angle.

At block 2506, the inspection system 100 uses one or more of the analysis methods described herein to calculate one or more intensity maps and/or response scores for each inspection angle.

At block 2508, the inspection system 100 calculates the change in the intensity maps and/or response scores as a function of the inspection angle. An MTR score indicative of MTRs present in the specimen 102 can then be calculated for the specimen 102 based on the response score and/or the spatial intensity maps.

**Fusion of Data from Multiple Sensor, Modalities, or Regions**

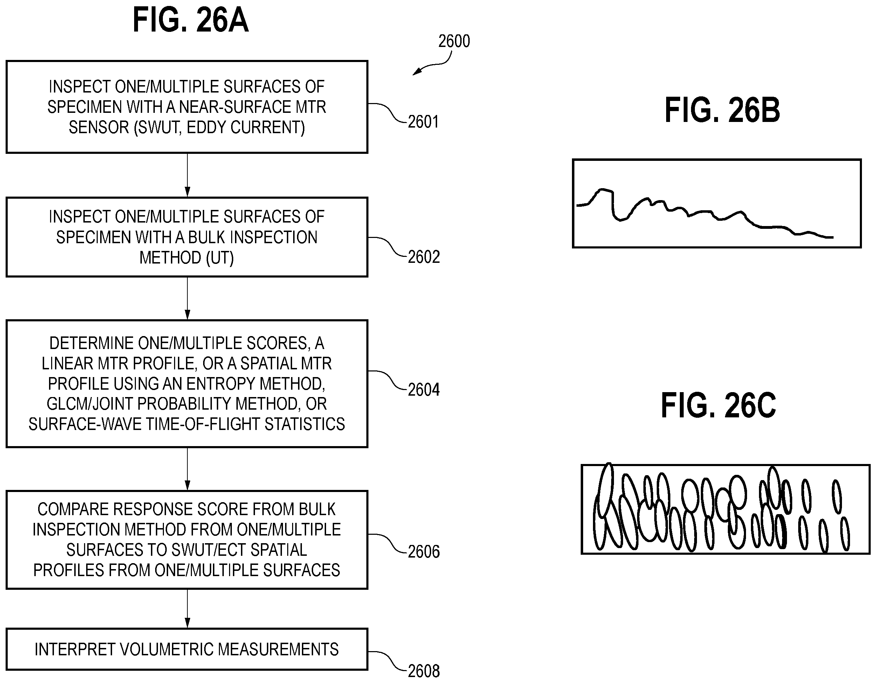

FIGS. 26A, 26B, and 26C illustrate a method of inspecting a specimen using at least two combinations of: one or more inspecting sensors and one or more regions of the specimen, in order to ascertain details about one or more MTR characteristics. Advantageously, the combination of sensors and/or regions may allow the inspection system 100 to provide a disposition that is more-representative of MTR characteristics within the specimen than an inspection utilizing only one inspection sensor, analysis method, or inspection region.

FIG. 26A shows a method 2600 of combining Near-Surface inspection data and bulk inspection data.

At block 2601, one or more surfaces of a specimen are inspected with a near-surface inspection device (e.g., surface wave UT (SWUT) or eddy current testing (ECT)) and a bulk inspection device (e.g., volumetric UT (VUT)). The near-surface inspection device may be based on a Rayleigh surface wave generated by a transducer or transducer array (e.g., surface wave ultrasound (SWUT), scanning acoustic microscopy (SAM)). The excitation for a Rayleigh surface wave may be in the 1 MHz - 100 MHz range, using a pulse, chirp, toneburst, or coded excitation. In some aspects, the near-surface inspection device may be based on an acoustic wave generated by a laser pulse (e.g., laser ultrasound or spatially resolved acoustic spectroscopy). In some aspects, the near-surface inspection device may be based on a bulk longitudinal or transverse acoustic wave focused near the specimen surface. The excitation for a bulk acoustic wave may be in the 1 MHz - 100 MHz range, using a pulse, chirp, toneburst, or coded excitation. In some aspects, the near-surface inspection device may be based on an induced electric field (e.g., eddy current inspection), or a polarized light wave (e.g., polarized light microscopy). The excitation for an induced electric current may be in the 100 KHz - 50 MHz range, using a single frequency, multiple frequencies, or a frequency sweep such as a pulse, chirp, toneburst, or coded excitation.

In block 2602, a bulk inspection method may utilize a bulk inspection device to inspect one or multiple surfaces of a specimen. The bulk inspection device may include any ultrasonic sensor configuration described herein and including the transducer arrangements and sensor arrangements as described in the embodiments FIGS. 2-7B.

In some embodiments, the bulk inspection device may utilize an ultrasonic sensor configuration as shown in FIG. 10.

In block 2604, one or multiple scores are determined and assigned based on the combination of bulk and near-surface measurements. Near-surface measurements may be calculated using one or more of the following methods: an entropy method as previously described herein, a joint probability or grey-level co-occurrence method as described herein, a comparison between the time-frequency spectra of the near-surface data at multiple locations or across multiple samples, and/or statistics of the near-surface data, such as amplitude, impedance, time-of-flight.

In some examples, the entropy method may include the entropy method according to the analysis methods described in US Non-Provisional Application No. 18/678,918 which is incorporated by reference in its entirety herein. Various entropy methods may be used.

For example, the one or multiple scores ($\mathbb{S}$) may be calculated via Shannon e(H) via the following expression:

$$\mathbb{S} = \mathrm{H}(A) = -\sum_{i} p_i \log p_i, \qquad i \in A$$

where $A$ is a region of the material sample or sub-region of the material sample over which data is collected, $p_i$ is the probability that a point in area $A$ has a value equal to the ith level in Y'. The one or multiple scores are calculated from the value of H for each area(s) in an acoustic scan performed by the inspection device as described herein.

In another example of an entropy measure, the one or multiple scores ($\mathbb{S}$) may be calculated via Rényi entropy via the following expression:

$$\mathbb{S} = \mathrm{H}(A, \alpha) = \left(\frac{1}{1-\alpha}\right) \log(p_i^\alpha), \ \alpha \neq [0, 1, \infty)$$

where $\alpha$ is an arbitrary constant between 0 and $\infty$. For cases where $\alpha = 0$, $\alpha = 1$, $\alpha \to \infty$, $H(A, \alpha)$ may be evaluated by taking a limit. In the case of $\alpha = 1$, the limit converges to the same metric as Shannon Entropy (H).

In some examples, a joint probability or grey-level co-occurrence method may include the joint probability or grey-level co-occurrence method as described in US Non-Provisional Application No. 18/678,918, which is incorporated by reference herein.

For example, the grey level co-occurrence matrix ($G$) is calculated from the standardized surface acoustic wave data ($Y'$). The grey level co-occurrence matrix ($G$) is a measure of the intensity relationships between a point $P_1 = (x, y, t)$ and its neighbor $P_2 = (x + \Delta x, y + \Delta y, t)$, where $t$ is a time or times at which data is sampled. It is contemplated that this approach may be applied to raw surface wave acoustic data, standardized acoustic wave data, or other transformations of the acoustic wave data of the near surface measurements.

In one example, the grey level co-occurrence matrix ($G$) is a square matrix whose values ($p_{i,j}$) contain the joint probability that $P_1$ has an intensity of $i$ and $P_2$ has an intensity of $j$, as defined by the following expression:

$$p_{i,j} = \frac{1}{N} \sum_{x=1} \sum_{y=1} \begin{cases} 1, & if \ Y'(x, y) = i \ and \ Y'(x + \Delta x, y + \Delta y) = j \\ 0, & otherwise \end{cases}, \qquad (x, y) \in A$$

where $N$ is a constant that normalizes probabilities, A is a subset containing some or all of the data in $Y'$, x and y are the coordinates of a point within a region A, $\Delta x$ and $\Delta y$ are specified distance offsets, and i and j are intensity levels of the data in $Y'$.

This second estimator of the one or multiple scores ($\mathbb{S}$) may be derived from joint probability $p_{i,j}$ by the following equation:

$$\mathbb{S} = h\left(\sum_{i} \sum_{j} p_{i,j} * W(i, j)\right)$$

where $W(i, j)$ is a weight function based upon $i$ and $j$, where one example would be $W(i, j) = |i - j|$. $h$ is an adjustment function, where one example is a square root function such as $h(x) = \sqrt{x}$. In another example, the weight function may be $W(i, j) = \frac{1}{1+(i-j)^2}$ and adjustment function $h(x) = x$. In another example, the weight function would be $W(i, j) = 1$ and $h(x) = h(\Sigma \Sigma x) = \Sigma \Sigma x^2$. Numerous other weight and adjustment functions may also be used, depending upon the characteristics of the material sample and inspection system.

In block 2606, the bulk measurements (e.g., volumetric UT (VUT)) are compared to the near-surface measurements (e.g., surface wave UT (SWUT) or eddy current testing (ECT)) for one or multiple surfaces of the specimen. In some aspects, this may include comparing spatial profiles from the one or more surfaces of the specimen.

In block 2608, the compared bulk measurements and near-surface measurements are analyzed and interpreted to determine volumetric measurements. In some aspects, the volumetric measurements may include a liner profile (e.g., of MTR regions) as shown in FIG. 26B or a surface profile (e.g., MTR regions) as shown in FIG. 26C.

Advantageously, surface-based methods may be more sensitive to changes in microstructure, and thus provide a calibration for interpretation of a bulk measurement method.

**Use of Macroslice to Calibrate Volumetric Measurement**

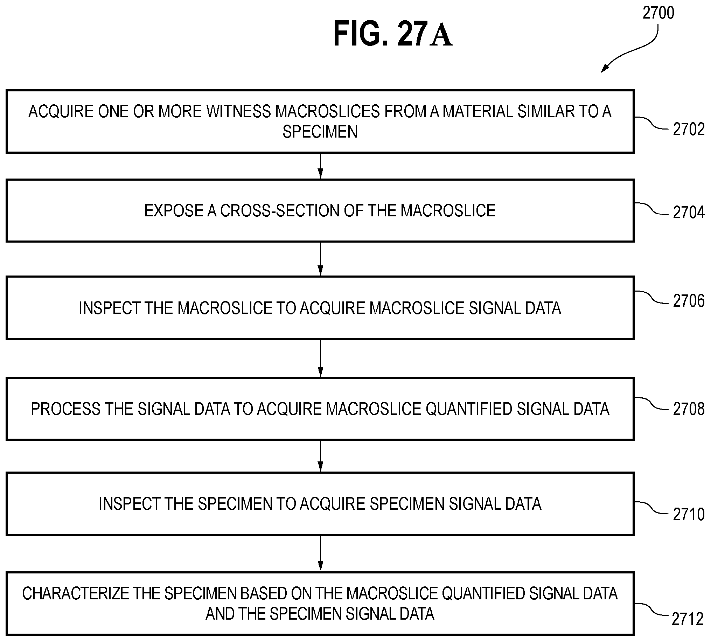

FIGS. 27A-27F show a method 2700 in which the analysis of the inspection of a specimen in-manufacture is calibrated by the inspection of a neighboring test coupon.

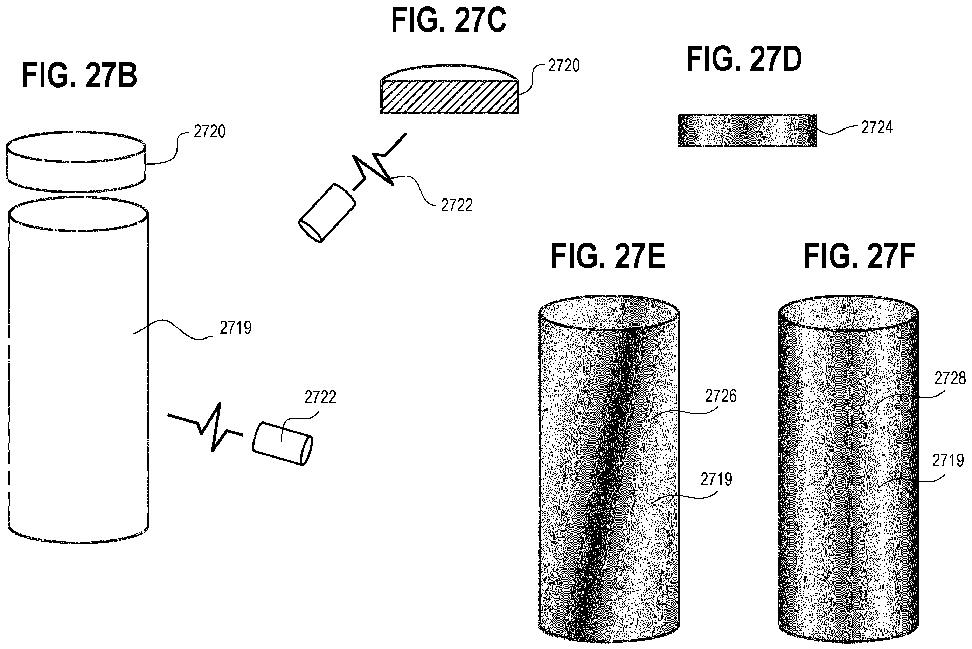

At block 2702, one or more witness macroslices are acquired from material similar to the specimen 102 during its production. The macroslice may belong to material directly adjacent to the specimen, nearby the specimen, or from another location in the same heat or forging. In one example, a titanium billet may be forged to a final diameter, and multiple sections cut from the billet. One side of each section may have a macroslice removed for analysis. FIG. 27B shows a macroslice 2720 of a specimen 2719.

In another example, a specimen may be die forged from a nickel billet into a forged shape. During the forging process, a coupon may be punched out from the center of the part and saved for use as a witness coupon.

At block 2704, the macroslice 2720 may optionally be cut to reveal or expose a cross section. In some embodiments the macroslice 2720 may be polished. Advantageously, in other embodiments, the macroslice 2720 may be inspected in a ground, machined, and/or peened surface condition, which may lead to a faster and/or cheaper manufacturing of the specimen.

At block 2706, the macroslice 2720 is inspected with one or more of the following inspection techniques to acquire macroslice signal data: surface-wave ultrasound, eddy current, longitudinal-wave ultrasound, shear-wave ultrasound, lamb-wave ultrasound, polarized light microscopy, or electron backscatter diffraction. FIG. 27C shows the macroslice 2720 being inspected by a sensor 2722.

At block 2708, the signal data is processed to generate macroslice quantified signal data. The macroslice quantified signal data may quantify at least one of: a spatial intensity map, a gradient, one or more distinct regions within the macroslice 2720, a distribution of spatial values, or one or more response scores. FIG. 27D shows an intensity map 2724 for the macroslice 2720.

In some embodiments, the macroslice inspection data may be quantified using any signal data analysis method described herein which is suitable for the near-surface sensor selected.

In other embodiments, the macroslice inspection data may be quantified using one or more of the methods contained in US Non-Provisional Application No. 18 /678,918, which is incorporated herein by reference in its entirety.

At block 2710, the specimen in-manufacture is inspected using any combination of the sensor arrangements and/or analysis methods described herein to acquire specimen signal data.

It is contemplated that other analysis techniques common in industry, such as attenuation, transmitted amplitude, and backscattered amplitude measurements may also be used in conjunction with the macroslice inspection.

At block 2712, the specimen is characterized based on the macroslice quantified signal data and the specimen signal data. The macroslice quantified signal data is used by the controller 108 to guide the interpretation of one or more additional inspection methods. Advantageously, when the macroslice 2720 originates from material representative of the specimen, the microstructure observed in the macroslice 2720 may contain information useful in improving the precision and discerning power of other inspection methods.

In one example, a spatial intensity map of local phase discontinuities is generated from a surface-wave ultrasound inspection of the macroslice 2720. The specimen in-manufacture is then inspected with a shear-wave ultrasound inspection, and the method 1600 of FIG. 16 is used to create an intensity map of the specimen. The intensity map of the specimen is then compared to the intensity map of the macroslice, and the inspection system 100 then adjusts the interpretation of the specimen's intensity map based on the values in the intensity map. FIG. 27E shows a raw intensity map 2726 for the specimen 2719. FIG. 27F shows an intensity map 2728 for the specimen 2719 after calibration with the macroslice 2720. As a result, the inspection system 100 may disposition the specimen based upon the intensity map representative of one or more MTR characteristics.

**Additional Analysis Methods**

In some embodiments, a method of analyzing the signal data includes analyzing an amplitude of one or more peaks in a waveform representative of the acoustic waves. The acoustic waves analyzed are transmitted acoustic waves that travel through the volume of the specimen via transmission.

Acoustic waves are transmitted from a single-element acoustic transmitter to an acoustic receiver array, along a transverse direction across a segment of a specimen. In some approaches, the acoustic waves may be transmitted through different inspection zones 164 (FIG. 1A) (see, also, inspection zones 664 of FIG. 6) of the specimen. For example, the acoustic waves are transmitted across various segments along the transverse direction, for example, at different depths. FIGS. 6A-6B illustrate how acoustic waves can be transmitted across different segments (e.g., chords) of a specimen to inspect different inspection zones 164. In this manner, the acoustic waves inspect or scan different positions or inspection zones 164 of the specimen. In some examples, the acoustic waves are transmitted across a chordal path of a billet and the acoustic waves may be transmitted along various chordal paths. In some examples, the controller 108 (FIG. 1A) causes the acoustic waves to be transmitted from the single-element acoustic transmitter along the transverse direction across the specimen. The segment (e.g., chordal path) traversed by the acoustic waves can range from near an outer-diameter of the specimen to across a centerline of the specimen.

In some approaches, the acoustic waves transmitted across the segments of the specimen include at least one of shear waves or longitudinal waves. In one example, longitudinal waves are transmitted for a segment of the specimen that is adjacent to the centerline of the specimen. In another example, shear waves are transmitted for segments of the specimen that are spaced from the centerline.

A peak amplitude of each acoustic waveform is determined at each position or inspection zone 164 (see, also, inspection zones 664 of FIG. 6) of the specimen. When the acoustic waves are ultrasonic waves, a peak amplitude of an A-scan can be determined. An A-scan refers to a representation of an individual waveform, taken at a single position on a specimen, which may be a single pulse measurement or an average of a number of pulses. An A-scan includes a presentation of time versus amplitude, showing an acoustic echo amplitude as a function of time. The controller 108 (FIG. 1A) may determine the peak amplitude of each acoustic waveform.

Statistics of the peak amplitude across the specimen based on the peak amplitudes are determined. In some approaches, statistics are calculated across the different positions or inspection zones 164 (see, also, inspection zones 664 of FIG. 6) at which the acoustic scans were performed. In one example, a peak amplitude is determined for each inspection zone 164 of the specimen and an average peak amplitude for all inspection zones 164 of the specimen is then determined. The controller 108 may determine the statistics of the peak amplitudes of the specimen. The statistics of the peak amplitudes may include one or more of a mean, median, median absolute deviation, interquartile range, or percentile values. It is also contemplated that measures of statistical entropy, such as Shannon entropy or Rényi entropy may be calculated for the peak amplitudes or for distributions of peak amplitude statistics.

One or more response scores indicative of MTRs is generated for the specimen based on the average peak amplitude. In some examples, the controller 108 generates the response scores for the specimen based on the average peak amplitude across the specimen. The time of arrival of the peak amplitude can be determined, and statistics determined at block can be applied to that measurement to correlate to an MTR score.

In some embodiments, a method of analyzing the signal data includes analyzing a signal envelope of the signal data representative of the acoustic waves. The acoustic waves analyzed may be acoustic waves that travel through the volume of the specimen via transmission.

Signal data representative of acoustic waves received across a volume of a specimen is collected. In some examples, the signal data includes a time-domain waveform. The signal data may be collected by one or more transducers in a pulse-echo configuration and may be representative of acoustic waves scattered or reflected from the specimen. In some embodiments, the acoustic waves are shear waves. The controller 108 may be configured to collect or receive the signal data.

A signal envelope of the signal data is calculated. In one example, when the waveform data is from an ultrasonic inspection, a signal envelope is calculated for the A-scans. In some examples, the signal envelope is calculated using at least one of a Hilbert transform, Hilbert-Huang transform, a rolling root-mean-square filter, or fitting interpolating splines to signal peaks. The controller 108 may be configured to calculate the signal envelop for the waveform data.

One or more metrics that are indicative of the acoustic wave scatter-attenuation pattern or an A-scan backscatter profile are calculated based on the signal envelope. Such metrics may include, for example, time-to-peak, slope, concavity, etc. In some examples, the controller 108 is configured to calculate the metrics.

In some approaches, signal statistics are determined from a plurality of signal envelopes. In one example, the time-to-peak of each individual waveform is measured on a metric assigned based on one or more statistical measures of the resulting distribution of values (e.g., mean, median, interquartile range, percentile values, median absolute deviation). In another example, multiple waveform envelopes are combined into a composite waveform, and the metric is assigned based on properties of the composite waveform. In another example, the composite waveform is obtained via a weighted mean of multiple waveform signal envelopes, which correspond to multiple locations or inspection zones 164 (see, also, inspection zones 664 of FIG. 6) across the sample.

One or more response scores indicative of MTRs is generated for the specimen based on the metrics. In some examples, the controller 108 is configured to generate the response score for the specimen based on the metrics. Higher MTR material in specimen may result in a signal envelope having a different shape than the signal envelope for a low MTR material as the sound scatters and attenuates due to the MTR.

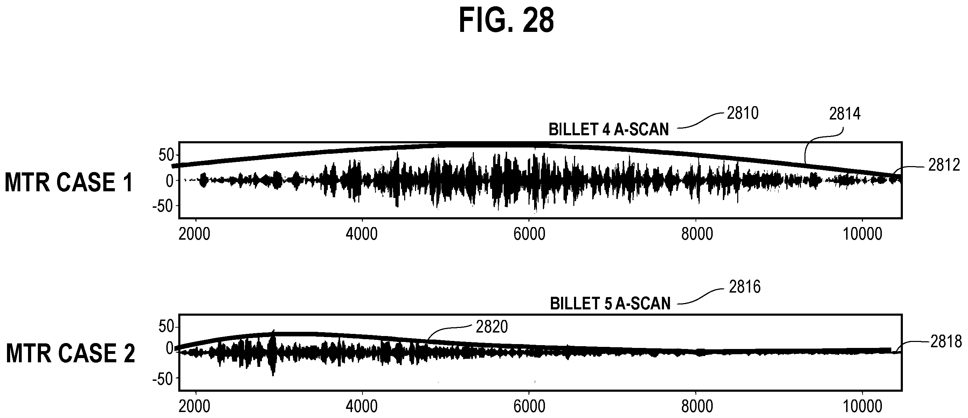

FIG. 28 illustrates signal envelopes for exemplary waveforms. The signal data shown in FIG. 28 was collected using transducers in a pulse-echo configuration with a shear wave. In particular, the signal data was collected using the transducer arrangement shown and described with reference to FIG. 5. A graph 2810 illustrates an acoustic waveform 2812 for a first MTR case, labeled MTR Case 1. A line 2814 is the signal envelope for the acoustic waveform 2812 calculated using a Hilbert transform. A graph 2816 illustrates an acoustic waveform 2818 for a second MTR case, labeled MTR Case 2. A line 2820 is the signal envelope for the acoustic waveform 2818 calculated using Hilbert transform. In MTR Case 2, the specimen examined exhibited a higher level of MTR, with a different average envelope shape.

In some embodiments, a method of analyzing the signal data includes analyzing a waveform representative of the acoustic waves using statistical properties or attributes of the waveform. The acoustic waves analyzed can be scattered or reflected acoustic waves.

Signal data representative of acoustic waves transmitted through a volume of a specimen is collected. The signal data may be collected by one or more transducers in a pulse-echo configuration and may be representative of acoustic waves scattered or reflected from the specimen. In some embodiments, the acoustic waves are shear waves. The controller 108 may be configured to collect or receive the signal data.

The signal data is then processed. In some embodiments the signal data is processed using a Hilbert transform. It is also contemplated that, in other embodiments, raw, unprocessed signal data may be used. In some examples, the controller 108 may be configured to process the signal data.

One or more metrics that are indicative of the acoustic wave scatter-attenuation pattern are calculated. Metrics that are indicative of the acoustic wave scatter-attenuation pattern may include statistics such as a root mean square amplitude, a number of peaks, an amplitude distribution of peaks, statistics of peaks with specific prominences, heights, and/or widths, etc. Note that peak amplitude differs from an amplitude distribution of peaks. Peak amplitude generally refers to a maximum observed amplitude as well as sorted amplitudes of a 2nd highest, 3rd highest, and Nth highest peak. However, a distribution of peaks may refer to filtering peaks based on prominence, height, and/or width or use of a signal envelope. In some approaches, the signal data may be used to calculate a measure of information entropy. In one example, signal entropy is calculated from the time-series signal data, using methods such as Approximate Entropy, Dispersion Entropy, Fluctuation-Dispersion Entropy, Spectral Entropy, Fuzzy Entropy, Slope Entropy, Phase Entropy, etc. In another example, information entropy is calculated from the distribution values of waveform or peak data, such as a C-Scan image, using methods such as Shannon Entropy or Rényi entropy. It is contemplated that any metric of signal or information entropy can be used to generate a response score.

The data is used to generate one or more response scores indicative of MTRs within the specimen. For example, a higher MTR material may show a different pattern of peaks as acoustic waves scatter and attenuate. In some examples, the controller 108 is configured to generate one or more response scores indicative of the MTRs.

In some embodiments, a method of analyzing signal data uses wavelet analysis to analyze a waveform representative of the acoustic waves. The acoustic waves analyzed can be scattered or reflected acoustic waves.

Signal data representative of acoustic waves transmitted through a volume of a specimen is collected. The signal data may be collected by one or more transducers in a pulse-echo configuration and may be representative of acoustic waves scattered or reflected from the specimen. The acoustic waves may be longitudinal, shear, or mixed-mode waves. The controller 108 may be configured to collect or receive the signal data. In some embodiments, when the acoustic waves are ultrasonic waves, the signal data is in the form of an A-scan.

The acoustic signal data is modified by convolution or deconvolution with signal wavelets. In one example, the wavelets are a characteristic of the transducer pulse, e.g., a gaussian pulse corresponding to the center frequency of the transducer. In another example, the wavelets are characteristic of features of the specimen, e.g., a wavelet corresponding to an acoustic wave scattered from a grain feature. In some examples, the controller 108 (FIG. 1A) is configured to convolve or deconvolve the wavelets.

The convolved or deconvolved signal data is analyzed. In some examples, the analysis is based on properties such as amplitude, statistical distribution of signal peaks, etc. In another example, the analysis is based on the frequency domain properties of the convolved or deconvolved signal data. In some examples, the controller 108 (FIG. 1A) is configured to analyze the signal data and compare the deconvolved wavelets.

In another example, a spectrogram is generated via wavelet analysis. The time-frequency distribution of the signal data may be indicative of one or more MTR characteristics within the specimen. Spectrograms may be compared for internal variation by comparing multiple spectrograms from multiple locations within a specimen. Spectrograms may also be compared to different specimens or a calibration standard to make an assessment of the MTR characteristics.

The one or more response scores indicative of MTRs is generated for the specimen based on the wavelet properties. In some examples, the controller 108 is configured to generate the response score for the specimen.

In some embodiments, a method of analyzing signal data involves analyzing the signal response from a waveform representative of interaction with an internal or backwall surface within a specimen. The method may also be applied to other metrics which are representative of attenuation within the sample, such as a signal transmitted through the specimen, or to a signal that is transmitted and subsequently reflected to the original sensor. The signal may be transmitted through the specimen to a backwall reflector plate and subsequently reflected to the original reflector. The method may also analyze a ratio of backwall amplitude to a root mean square (RMS) of scatter as determined from the waveform representative of the acoustic waves. RMS of scatter is the RMS of the amplitude of scattered acoustic waves (e.g., the scattered signal). The acoustic waves analyzed via the method may be scattered or reflected acoustic waves. RMS is one measure of the amplitude of scattered acoustic waves. Maximum amplitude and 75th percentile amplitude are also measures of scattered acoustic waves. It is contemplated that RMS can be applied whenever amplitude data, either raw or signal envelope, is used.

Signal data representative of acoustic waves transmitted through a volume of a specimen is collected. The signal data may be collected by one or more transducers in a pulse-echo configuration and may be representative of acoustic waves scattered or reflected from the specimen. In some approaches, the acoustic waves are longitudinal waves and/or shear waves. The controller 108 (FIG. 1A) may be configured to collect or receive the signal data.

An attenuation metric based upon statistics of a backwall reflection signal from a longitudinal wave is calculated. Examples of attenuation metrics include mean amplitude, median amplitude, etc. In some examples, an attenuation to scatter ratio is also calculated, where scatter is obtained from the scatter of a longitudinal or shear wave. In some examples, the controller 108 (FIG. 1A) is configured to estimate the attenuation.

One or more response scores indicative of MTRs is generated for the specimen based on the attenuation metric and/or the attenuation to scatter ratio. In some examples, the controller 108 (FIG. 1A) is configured to generate the response score for the specimen.

In some embodiments, a method of analyzing signal data involves computing a Fourier transform or a short-time Fourier transform of a section of signal data representative of the acoustic waves. The acoustic waves analyzed via the method can be scattered or reflected acoustic waves.

Signal data representative of acoustic waves transmitted through a volume of a specimen is collected. The signal data may be collected by one or more transducers in a pulse-echo or pitch-catch configuration and may be representative of acoustic waves scattered or reflected from the specimen. In some approaches, the acoustic waves are at least one of longitudinal, shear, or mixed mode waves. The controller 108 may be configured to collect or receive the signal data.

At least one of a fast Fourier transform (FFT) or short-time Fourier transform is computed for a section of the signal data. The section of the signal data for which the FFT or short-time Fourier transform are computed may include sections of backscatter and/or backwall echo. The controller 108 may be configured to compute the fast Fourier transform or short-time Fourier transform of the signal data.

Properties of the FFT results are analyzed as the spatial region and/or temporal window of the FFT are varied. The properties of the FFT results analyzed may include at least one of peak frequency, shapes of the FFT, power spectrum of the FFT (e.g., within a specified frequency range), variation of the FFT results, spectral density, cross spectral density, coherence, and entropy of the spectral density. The controller 108 may be configured to analyze the properties of the FFT results as the spatial region and/or temporal window of the FFT are varied.

One or more response scores indicative of MTRs is generated for the specimen based on the properties of the FFT results. In some examples, the controller 108 is configured to generate the response score for the specimen.

In some embodiments, a method of analyzing signal data involves determining or computing a measure of information entropy based on the signal data representative of the acoustic waves. The entropy measure may be calculated directly from the signal data, or from one or more properties of the signal data. The signal data analyzed via the method may be representative of scattered or reflected acoustic waves, induced electric currents, or polarized light waves.

Waveform data representative of acoustic waves transmitted through a volume of a specimen is collected. The waveform data may be collected by one or more transducers in a pulse-echo configuration and may be representative of acoustic waves scattered or reflected from the specimen. In some approaches, the acoustic waves are at least one of longitudinal, shear, or mixed mode waves. The controller 108 (FIG. 1A) may be configured to collect or receive the waveform data.

A measure of information entropy is determined or computed based on at least one of: A) the time-domain signal data; B) frequency-domain signal data, C) a probability of observing regions with specific properties (e.g., aspect ratio, maximum voxel count) when regions are reconstructed from the waveform data; and or D) statistics of the waveform data and/or of the reconstructed shapes regions and/or volumes of the waveform. Exemplary measures of information entropy include Dispersion Entropy, Approximate Entropy, Fluctuation-Dispersion Entropy, Spectral Entropy, Sample Entropy, Shannon Entropy, Tsallis Entropy, Rényi Entropy, Slope Entropy, Phase Entropy, and Fuzzy Entropy. Measures of information entropy may also be calculated using multiscale entropy methods, which compare entropy at multiple time, frequency, or position scales. It is contemplated that any metric measuring the entropy of a two-dimensional data set, higher-dimensional data set, distribution, time-series waveform, or frequency-domain waveform could be used. In some examples, the controller 108 is configured to determine or compute the measure of information entropy.

In one example, a response score is generated from the distribution resulting from calculating the Spectral entropy within a window of the waveform data at multiple locations on a specimen. Spectral Entropy for waveform data may be calculated by the expression:

$$S = -\Sigma P(m) \log_2 P(m)$$

Where S is the entropy, and $P(m)$ is a measure of the power spectrum of the waveform data, obtained through a Fourier transform or a wavelet transform. It is contemplated that $P(m)$ may be weighted or normalized before the calculation of entropy.

In another example, the Slope Entropy may be calculated for each waveform. The waveform data may be optionally normalized, filtered, or centered.

In another example, the Fuzzy Entropy may be calculated for each waveform. The waveform data may be optionally normalized, filtered, or centered.

In another example, the entropy determination may be based upon multiscale entropy.

In another example, a window may be rolled across the waveform data, and local features may be extracted from the time-to-peak amplitude within the window. In this example, a response score is calculated using the Rényi entropy of the distributions of the properties of these local features, such as size, shape, and/or elongation.

An entropy metric may be calculated from the following expression:

$$S = -log(B(X))$$

Where B is a basis function based upon summation over a characteristic (e.g., rate, time, frequency, or some other characteristic) of the data or a ratio of summation between one window of data and another window.

One or more response scores indicative of MTRs is generated for the specimen based on the measure of information entropy. In some examples, the controller 108 is configured to generate the response score for the specimen.

In some embodiments, a method of analyzing sensor data involves selecting at least two regions of data including a reference region and an offset region, selecting a data characteristic, calculating a joint probability distribution from the selected data characteristic and the at least two regions of data, and calculating a composite score. The acoustic waves analyzed via the method may be scattered or reflected acoustic waves. The method may also be applied to near-surface inspection data. The at least two regions of data may include individual points, areas, volumes, or windows of time-domain data.

Sensor data is collected. The sensor data is representative of at least one of A) acoustic waves transmitted through a volume of a specimen, B) acoustic surface waves, C) induced electric currents on the surface of the specimen or D) polarization of light reflected from the surface of the specimen. In some examples, the sensor data may be collected by one or more transducers in a pulse-echo configuration and may be representative of acoustic waves scattered or reflected from the specimen. In some approaches, the acoustic waves are at least one of longitudinal, shear, or mixed mode waves. In some examples, the sensor data may be collected by one or more near surface sensor(s) and may be representative of acoustic waves scatter or reflected from a near-surface volume of the specimen. In some examples, the sensor data may be collected by one or more near surface sensor(s) and may be representative of the eddy current impedance on the specimen. In some examples, the controller 108 is configured to collect or receive the waveform data.

A relationship between the sensor data at a reference region $P_0$ and the sensor data at one or more offset regions ($P_1 ... P_n$) is determined. The offset regions are offset by some difference in space, time, or frequency. The reference region and the offset region may be individual points, areas, volumes, time windows, or some combination thereof. In one example, the reference region is a pixel on a two-dimensional scan image, and the offset region is an adjacent or nearly-adjacent pixel (e.g., one or more pixels away from the pixel of the reference region). In aspects, the pixel of the offset region may share a common edge or corner with the pixel of the reference region, or the pixel of the offset region may be one or more pixels away from the pixel of the reference region. For example, the pixel of the reference region may be located at (x,y) and the pixel of the offset region may be located at (x±1,y) or the pixel of the offset region may be located at (x±2,y). In another example, the reference region is a window of time-domain data, such as an ultrasonic waveform, and the offset region is a window of time-domain data that occurs at some specified offset.

At least one characteristic of the sensor data is selected and divided into a range of bins. Characteristics may include intensity of a scan image, signal amplitude, signal phase, signal time-of-flight, signal peak amplitude/height, signal peak width, signal peak prominence, signal frequency distribution, a calculation of an Entropy measure, or a basis function suitable for use in an Entropy measure. In some examples, the controller 108 is configured to select the characteristics of the sensor data and divide the characteristics of the sensor data into a range of bins.

In one example, the selected characteristic may be Slope Entropy. The slope Entropy may be calculated from one window of ultrasonic waveform data acquired at a specific point on the sample.

In another example, ultrasonic waveform peak amplitude may be represented as a two-dimensional image, and the selected characteristic is the amplitude at a specific pixel on the image.

In another example, eddy current impedance data may be represented as a two-dimensional image, and the selected characteristic may be the impedance magnitude at a specific pixel on the image.

In another example, the selected characteristic may be an impedance magnitude of an eddy current coil at one or more frequencies.

The reference position is shifted across a subregion of the dataset including the sensor data and the signal characteristic values at the reference region and offset region(s) are collected and divided into bins. In some examples, the controller 108 is configured to select the characteristics of the sensor data and divide the characteristics of the sensor data into a range of bins.

The probability $p_{ij}$ that the reference region (e.g., pixel) has one specific value $A_i$ and the offset region has a second specific value $B_j$ is calculated. This process is repeated for all bins of the data, creating a matrix $G$ which represents the joint probability distribution of the values at $P_0$ and $P_1$.

The joint probability values may be weighted or adjusted according to the values of $p_{ij}$, and turned into a subsequent non-destructive examination (NDE) score. This score may be calculated by the expression:

$$G = h\left(\Sigma\Sigma\left(w\left(p_{ij}\right)\right)\right)$$

Where w(x) is a weight function and h(x) is a scaling function.

In one example, the weight function w(ij) is given by $w(i, j) = p_{ij} * log(p_{ij})$, which is equivalent to the Shannon Entropy.

In another example, the weight function w(ij) is given by $w(i, j) = p_{ij} * |i - j|$, and the scaling function is $h(x) = \sqrt{x}$.

One or more response scores representative of MTR condition are calculated from the values of G. In some examples, the controller 108 is configured to correlate the measure of the matrix G to the MTR score.

In some embodiments, a method of analyzing the signal data involves comparing patterns between elements of waveform data from an array transducer. The acoustic waves analyzed via the method may be scattered, reflected, or transmitted acoustic waves.

Waveform data representative of acoustic waves transmitted through a volume of a specimen is collected. In one approach, the waveform may be collected by one or more transducers in a pulse-echo configuration and may be representative of acoustic waves scattered or reflected from the specimen. In another approach, the waveform data may be collected by one or more transducers in pitch-catch configuration and may be representative of acoustic waves transmitted through the specimen. The controller 108 may be configured to collect or receive the waveform data.

Patterns in the waveform data between elements of the transducer array are compared. Examples of patterns include patterns in correlation, decay rate, etc. in the waveform data. Elements that may be compared include, for example, adjacent elements in the transducer array and/or elements separated by N other elements.

One or more response scores indicative of MTRs is generated for the specimen based on the patterns in the waveform data between elements. In some examples, the controller 108 is configured to generate the response score.

In some embodiments, a method of analyzing waveform data involves a full matrix capture of waveform data indicative of the acoustic waves. The acoustic waves analyzed via the metho may be scattered, reflected, or transmitted acoustic waves.

Waveform data is collected using an array transducer by pulsing one or more elements of the array separately and recording waveform data received by each element of the array. In one approach, the waveform data may be collected by one or more transducers in a pulse-echo configuration and may be representative of acoustic waves scattered or reflected from the specimen. In another approach, the waveform data may be collected by one or more transducers in pitch-catch configuration and may be representative of acoustic waves transmitted through the specimen. In some examples, the controller 108 is configured to collect or receive the waveform data.

A path from a region with the specimen to one or more elements of the array transducer is reconstructed. The controller 108 may be configured to reconstruct path from a region with the specimen to each element of the array transducer.

Waveforms can be received by one or more elements of the array. An optional weight function can also be applied to each waveform. A composite value for each point on the specimen is constructed based on the waveforms. In some examples, the controller 108 is configured to compare the waveform received by one or more elements of the array, apply an optional weight function to each waveform, and construct a composite value for each point on the specimen based on the waveforms.

Traditional approaches for full matrix capture for flaw or inclusion detection are generally based on a travel time from every element in the array to each point. In the approach for full matrix capture described herein, which is used for MTR detection, the waveform from specific elements in the array may be weighted to better detect MTRs.

One or more response scores indicative of MTRs is generated for the specimen based on the composite values. In some examples, the controller 108 is configured to generate the response score for the specimen.

In some embodiments, a method of analyzing waveform data involves a shape and/or region analysis of two-dimensional or three-dimensional representations of the waveform data across a specimen. The acoustic waves analyzed via the method can be scattered or reflected acoustic waves.

In a first approach, waveform data is collected across a volume of a specimen. Waveform data is collected at various points or positions on the specimen, with sensor arrangements targeting specific inspection zones 164 (see, also, inspection zones 664 of FIG. 6) and/or depths of the specimen at those points. The waveform data may be collected using longitudinal, shear, or mixed mode acoustic waves. In some examples, the controller 108 is configured to collect or receive the waveform data.

Voxels in the waveform data may be selected based on one or more criterion. Voxels represent individual points in space on a three-dimensional matrix. The criterion may be based on a threshold for characteristics of the waveform data. In some examples, the criterion may be a threshold for at least one of amplitude, noise, statistics of amplitude, frequency, statistics of noise. In some examples, the controller 108 is configured to select voxels based on the criterion.

Voxels with similar characteristics (e.g., of amplitude, frequency, noise, statistics of amplitude, statistics of noise) are grouped together. Groups of voxels with similar characteristics may define a feature of the specimen. In some examples, the controller 108 is configured to group voxels with similar characteristics.

Statistics of the grouped voxels are calculated. The statistics of the grouped voxels may then be related or correlated with MTR properties. In one example, volumes of the grouped voxels are related broadly to MTR volumes within a specimen. In some approaches, the statistics of the grouped voxels may be related or correlated with an MTR score for the specimen. In some examples, the controller 108 is configured to determine or calculate statistics of the grouped voxels and correlate such statistics with MTR properties. In some examples, waveforms from each slice of a specimen (e.g., a billet), after thresholding, are stitched together to create a full 3D visualization of MTR related features within the specimen. Such a 3D visualization could be made interactive such that an operator could virtually "walk through" the specimen and identify volumes of concern for further investigation.

In a second approach, local peaks in the waveform data are identified. In some examples, the controller 108 is configured to identify local peaks in the waveform data.

Time-of-flight and amplitude for the local peaks are calculated or determined. The controller 108 may be configured to determine the time-of-flight and amplitude for the local peaks.

A size, shape, and/or duration of the local peaks may be determined. The size, shape, and/or duration of the local peaks may be related or correlated with MTR score for the specimen. The controller 108 may be configured to determine the size, shape, and/or duration of the local peaks.

MTR detection and scoring for a specimen can be accomplished by combing waveform data (e.g., acoustic waveform data) and data analysis from multiple inspection zones 164 (see, also, inspection zones 664 of FIG. 6) and/or from multiple transducer arrangements described herein. Waveform data can be combined and conclusions from one of the analysis methods described herein may be based on results from another analysis method described herein. For example, if a phase coherence analysis method yields a score of "A" at a depth "B" in an inspection zone 164"C" with transducer arrangement "D," that may influence how a score of "E" at a depth of "F" in an inspection zone 164"G" with sensor "H" is interpreted.

The waveform data acquired from one or more of the transducer arrangements and one or more of the analysis methods described herein can be used to determine a response score for a specimen. The response score is indicative of MTRs present in the specimen and, for example, can be used as a predictor of an MTR level in the specimen.

It is contemplated that the response score can be used to make decisions with respect to the specimen. In one example, the specimen may be classified or graded based on the response score. In another example, the specimen may be rejected or accepted based on the response score. The response score may be compared to a threshold score or a threshold range to determine whether to accept or reject the material sample. The threshold score or threshold range may reflect response score values that are acceptable. Response scores that fall within a threshold range may reflect that the material from which the material sample has been acquired is suitable for use or further processing. If the response score for the material sample is outside of a threshold range, the material sample may be rejected.

The response scores can be related to an MTR score or value. The MTR score may reflect the ground truth MTR characteristics as determined, for example by, EBSD, SWUT, polarized light, eddy current, or other methods determined to be authoritative on MTR determination. The MTR score can be related to response scores and, as a result, can act as a guide for setting thresholds for acceptance or rejection of the specimen based on the response scores.

To establish a relationship between response scores and MTR scores, a plurality of specimens can be evaluated via the acoustic inspection approaches described herein in order to determine one or more response scores for the specimens. Those plurality of specimens can then also be assessed using ground truth approaches for determining MTR levels, such as EBSD, for the specimens. Relating acoustics scores to ground truth MTR levels may then validate the use of the response score as a predictor of MTRs and can also guide the selection of thresholds for classifying and/or accepting or rejecting specimens based on the response score.

In some embodiments, a method of analyzing one or more sets of waveform data and making a classifying decision on a specimen.

The method involves partitioning the specimen into one or more inspection zones 164 (FIG. 1A) (see, also, inspection zones 664 of FIG. 6). In some examples, the inspection zones 164 are partitioned based on a depth into the sample. In some examples, the inspection zones 164 are partitioned based on the geometry of the specimen surface. Inspection zones 164 can overlap or can have uninspected space between adjacent zones.

Each inspection zone 164 (see, also, inspection zones 664 of FIG. 6) is inspected, and waveform data for each inspection zone 164 is collected. One or more of the sensor arrangements described with reference to FIGS. 2-7B can be used to inspect the inspection zones 164.

A response score is determined for each inspection zone 164 (see, also, inspection zones 664 of FIG. 6) of the specimen. The response score determination can use data from one or more waveforms. The response score can be determined using one or more of the analysis methods shown and described with reference to FIGS. 8-19. In some examples, the response score is a function of the acoustic waveform data from one or more sensor arrangements used to inspect a particular inspection zone 164. In some examples, the response score for a zone is also a function of acoustic waveform data from other inspection zone(s) 164 of the specimen. It is contemplated that any acoustic waveform data from a shallower zone may affect the interpretation of acoustic waveform data from a deeper zone inspection.

A single composite response score is determined for the specimen, using waveform data from one or more inspection zones 164 (see, also, inspection zones 664 of FIG. 6).

Turning briefly to FIG. 29, in a first example, a predictive model is generated from the waveform data, and a grading decision for eth specimen is made based upon the predicted value of a response score, $\hat{A}$. Expression 1 is an example expression for generating a single composite response score for a specimen. Expression 1 is one example expression for determining a predicted value of the response score $\hat{A}$, where $\hat{A}$ is a predicted value of an MTR Score, $U_{Z_n, s_m}$ is the acoustic waveform data for inspection zone $Z_n$ (e.g., inspection zone 164) from sensor arrangements $s_m$, $\beta_0, \ldots, \beta_n$ are coefficients fit by regression, and $h_1, \ldots, h_n$ are functions that take the response score of the Nth zone as an input.

Referring still to FIG. 29, in a second example, a set of predictive models are generated from the waveform data, wherein each inspection zone 164 (FIG. 1A) (see, also, inspection zones 664 of FIG. 6) is assigned a response score, and the grading decision is made in consideration of the set of response scores. Expression 2, Expression 3, and Expression 4 are example expressions for generating multiple response scores for a specimen. Expression 2, Expression 3, and Expression 4 are exemplary equations for a set of predictive models where each inspection zone 164 is assigned a response score. In this example, the response score for the first inspection zone $A_{Z_1}$ (e.g., inspection zone 164) is a function of acoustic waveform data from two different sensor arrangements, $s_1$ and $s_2$, for the first inspection zone. In this example, the response score for the second inspection zone, $A_{Z_2}$ (e.g., inspection zone 164) is alternatively a function of the waveform data from two different inspection zones and a single sensor arrangement.

A material classification decision is made based on one or more of the determined response scores. Example decisions include sample acceptance, sample rejection, or assignment of a sample material grade.

In one example, four response scores are measured corresponding to four inspection zones 164 (FIG. 1A) (see also, inspection zones 664 of FIG. 6). The response scores in the first and second inspection zones 164 are classified as acceptable, but the response scores in the third and fourth inspection zones 164 are classified as rejectable. In this example, the sample may be rejected entirely. Alternatively, only the third and fourth inspection zones 164 may be rejected, and the sample may subsequently be processed to remove the rejected material. It is contemplated that by facilitating the scoring of inspection zones 164 of material in a specimen, portions or inspection zones 164 of a specimen 102 (FIG. 1A) that are deemed to be unsuitable for a particular use can be scrapped while other portions or inspection zones 164 of a material can be salvaged to reducing scrappage. Reducing scrappage may also reduce production costs and material waste. It is also contemplated that an inspection using multiple inspection zones 164 will possess improved sensitivity and capability.

In another approach, the MTR levels can be characterized by the shape of the acoustic waveform data. The shape of the waveform data may be representative of one or more MTR or grain characteristics of the specimen.

In some embodiments, a method of analyzing one or more sets of acoustic waveform to characterize the MTR levels on a specimen.

Scattered acoustic waveform data is collected from a longitudinal, shear, or mixed-mode wave, which may be generated and received with any of the inspection methods shown and described with reference to FIGS. 1A-7B. In some approaches, the scattered acoustic waveform data may be generated with the inspection system 100 and inspection device 104 of FIG.1A.

The acoustic data is preprocessed through one or multiple filtering and/or normalization processes. Preprocessing can involve various operations.

In one example, the acoustic data may be preprocessed through a Hilbert transform performed on the waveform data at each position on the specimen. It is contemplated that alternative methods to describe the signal strength may also be used, such as fitting splines to amplitudes or the root-mean-square value of the waveform data. Subsequently, multiple waveforms are averaged together, and the averaged waveform is then normalized to have values between zero and one.

The shape of the waveform data characterized and/or parametrized. In one example, various signal processing parameters may be used including, but not limited to, peak height, time-to-peak, peak width, peak prominence, or integrated area. The signal processing parameters may further include scaling the data to a specified range, one or more frequency-based filters or one or more statistics-based filters.

The shape of the waveform data and signal profile characteristics are determined. The shape of the waveform data and signal profile characteristics may be quantified based on a parametric function. The parametric function is fitted to match the waveform data based on numerical methods including least-squares, nonlinear least squares, and principal component regression. It is contemplated that any numerical method to fit a specified function to data may be used. The function may be fit to any region of interest within the waveform. The characteristic shape parameters may further include at least one of a height of a signal peak, a position of a signal peak, a width of a signal peak, a prominence of a signal peak, an integrated area of a signal envelope, or an integrated area of the parametric function to mention a few examples.

The parametric function may be a polynomial, exponential, gaussian, or a nonlinear combination thereof. It is contemplated that additional parametric functions in the form of statistical distributions, such as Levy, Log-normal, Weibull, or the like may be used. The parametric function may also be associated with a probability density function (PDF) or a cumulative distribution function (CDF) of a statistical distribution; or a physics-based model. It is also contemplated that a numerical model based on physical principals of acoustic interaction with grain or microtexture features may be fit in this regard.

Turning briefly to FIG. 16C, in one example, the preprocessed waveform data is fit to a modified exponential. Expressions 1 and 2 are example expressions that may be used to fit the waveform data. Graph 1620 shown in FIG. 16B provides a graph illustrating the preprocessed signal data 1622 (e.g., preprocessed waveform data) fit with a modified exponential expression 1624. The modified exponential expression may include the Expressions 1 and 2 as shown in FIG. 16C. Information about the MTR levels in the specimen can be derived from the fitted values of one or more function parameters (a, b, c, d, etc.).

In another example, the data is fit by a series of splines.

In still another example, a linear function may be fit to a region of the waveform data.

In yet another example, the waveform data is preprocessed by averaging over a subregion of the sample and applying a median filter to each signal. The preprocessed waveform data is then raised to a power, element by element. Subsequently, a spatial map of the specimen may be generated from the element-wise difference of the cumulative sum of the preprocessed waveform data. The spatial map may be used as a representation of one or more MTR characteristics of the specimen, or to generate one or more scores. The score may be indicative of MTRs regions at the various locations on the specimen.

In another example, the shape of the signal data (e.g. waveform data) may be determined by calculating an area under the signal curve of the signal data.

In another example, the shape of the signal data (e.g., waveform data) may be determined by calculating an element-wise difference of a cumulative sum of the signal data raised to a specified power.

The quantified waveform shape data is compared spatially across the specimen. The quantified waveform shape data may be compared across multiple locations of the specimen, which may represent individual locations/points, locally-averaged locations, a profile of fit parameters across the specimen, etc.

The specimen may be dispositioned or graded based on the values and distributions of the quantified waveform shape data at a single location or spatially across the specimen.

In some examples, a shear-wave ultrasonic inspection is performed on a cylindrical component. The shape of the acoustic waveform is subsequently characterized according to the methods shown in FIG. 21 across the bulk of the specimen.

A small radial cross-section may be machined from the specimen or nearby material, having grain or texture characteristics that are of particular interest, and a Rayleigh surface wave or eddy current inspection may be performed on the cross-section. By eddy current inspection, it is meant that induced electric current may be used to detect grain surface or sub-surface characteristics.

A near-surface inspection is performed using a Rayleigh surface wave or eddy current inspection. The inspection data is quantified using an entropy or joint-probability method based on the spatial distribution of the impedance magnitude and phase at one or multiple excitation frequencies. The near-surface data is then used to generate a spatial intensity profile for the cylindrical component. The grading of the spatial intensity profile is informed by the radial decay rate of MTR levels and the integral of the beam shape with the SWUT-predicted MTR profile.

The ultrasonic wavefront pattern is compared with the predicted radial MTR profile obtained. In some aspects, a numerical or experimental ultrasonic waveform profile is integrated in time and space over the domain of the sample, with respect to the radial MTR intensity.

In some examples, the interpretation of the waveform shape may be based upon the radial profile. In such an example, the bulk method may be calibrated by the radial cross-section, and used to disposition a larger volume of similar material without the need for additional cross-sections from the specimen.

In another example, the frequency or time-frequency spectra may be compared at multiple locations within a specimen or across specimens of different quality, and the similarity between nearby locations may be assessed based on the similarity or dissimilarity between frequency or time-frequency spectra.

In another example, the near-surface data may be compared with the bulk-inspection data to calibrate the bulk-inspection data and guide an interpretation of the bulk-inspection data.

In some embodiments, one or more inspection sensors are configured to acquire surface or near-surface inspection data of a specimen at one or more inspection frequencies. The one or more inspection sensors can include at least one of an eddy current sensor or a polarized light sensor.

Surface or near-surface inspection data is received from the one or more inspection sensors. The inspection data is analyzed using at least one of an information entropy determination approach; a joint-probability or co-occurrence matrix; or a recognition and/or analysis of a spatial time, and a frequency distribution of the surface or near-surface inspection data.

In some embodiments, a method of analyzing signal data calculates a sensor score by calculating the entropy of one or more properties of the signal. The Entropy may be calculated for one or more positions, time windows, frequencies, embedding dimensions, and/or scales. In some embodiments, entropy may be calculated for one or more distinct time-series or sets of signal data. In other embodiments, a cross-entropy may be calculated using two or more time-series or sets of signal data. In some embodiments, entropy functions may be modified by best-fit parameters obtained through experiment. In some embodiments, entropy functions may be adaptive and adjust scale, coarse-graining, and embedding dimension based on the signal data. In some embodiments, the method or portions thereof is performed or executed using the inspection system 100. For example, controller 108 may perform or cause to be performed one or more steps of the method.

Where used herein, an entropy function is understood as a function or algorithm included in a family of functions that describe similarity and probability of occurrence for signal data, sets of data. In many embodiments, an Entropy function takes the general form of summation over the logarithm of a probability. When defined for time-series data, many entropy functions may also be functionally dependent on one or more embedding dimensions and one or more scale parameters, which provide the benefit of adjusting the scale and sensitivity of the output. However, some implementations of entropy, such as Rényi entropy described below, do not follow this mathematical formula except in the case of specific limits.

Some functions in the entropy family are defined for any set of data. Other functions are specifically defined for time-series or frequency spectra. It is contemplated that entropy functions may be modified with weights or adjustment functions to optimize performance for a specific specimen.

Example functions included in the entropy family include dispersion entropy, approximate entropy, fluctuation-dispersion entropy, spectral entropy, sample entropy, Shannon entropy, Tsallis entropy, Rényi entropy, slope entropy, phase entropy, and fuzzy entropy.

In some embodiments, where signal data is generated by an electromagnetic sensor, induced current sensor, or combination of either of the former with one or more acoustic transducers, it is understood that these methods may represent an extension and/or improvement of the analysis methods outlined in US Non-Provisional Application No. 18/678,918 to signal data collected from the sensor arrangements described herein.

The specimen 102 (FIG. 1A) is inspected with an inspection device 104, and signal data is obtained that is indicative of the state of the specimen 102. The collected signal data may be one or more of: time-domain signals; frequency spectra; one or more peak amplitudes, one or more peak occurrence times; one or more peak occurrence frequencies; signal phases; signal coherence; signal impedance; or sensor voltage.

One or more properties of the signal data is selected. The selected property may be chosen based on the specific configuration of sensors within the inspection device 104 (FIG. 1A) and/or the characteristics of the specimen 102 (FIG. 1A), such as material, manufacturing process, and/or surface condition.

One or more entropy functions are selected, based on the selection of signal property. In some examples, the selected Entropy function may be defined by any distribution of values and may be applied to a set of signal properties that correspond to one or more positions, times, or excitation frequencies. In other examples, the signal data is an amplitude-time series, and the selected entropy functions is defined for time-series data. In other examples, the signal data is a frequency spectrum, and the selected Entropy function is defined over frequency-domain data.

In other examples, the set of data may be a property derived from the signal data, such as the shape, size, orientation, texture, or aspect ratio of regions obtained through a shape segmentation algorithm.

In one example, the signal property may be the phase of an eddy current coil, and the selected entropy function may be the Rényi Entropy, defined by

$$H_{Reyni}(x) = \left(\frac{1}{1-\alpha}\right)\log\left(\sum p_i^{\alpha}\right)$$

Where $\alpha$ is a variable coefficient and $p_i$ is the probability that the impedance of the signal data falls within the *ith* bin of impedance values in a region of the specimen and/or a range of frequencies.

In another example, the selected signal property may be the amplitude-time series of a Rayleigh surface wave, and the selected entropy function is the fuzzy entropy. Fuzzy entropy may be understood as a metric that two signals form points will remain similar at m+1 points. Fuzzy entropy may be defined by the expression:

$$H_{Fuzzy}(m,\ n,\ r,\ N) = \ln\big(\phi^m(n,\ r)\big)\ - \ln\big(\phi^{m+1}(n,\ r)\big)$$

Where m is an embedding dimension, *n* and *r* are coefficients, and $\phi^m$ and $\phi^{m+1}$ are metrics of the vector distance of the time series.

The derivation and full expression are shown in FIG. 29. It is contemplated that modifications of this formula, such as adding coefficients to optimize model performance may be used. A response score may be generated from comparing the fuzzy entropy at one or more locations, times, scales, or frequencies.

In another example, the selected signal property may be the amplitude-time series of a Rayleigh surface wave, and the selected entropy function is the slope entropy, which may be understood as a function that describes the likelihood that a signal will increase or decrease at a variable rate. In some examples, the slope entropy may be calculated via:

$$H_{slope}(\vec{r}, t, f) = -\sum c_i \log(c_i)$$

In which $c_i$ is the probability that the slope of the signal will match the *ith* pattern of the signal data. A response score may be generated from comparing the Slope Entropy at one or more locations, times, scales, or frequencies.

In another example, the selected signal property may be the frequency spectrum of an acoustic surface wave or the frequency-dependent impedance of an eddy current coil, and the selected entropy function is the Spectral Entropy, which may be calculated via:

$$H_{spectral} = -p_m \log \sum(p_m)$$

Where $p_m$ refers to the value in each bin of the spectral power distribution of the signal data.

In another example, a window may be rolled across the signal data, and local features may be extracted from the time-to-peak amplitude within the window. In this example, a response score is calculated using the Rényi entropy of the distributions of the properties of these local features, such as size, shape, and/or elongation.

Entropy is calculated at one or more positions, excitation frequencies, and/or time windows.

One or more response scores that are indicative of MTRs in the specimen are generated based on the measure of information entropy.

In some embodiments, a method of analyzing signal data using a co-occurrence matrix by generating a joint probability matrix from at least two marginal distributions, which represent properties of signal data. In some embodiments, the method or portions thereof is performed or executed using the inspection system 100. For example, controller 108 (FIG. 1A) may perform or cause to be performed one or more steps of the method.

Using one or more sensors, such as the sensor(s) described with reference to FIG. 27A, signal data that is indicative of the interaction between a specimen and acoustic waves, electromagnetic waves, and/or induced current is obtained.

One or more properties of the signal data are calculated or determined at one or more positions, times, frequencies, or excitations modes, yielding at least two distributions of data. In some embodiments, two or more properties of the signal data are calculated or determined at one or more positions, times, frequences, or excitation modes. Examples of properties of the signal data that can be calculated include but are not limited to time-series amplitude, amplitude of peaks, travel time of peaks, impedance, phase, phase coherence, frequency spectrum, or time trace.

In some embodiments, where signal data is generated by an electromagnetic sensor, induced current sensor, or combination of either of the former with one or more acoustic transducers, it is understood that these co-occurrence methods may represent an extension and/or improvement of the analysis methods outlined in US Non-Provisional Application No. 18/678,918 to signal data collected from the sensor arrangements described herein.

A joint probability distribution is developed based upon the selected signal properties and/or parameter values. This distribution may be represented as a matrix (*G*) (e.g., a co-occurrence matrix), and one or more response scores may be developed based on the values in (*G*).

In one example, G may be generated by the following: first, a set of data *S(r)* generated by collecting data is acquired at multiple positions $\vec{r}$. A first marginal distribution, $D_0$ is generated from the values of *S*. Next, one or more

specified vector offsets $\Delta\vec{r}$ are defined. A second marginal distribution, $D_1$ generated from the values of S at position $\vec{r_i} + \Delta\vec{r}$. Next, the joint probability (G) is generated from:

$$G_{ij} = P\big(S(r) = a_i \ and \ S(r + \Delta r) = b_j\big),$$

Where $a_i$ ranges across the binned values of S(r), and $b_j$ ranges across the binned values of $S(r + \Delta r)$. In many examples, the number of bins for $a_i$ and $b_j$ are equal in number, resulting in a square matrix (G).

In the case of a single property of the signal data and a two-dimensional scan grid, (G) takes a form matching a grey-level co-occurrence matrix.

In more general examples, the use of a single offset vector $\Delta\vec{r}$ is not required, and other the marginal distributions used in generation of (G) may be derived from multiple properties and sets of signal data, multiple observation times/windows, multiple frequencies, and multiple sensors, resulting in an arbitrarily-dimensional matrix.

In some examples, once the matrix (G) is created the elements $G_{ij}$ may have a weight function applied, which provides beneficial control to emphasize near-diagonal or off-diagonal elements. Two examples of such weight functions are $w(G_{ij}) = |i + j|$ and $w(G_{ij}) = i * G_{ij}$

Finally, one or more response scores that are indicative of MTRs in the specimen may be generated based upon the adjusted matrix G. One or more response scores may be generated by applying an adjustment function h to the matrix (G). In general form, the response score may be generated by:

$$Response \ Score = h \left( \sum\sum w\big(G_{ij}\big) \right)$$

Two examples of such adjustment functions are $h(x) = x^N$ and $h(x) = \ln (x)$. It is contemplated that any algebraic function is suitable as an adjustment of (G).

In one example of applying this method to signal data, the selected signal property is the impedance magnitude of a racetrack eddy current coil, and the sensor data is collected via a raster scan. In this example, the marginal distributions are generated via use of the offset vector $\Delta\vec{r}$, which is chosen a distance offset of 0.050 inches, and at an orientation that is aligned with the flow of microstructure within the specimen. Beneficially, this approach may be used to measure the likelihood that a region within the specimen returns the same measurements, providing a response score that in sensitive to the size and shape distribution within the specimen.

In some embodiments, a method of analyzing signal data based on the similarity and/or variation in the spectrogram of the signal data. In some embodiments, the method or portions thereof is performed or executed using the inspection system 100. For example, controller 108 may perform or cause to be performed one or more steps of the method.

Using one or more sensor(s), signal data that is indicative of the interaction between a specimen and the acoustic waves, electromagnetic waves, and/or induced current is obtained.

When used herein, a spectrogram is understood as a two-dimensional dataset where one dimension is a frequency spectrum, a second axis is at least one of position or time, and a third dimension is a measure of the signal intensity. Spectrograms may include multiple spatial dimensions that correspond to the specimen.

A set of spectrograms is collected at one or more positions on the specimen. In some examples, the spectrograms may be generated using a short-time Fourier transform. Various windows may be used for the short time Fourier transform, such as a box window, a Gaussian window, or discrete prolate spheroidal sequence window.

In other examples, the spectrograms may be generated using a continuous wavelet transform. Various wavelets may be used for the continuous wavelet transform, including both orthogonal and nonorthogonal wavelets, such as a Morlet wavelet, a Mexican hat wavelet, and a generalized Morlet wavelet.

In another example, the spectrogram may be generated by a sweep of excitation frequency and recording the signal amplitude at each frequency.

The spectrograms are compared to obtain information about the MTR levels of the specimen.

In one example, spectrograms may be compared by the mean squared error (MSE) between two spectrograms at some variable offset in space, or between multiple sensors in an array. The mean squared error may be used as a response score, as well as basic statistics of a set of MSE values. It is contemplated that other measures of image similarity may also be used.

In another example, local maxima and minima in the set of spectrograms are measured, and a response score is calculated on the statistics of these maxima and minima, such as but not limited to: count of extrema, size distribution of extrema, and/or intensity of extrema.

In another example, ridges in the spectrogram are used to generate a response score.

One or more response scores that are indicative of MTRs are generated based on the spectrograms.

In some embodiments, a method of analyzing signal data is based upon identifying key components of the signal. In some embodiments, the method or portions thereof is performed or executed using the inspection system 100 (FIG. 1A). For example, controller 108 may perform or cause to be performed one or more steps of the method.

Using one or more sensor(s), signal data that is indicative of the interaction between a specimen and the acoustic waves, electromagnetic waves, and/or induced current is obtained. The signal data is collected at multiple positions on the specimen. The signal data may also be collected at multiple frequencies or with multiple modalities.

The signal data is processed into more-relevant (e.g., influential) and less-relevant components based on principal component analysis and/or empirical/variational mode decomposition. In some embodiments, the signal data is processed into components having one or more levels of relevance, for example, where a first level indicates components that are more relevant, and a second level indicates components that are less relevant data. Relevance refers to the extent to which components correlate with or influence MTR levels in the specimen. The levels of relevance may be used to determine components that are the most relevant to the detection of MTR.

One or more response scores for the specimen are generated based on values of the more-relevant (e.g., the most relevant) components of the signal data. For example, response scores for the specimen may be based on the correlation of the most relevant components with MTR levels of the specimen.

In one example, principal component analysis may be used to identify orthogonal components in the set of signal data, and to filter out components that do not correlate with MTR levels, and to generate a response score from the component that best-correlates to the MTR levels within the specimen.

In another example, the signal data is decomposed into sub-component vibrational modes, using at least one of: empirical mode decomposition, also known as a Hilbert-Huang transform; variational mode decomposition, or a multiresolution mode decomposition method. One or more response scores may be calculated from these oscillatory modes, using methods such as the peak amplitude, peak travel time. In addition, any time-series analysis method described herein may be applied to each of the sub-modes obtained through EMD to generate response scores.

Further aspects of the disclosure are provided by the subject matter of the following clauses:

An inspection system for inspecting a specimen, the inspection system comprising: a transmitting sensor array of one or more active elements arranged to introduce inspecting energy into the specimen; and a controller in operative communication with the transmitting sensor array, the controller being configured to: cause the inspecting energy to be transmitted from the transmitting sensor array through an incident surface of the specimen and through the volume of the specimen; receive signal data indicative of signal energy received from the specimen at two or more locations of the specimen; compute a Fourier transform for the signal data to separate frequency characteristics from phase characteristics of the signal data; calculate a shift of frequency distribution in the frequency characteristics of between the signal energy at the two or more locations of the specimen; generate an intensity map or response score based on the shift of frequency distribution; and determine at least one microtexture region (MTR) score indicative of MTR present within a subsurface volume of the specimen based at least in part on the shift of the frequency distribution of the signal energy.

An inspection system for inspecting a specimen, the inspection system comprising: a transmitting sensor array of one or more active elements arranged to introduce inspecting energy into the specimen; and a controller in operative communication with the transmitting sensor array, the controller being configured to: cause the inspecting energy to be transmitted from the transmitting sensor array through an incident surface of the specimen and through a volume of the specimen; receive signal data indicative of signal energy received from the specimen; compute a distribution of values for a given characteristic of the signal data; compute a quantified description of the distribution of values for the given characteristic of the signal energy; and determine at least one microtexture region (MTR) score indicative of MTR present within a subsurface volume of the specimen based at least in part on the quantified description of the distribution of values for a given characteristic of the signal data.

An inspection system for inspecting a specimen, the inspection system comprising: a transmitting sensor array of one or more active elements arranged to introduce inspecting energy into the specimen; and a controller in operative communication with the transmitting sensor array, the controller being configured to: cause the inspecting energy to be transmitted from the transmitting sensor array through an incident surface of the specimen and through a volume of the specimen; receive signal data indicative of signal energy received from the specimen at two or more locations of the specimen; compute a Fourier transform for the signal data to separate frequency characteristics from phase characteristics of the signal data; calculate a shift of frequency distribution in the frequency characteristics of between the signal energy at the two or more locations of the specimen; generate an intensity map or response score based on the shift of frequency distribution; and determine at least one microtexture region (MTR) score indicative of MTR present within a subsurface volume of the specimen based at least in part on the shift of the frequency distribution of the signal energy.

An inspection system for inspecting a specimen, the inspection system comprising: a transmitting sensor array of one or more active elements arranged to introduce inspecting energy into the specimen; and a controller in operative communication with the transmitting sensor array, the controller being configured to: cause the inspecting energy to be transmitted from the transmitting sensor array through an incident surface of the specimen and through a volume of the specimen; receive an intensity map associated with the specimen, the intensity map generated based on a signal data representing inspecting energy received from the specimen; quantify at least one of a size, a shape, or a texture of the intensity map; and determine at least one microtexture region (MTR) score indicative of MTR within a subsurface volume of the specimen based at least in part on the size, the shape, or the texture of the intensity map.

An inspection system for inspecting a specimen, the inspection system comprising: a transmitting sensor array of one or more active elements arranged to introduce inspecting energy into the specimen ; and a controller in operative communication with the transmitting sensor array, the controller being configured to: cause the inspecting energy to be transmitted from the transmitting sensor array through an incident surface of the specimen and through a volume of the specimen; and receive signal data indicative of signal energy received from the specimen; decomposing the signal data into a plurality of components; selecting one or more components that are indicative of MTRs from the plurality of components; generating at least one intensity map or responses score for the specimen based on the one or more components that are indicative of MTRs.

An inspection system for inspecting a specimen, the inspection system comprising: a transmitting sensor array of one or more active arranged to introduce inspecting energy into the specimen; and a controller in operative communication with the transmitting sensor array, the controller being configured to: cause the inspecting energy to be transmitted from the transmitting sensor array through an incident surface of the specimen and through a volume of the specimen; receive signal data representing inspecting energy received from the specimen; generate an intensity map or response score for the specimen, the intensity map representing the signal data arranged corresponding to a spatial location of the signal data; determine at least one microtexture region (MTR) score indicative of MTR present within a subsurface volume of the specimen based at least in part on the intensity map or response score.

An inspection system for inspecting a specimen, the inspection system comprising: one or more inspection sensors configured to acquire surface or near-surface inspection data of a specimen at one or more inspection frequencies, wherein the one or more inspection sensors include at least one of an eddy current sensor or a polarized light sensor; and a controller in operative communication with the one or more inspection sensors, the controller configured to receive surface or near-surface inspection data from the one or more inspection sensors and analyze the surface or near-surface inspection data of the specimen using at least one of: an information entropy determination approach; a joint-probability or co-occurrence matrix; or a recognition and/or analysis of a spatial time, and a frequency distribution of the surface or near-surface inspection data.

An inspection system for inspecting a specimen, the inspection system comprising: an inspection device comprising an excitation source and a receiver, the inspection device configured to generate at least one of acoustic waves, electromagnetic waves, or induce currents; and a controller in operative communication with the excitation source, the controller being configured to: generate, using the excitation source, at least one of the acoustic waves, the electromagnetic waves, or the induced currents that interact with the specimen; obtain signal data indicative of an interaction between the specimen and at least one of the acoustic waves, the electromagnetic waves, or the induced currents; and determine at least one response score representing the microtexture region (MTR) characteristic present for a portion of a volume of the specimen.

An inspection system for inspecting a specimen, the inspection system comprising: a transmitting sensor array of one or more active elements arranged to introduce inspecting energy into the specimen; and a controller in operative communication with the transmitting sensor array, the controller being configured to: cause the energy to be transmitted from the transmitting sensor array through an incident surface of the specimen and through a volume of the specimen; and receive signal data indicative of signal energy received from the specimen at two or more locations of the specimen; generate an intensity map or response score based on the signal data at the two or more locations of the specimen; and determine at least one microtexture region (MTR) score indicative of MTR present within a subsurface volume of the specimen based at least in part on a variation of the signal energy.

An inspection system comprising: at least one acoustic transmitter that is operable to transmit acoustic waves through an interaction volume of a specimen, wherein at least a portion of the interaction volume is disposed below a surface of the specimen; at least one acoustic receiver, the at least one acoustic receiver positioned to detect the acoustic waves; and a controller in operative communication with the at least one acoustic transmitter and the at least one acoustic receiver, the controller configured to: activate the at least one acoustic transmitter to transmit the acoustic waves, the acoustic waves including at least one of shear, longitudinal, or mixed mode waves; receive signal data indicative of two or more acoustic signals associated with two or more locations in time, space, or frequency, the two or more acoustic signals received from the at least one acoustic receiver; compute a quantified description of the two or more acoustic signals relative to each other; and determine a microstructural characteristic that is associated with the specimen based at least in part on the quantified description of the two or more acoustic signals.

An inspection method comprising: receiving a first set of signal data from an inspection device, the first set of signal data being associated with one or more volumes within a specimen; receiving a second set of signal data from a near-surface inspection device, the second set of signal data being associated with one or more surfaces or cross-sections of the specimen; determining a first response score or intensity map for the specimen using the first set of signal data; determining a second response score or intensity map for the specimen using the second set of signal data; and determine at least one microtexture region (MTR) score indicative of MTR present within a subsurface volume of the specimen based at least in part on the first response score and the second response score or intensity map.

The inspection system of any preceding clause, wherein the transmitting sensor array comprises an acoustic transducer array comprising a plurality of acoustic transducers that act as an acoustic transmitter and as an acoustic receiver, and wherein the signal data is received from the acoustic transducer array.

The inspection system of any preceding clause, further comprising a receiving sensor array of one or more elements arranged to receive the inspecting energy from the specimen, wherein the controller is configured to receive the signal data from the receiving sensor array.

The inspection system of any preceding clause, wherein the inspecting energy includes least one of longitudinal waves, shear waves, Rayleigh waves, or mixed-mode acoustic waves.

The inspection system of any preceding clause, wherein the controller is further configured to generate an intensity map based upon an upshift or a downshift of frequency content of the signal data.

The inspection system of any preceding clause, wherein the controller is further configured to quantify the intensity map using a cumulative distribution function of a size of regions having a uniform frequency shift.

The inspection system of any preceding clause, wherein the controller is further configured to quantify the intensity map using a statistical measurement of sizes of regions having a uniform frequency shift.

The inspection system of any preceding clause, wherein the controller is further configured to quantify the intensity map using an Otsu Threshold.

The inspection system of any preceding clause, wherein the controller is further configured to generate the intensity map using a Gaussian Mixture.

The inspection system of any preceding clause, wherein the controller is further configured to quantify the intensity map based at least in part on enumeration of spots which show a change in frequency distribution below or above a threshold.

The inspection system of any preceding clause, wherein the transmitting sensor array steers a direction of inspecting energy, and wherein the controller is further configured to compare an upshift or a downshift of frequency distribution to other steered angles.

The inspection system of any preceding clause, wherein the controller is further configured to quantify one or more frequency peaks in exclusion of a primary frequency peak, and to quantify a rate of occurrence of the one or more frequency peaks.

The inspection system of any preceding clause, wherein the controller is further configured to quantify one or more frequency peaks in exclusion of a primary frequency peak, the one or more frequency peaks having amplitudes above a fixed fraction of a magnitude of the primary frequency peak, to quantify a rate of occurrence of the one or more frequency peaks.

The inspection system of any preceding clause, wherein the controller is further configured to form a spectrogram of a frequency distribution of the signal energy.

The inspection system of any preceding clause, wherein the controller is further configured to generate an intensity map based upon a continuous wavelet transform or a short-time Fourier transform for a specific period of time.

The inspection system of any preceding clause, wherein the controller is further configured to generate an intensity map based upon at least one of a structural similarity function of the signal data, a cross coherence of the signal data, or a mean square error of the signal data.

The inspection system of any preceding clause, wherein the controller is further configured to generate an intensity map based upon a phase shift.

The inspection system of any preceding clause, wherein the controller is further configured to generate the intensity map by calculating features within the signal data which have phase coherence and determine statistics of the features.

The inspection system of any preceding clause, wherein the controller is further configured to generate an intensity map based upon a Pearson correlation coefficient.

The inspection system of any preceding clause, wherein the controller is further configured to compare an intensity map of the signal energy to a reference intensity map and calculate a difference or a variance score.

The inspection system of any preceding clause, wherein the transmitting sensor array is an acoustic transducer array comprising a plurality of acoustic transducers that act as an acoustic transmitter and as an acoustic receiver, and wherein the signal data is received from the acoustic transducer array.

The inspection system of any preceding clause, further comprising a receiving sensor array of one or more elements arranged to receive the inspecting energy from the specimen, wherein the controller is configured to receive the signal data from the receiving sensor array.

The inspection system of any preceding clause, wherein the inspecting energy includes least one of longitudinal waves, shear waves, Rayleigh waves, or mixed-mode acoustic waves.

The inspection system of any preceding clause, wherein the inspecting energy is electromagnetic energy, and wherein the transmitting sensor array is an eddy current transducer array.

The inspection system of any preceding clause, wherein the controller is configured to perform a Hilbert transform to separate amplitude and phase characteristics of the signal data.

The inspection system of any preceding clause, wherein the controller is further configured to extract a distribution of amplitude values and fit the distribution of signal amplitudes to at least one of a Nakagami distribution, a Gamma distribution, a generalized Nakagami distribution, a Rayliegh distribution, a Homodyned K (HK) distribution, or a Rician distribution having a specific parameter descriptive of a shape of the distribution.

The inspection system of any preceding clause, wherein the controller is further configured to: fit a shape-descriptive function to the signal data; fit characteristic shape parameters to the signal data; calculate an area under a signal curve of the signal data; or calculate an element-wise difference of a cumulative sum of the signal data raised to a specified power.

The inspection system of any preceding clause, wherein the shape-descriptive function includes a parametric function, wherein the parametric function includes at least one of: a polynomial function; an exponential function; a parametric function with exponential and polynomial factors; a parametric function associated with a probability density function (PDF) or a cumulative distribution function (CDF) of a statistical distribution; or a parametric function associated with a physics-based model.

The inspection system of any preceding clause, wherein the characteristic shape parameters comprises at least one of: a height of a signal peak; a position of a signal peak; a width of a signal peak; a prominence of a signal peak; an integrated area of a signal envelope; or an integrated area of the parametric function.

The inspection system of any preceding clause, wherein the controller is further configured to extract amplitudes from the signal data and compute one or more higher-order statistics of the amplitudes.

The inspection system of any preceding clause, wherein the controller is further configured to fit a descriptive characteristic function to a shape of the distribution of values for a given characteristic of the signal energy.

The inspection system of any preceding clause, wherein the controller is further configured to measure a gradient of a shape of a distribution of values for a given characteristic of the signal data.

The inspection system of any preceding clause, wherein the controller is further configured to calculate an envelope for the signal data using at least one of a Hilbert transform, a moving root mean square (RMS) filter, an infinite impulse response (IIR) filter, a finite impulse response (FIR) filter, or a spline fit.

The inspection system of any preceding clause, wherein the controller is further configured to compute the given characteristic of the signal data based on the envelope for the signal data.

The inspection system of any preceding clause, wherein the given characteristic of the signal data includes at least one of an amplitude, a phase, a frequency, or a shape associated with the envelope.

The inspection system of any preceding clause, wherein the controller is further configured to calculate a distribution of magnitudes of the envelope.

The inspection system of any preceding clause, wherein the controller is further configured to generate at least one of an intensity map or a response score for the specimen based on the quantified description of the distribution of values for the given characteristic of the signal data, and to correlate the intensity map or the response score to the at least one MTR score.

The inspection system of any preceding clause, wherein the controller is further configured to assign an accept or reject identifier to the specimen based on the at least one MTR score.

The inspection system of any preceding clause, wherein the controller is in communication with a manufacturing system, and wherein the controller is further configured to adjust the manufacturing system based on the at least one MTR score.

The inspection system of any preceding clause, wherein the transmitting sensor array comprises an acoustic transducer array comprising a plurality of acoustic transducers that act as an acoustic transmitter and as an acoustic receiver, and wherein the signal data is received from the acoustic transducer array.

The inspection system of any preceding clause, further comprising a receiving sensor array of one or more elements arranged to receive the inspecting energy from the specimen, wherein the controller is configured to receive the signal data from the receiving sensor array.

The inspection system of any preceding clause, wherein the inspecting energy includes least one of longitudinal waves, shear waves, Rayleigh waves, or mixed-mode acoustic waves.

The inspection system of any preceding clause, wherein the controller is further configured to generate an intensity map based upon an upshift or a downshift of frequency content of the signal data.

The inspection system of any preceding clause, wherein the controller is further configured to quantify the intensity map using a cumulative distribution function of a size of regions having a uniform frequency shift.

The inspection system of any preceding clause, wherein the controller is further configured to quantify the intensity map using a statistical measurement of sizes of regions having a uniform frequency shift.

The inspection system of any preceding clause, wherein the controller is further configured to generate the intensity map using an Otsu Threshold.

The inspection system of any preceding clause, wherein the controller is further configured to generate the intensity map using a Gaussian Mixture.

The inspection system of any preceding clause, wherein the controller is further configured to quantify the intensity map based at least in part on enumeration of spots which show a change in frequency distribution below or above a threshold.

The inspection system of any preceding clause, wherein the transmitting sensor array steers a direction of inspecting energy, and wherein the controller is further configured to compare an upshift or a downshift of frequency distribution to other steered angles.

The inspection system of any preceding clause, wherein the controller is further configured to quantify one or more frequency peaks in exclusion of a primary frequency peak, and to quantify a rate of occurrence of the one or more frequency peaks.

The inspection system of any preceding clause, wherein the controller is further configured to quantify one or more frequency peaks in exclusion of a primary frequency peak, the one or more frequency peaks having amplitudes above a fixed fraction of a magnitude of the primary frequency peak, to quantify a rate of occurrence of the one or more frequency peaks.

The inspection system of any preceding clause, wherein the controller is further configured to form a spectrogram of a frequency distribution of the signal energy.

The inspection system of any preceding clause, wherein the controller is further configured to generate an intensity map based upon a continuous wavelet transform or a shorttime Fourier transform for a specific period of time.

The inspection system of any preceding clause, wherein the controller is further configured to generate an intensity map based upon at least one of a structural similarity function of the signal data, a cross coherence of the signal data, or a mean square error of the signal data.

The inspection system of any preceding clause, wherein the controller is further configured to generate an intensity map based upon a phase shift.

The inspection system of any preceding clause, wherein the controller is further configured to generate the intensity map by calculating features within the signal data which have phase coherence and determine statistics of the features.

The inspection system of any preceding clause, wherein the controller is further configured to generate an intensity map based upon a Pearson correlation coefficient.

The inspection system of any preceding clause, wherein the controller is further configured to compare an intensity map of the signal energy to a reference intensity map and calculate a difference or a variance score.

The inspection system of any preceding clause, wherein the transmitting sensor array is an acoustic transducer array comprising a plurality of acoustic transducers that act as an acoustic transmitter and as an acoustic receiver, and wherein the signal data is received from the acoustic transducer array.

The inspection system of any preceding clause, further comprising a receiving sensor array of one or more elements arranged to receive the inspecting energy from the specimen, wherein the controller is configured to receive the signal data from the receiving sensor array.

The inspection system of any preceding clause, wherein the inspecting energy includes least one of longitudinal waves, shear waves, Rayleigh waves, or mixed-mode acoustic waves.

The inspection system of any preceding clause, wherein the inspecting energy is electromagnetic energy, and wherein the transmitting sensor array is an eddy current transducer array.

The inspection system of any preceding clause, wherein the controller is further configured to perform a Hilbert transform on the signal data to separate amplitude and phase characteristics of the signal data.

The inspection system of any preceding clause, wherein the controller is further configured to digitize the intensity map into a matrix of values to characterize the size, the shape, or the texture of the intensity map.

The inspection system of any preceding clause, wherein the controller is further configured to use a plurality of matrices representing a likelihood that two energy signals separated by a specific offset distance have the same characteristic to characterize the size, the shape, or the texture of the intensity map.

The inspection system of any preceding clause, wherein the controller is configured to apply a weight function to the matrix of values.

The inspection system of any preceding clause, wherein the controller is further configured to: select two or more properties of the signal data; divide each property into a range of levels; calculate a matrix containing a joint probability of observing each combination of the range of levels; apply weight and adjustment functions to the matrix; and generate the at least one MTR score based on the matrix.

The inspection system of any preceding clause, wherein the controller is further configured to quantify the texture of the intensity map by: selecting one or more properties of the intensity map; dividing each property into a plurality of bins; specifying an offset relationship between neighboring data points; calculating a matrix representing a probability a point and a neighboring point will have values in the plurality of bins; applying weight and adjustment functions to the matrix; generating one or more response scores based on the matrix; and generating the at least one MTR score based on the one or more response scores.

The inspection system of any preceding clause, wherein the size, the shape, or the texture of the intensity map is determined by using at least one of: an Otsu Threshold, a Voronoi-Otsu Threshold, a Gaussian Mixture Model, a Chan Vese Model, a Watershed, or a marching squares algorithm to segment the intensity map.

The inspection system of any preceding clause, wherein the transmitting sensor array comprises an acoustic transducer array comprising a plurality of acoustic transducers that act as an acoustic transmitter and as an acoustic receiver, and wherein the signal data is received from the acoustic transducer array.

The inspection system of any preceding clause, wherein the inspecting energy includes least one of longitudinal waves, shear waves, Rayleigh waves, or mixed-mode acoustic waves.

The inspection system of any preceding clause, wherein the inspecting energy is electromagnetic energy, and wherein the transmitting sensor array is an eddy current transducer array.

The inspection system of any preceding clause, wherein the controller is further configured to perform at least one of a Hilbert transform to separate amplitude and phase characteristics of the signal data.

The inspection system of any preceding clause, wherein the decomposition of the signal data into the plurality of components includes an Empirical Mode Decomposition.

The inspection system of any preceding clause, wherein the decomposition of the signal data into the plurality of components includes a Variational Mode Decomposition.

The inspection system of any preceding clause, wherein the decomposition of the signal data into the plurality of components includes a Hilbert-Huang Transform.

The inspection system of any preceding clause, wherein the transmitting sensor array comprises acoustic transducer array comprising a plurality of acoustic transducers that act as an acoustic transmitter and as an acoustic receiver, and wherein the signal data is received from the acoustic transducer array.

The inspection system of any preceding clause, further comprising a receiving sensor array of one or more elements arranged to receive the inspecting energy from the specimen, wherein the controller is configured to receive the signal data from the receiving sensor array.

The inspection system of any preceding clause, wherein the inspecting energy include least one of longitudinal waves, shear waves, Rayleigh waves, or mixed-mode acoustic waves.

The inspection system of any preceding clause, wherein the inspecting energy is electromagnetic energy, and wherein the transmitting sensor array is an eddy current transducer array.

The inspection system of any preceding clause, wherein the controller is configured to perform a short-time Fourier transform or a continuous wavelet transform to calculate time-frequency characteristics of the signal data.

The inspection system of any preceding clause, wherein the controller is further configured to perform a Hilbert transform to separate amplitude and phase characteristics of the signal data.

The inspection system of any preceding clause, wherein the controller is further configured to perform a Fourier transform to separate frequency and phase characteristics of the signal data.

The inspection system of any preceding clause, wherein the controller is further configured use the intensity map to segment the specimen into separate regions using one or more of a Gaussian mixture model, a threshold, or marching squares/cubes and associate the signal data with the separate regions to generate segmented data.

The inspection system of any preceding clause, wherein the controller is further configured to compute one or more spatial statistics for each feature within the segmented data, wherein the spatial statistics can include one or more of a size, a shape, an aspect ratio, a surface area, or a perimeter.

The inspection system of any preceding clause, wherein the controller is further configured to: calculate coherent features within the signal data; determine statistics of the coherent features; and generate one or more response scores indicative of MTRs in the specimen based on the statistics of the coherent features.

The inspection system of any preceding clause, wherein the controller is further configured to: reconstruct a path from a region within a specimen to each element of the receiving acoustic transducer array; compare a waveform received by each element of a receiving acoustic transducer array; apply a weight function to each waveform; delay and sum the waveforms into a composite value at each point in the specimen; and generate one or more MTR scores indicative of MTRs in the specimen based on the composite values.

The inspection system of any preceding clause, wherein the controller is further configured to compute a metric of the peakiness of the signal data, the metric including one or more of skewness, roll off, entropy, kurtosis, or prominence.

The inspection system of any preceding clause, wherein the controller is further configured to aggregate a signal energy characteristic over a group of segmented regions to generate aggregated signal energy characteristics, and calculate one or more of skewness, roll off, entropy, kurtosis, or prominence of the aggregated signal energy characteristics.

The inspection system of any preceding clause, wherein the controller is further configured to segment the signal data over any dimension using one or more of a Gaussian mixture model, a threshold, or marching squares/cubes.

The inspection system of any preceding clause, wherein the controller is further configured to re-scale the signal data into a standardized magnitude or a time framework for direct comparison to other signal data.

The inspection system of any preceding clause, wherein the intensity map representing one or more of Statistical entropy, Fuzzy entropy, Slope entropy, Fluctuation-Dispersion entropy or Phase entropy representing the distribution of received signal energy patterns.

The inspection system of any preceding clause, wherein the controller is further configured to compute a measure of information entropy based on at least one of the signal data, reconstructed shapes/regions/volumes, or statistics of signal data or reconstructed shapes/regions/volumes.

The inspection system of any preceding clause, wherein the controller is further configured to select a window across each vector associated with the signal data, where a window length and embedding dimension determine a size of a pattern in each vector.

The inspection system of any preceding clause, wherein the controller is further configured to calculate an inclusion metric based on whether a pattern in the window matches a known pattern and count occurrences for the known pattern.

The inspection system of any preceding clause, wherein the controller is further configured to calculate a probability of the known pattern occurring in a population of received signals.

The inspection system of any preceding clause, wherein the controller is further configured to generate a second intensity map or a second response score for additional timescales, window lengths, and embedding dimensions.

The inspection system of any preceding clause, wherein transmitting sensor array is an acoustic transducer array comprising a plurality of acoustic transducers that act as an acoustic transmitter and as an acoustic receiver, and wherein the signal data is received from the acoustic transducer array.

The inspection system of any preceding clause, wherein the inspecting energy includes at least one of longitudinal waves, shear waves, Rayleigh waves, or mixed-mode acoustic waves.

The inspection system of any preceding clause, further comprising a receiving sensor array arranged to receive inspecting energy from the specimen, and wherein the transmitting sensor array and the receiving sensor array are acoustic transducer arrays

The inspection system of any preceding clause, wherein the inspecting energy is electromagnetic energy, and wherein the transmitting sensor array is an eddy current transducer array.

The inspection system of any preceding clause, wherein the controller is further configured to calculate a phase variation at a specific moment of time.

The inspection system of any preceding clause, wherein the controller is further configured to perform a Hilbert transform to separate amplitude and phase characteristics of the signal data.

The inspection system of any preceding clause, wherein the controller is further configured to calculate an amplitude variation at a specific moment of time.

The inspection system of any preceding clause, wherein the controller is further configured to compare the signal data to a signal template.

The inspection system of any preceding clause, wherein the controller is further configured to perform a Fourier transform to separate frequency and phase characteristics of the signal data.

The inspection system of any preceding clause, wherein the controller is further configured to correlate the signal data with a signal template and calculate a difference or variation score.

The inspection system of any preceding clause, wherein the controller is further configured to measure an area extent of a uniform received energy characteristic

The inspection method of any preceding clause, wherein the near-surface inspection device includes at least one of: an ultrasonic sensor configured to generate an acoustic surface wave; an ultrasonic sensor configured to interrogate a near-surface volume of a sample; an eddy current sensor; or a polarized light sensor.

The inspection method of any preceding clause, wherein analyzing the second set of signal data includes analyzing the second set of signal data using at least one of: a measure of entropy that is determined based on a two-dimensional representation of the second set of signal data across the one or more surfaces or cross-sections of the specimen; a measure of entropy that is determined based on a time-domain of the second set of signal data; a measure of entropy that is determined based on a frequency-domain of the second set of signal data; a measure of entropy that is determined based on an acoustic waveform; or a joint probability determination.

The inspection system of any preceding clause, wherein the controller is further configured to: analyze the signal data using at least one of: statistical properties of the signal data; an entropy metric based on the properties of the signal data; a joint probability or co-occurrence metric based on the properties of the signal data; a phase coherence of the signal data; a metric derived from Principal Component Analysis; a variation in signal data at different positions, times, excitation frequencies, or excitation waveforms; or one or more metrics of a peakiness or flatness of the signal data; and determine a response score based on the analysis.

The inspection system of any preceding clause, wherein the inspection device has a sensor arrangement defined by a position of the excitation source and the receiver relative to the specimen, and wherein the signal data is obtained using a plurality of sensor arrangements.

The inspection system of any preceding clause, wherein the excitation source is an acoustic transmitter configured to generate an acoustic wave in the 1 megahertz to 100 megahertz frequency range using at least one of a pulse, chirp, toneburst, or coded excitation.

The inspection system of any preceding clause, wherein the excitation source is an electromagnet configured to induce eddy current in the range of 100 kilohertz to 50 megahertz using at least one of a single frequency, multiple frequences, or a frequency sweep.

The inspection system of any preceding clause, wherein the excitation source is mounted on a rotation fixture that is rotatable relative to the specimen.

The inspection system of any preceding clause, wherein the excitation source comprises one or more acoustic transmitters and the receiver comprises one or more acoustic receivers, and wherein the one or more acoustic transmitters are positioned at a position and angle sufficient to generate and transmit an acoustic wave across or near a surface of the specimen.

The inspection system of any preceding clause, wherein the excitation source comprises a single element acoustic transducer.

The inspection system of any preceding clause, wherein the single element acoustic transducer comprises a concave face and an active excitation element, and wherein a radius of curvature of the concave face is selected to achieve an incidence angle that results in surface acoustic waves that travel across a surface of the specimen.

The inspection system of any preceding clause, wherein the single element acoustic transducer comprises a shaped element to generate preferentially-oriented surface acoustic waves.

The inspection system of any preceding clause, wherein the single element acoustic transducer comprises a spherical element with a mask coupled thereto to generate preferentially-oriented surface acoustic waves.

The inspection system of any preceding clause, wherein the excitation source comprises a transducer configured to generate a high-angle shear acoustic wave.

The inspection system of clause 17, wherein the excitation source comprises one or more pulsed lasers configured to generate acoustic waves on or near a surface of the specimen.

The inspection system of any preceding clause, wherein the excitation source is an eddy current sensor.

The inspection system of any preceding clause, wherein the eddy current sensor comprises an absolute coil comprising a single coil configured to generate a circumferentially symmetric induced current field.

The inspection system of any preceding clause, wherein the eddy current sensor comprises a differential coil that includes a first coil and a second coil.

The inspection system of any preceding clause, wherein the eddy current sensor comprises a racetrack coil configured to generate an anisotropic induced current field in the specimen.

The inspection system of any preceding clause, wherein the eddy current sensor comprises an eddy current array.

The inspection system of any preceding clause, wherein the controller is further configured to: select one or more properties of the signal data; select one or more Entropy functions based on the one or more properties; determine an entropy at one or more positions, excitation frequencies, and/or time windows; and generate one or more response scores.

The inspection system of any preceding clause, wherein the controller is further configured to: determine one or more properties of the signal data; create a co-occurrence matrix that represents a joint probability distribution of the one or more properties.

The inspection system of any preceding clause, wherein the controller is further configured to: determine a phase of the signal data using at least one of: complex impedance, a Hilbert transform, or data via sign(x); compare the phase or a phase shift of the signal data at one or more positions on the specimen or at one or more times to determine coherence or incoherence of the signal data.

The inspection system of any preceding clause, wherein the controller is further configured to: determine one or more spectrograms of the signal data; compare the similarity of the one or more spectrograms at nearby positions on the specimen; and generate one or more sensor scores that are indicative of MTRs for the specimen based on the one or more spectrograms.

The inspection system of any preceding clause, wherein the controller is further configured to: determine a descriptor of at least one of a peakiness or a flatness of the signal data.

The inspection system of any preceding clause, wherein the controller is further configured to: process the signal data into components having one or more levels of relevance based on at least one of Principal Component Analysis or Empirical/Variational Mode Decomposition.

The inspection system of any preceding clause, wherein the controller is configured to analyze the signal data via at least one of: a wavelet analysis; a statistical property of the signal data; an information entropy determination for the specimen; a joint probability or co-occurrence matrix; a phase coherence between features of a waveform representative of the acoustic waves; a comparison of similarity among elements of a transducer array; a comparison between waveforms obtained through full matrix capture; a recognition and cataloging of regions within the specimen; or a pattern of a signal envelope representative of the acoustic waves.

The inspection system of any preceding clause, wherein the controller is configured to prepare the signal data for analysis via at least one of: a Hilbert transform; a continuous wavelet transform; a Fourier transform; or a short-time Fourier transform

The inspection system of any preceding clause, wherein signal data includes data indicative of attenuation properties of the specimen or of a scatter-attenuation pattern in the specimen.

The inspection system of any preceding clause, wherein the controller is further configured to activate the at least one acoustic transmitter to generate an acoustic wave in the 1 megahertz to 100 megahertz frequency range using at least one of a pulse, chirp, toneburst, or coded excitation.

The inspection system of any preceding clause, wherein the signal data is obtained from multiple inspection zones.

The inspection system of any preceding clause, wherein the microstructural characteristic includes characteristic associated with at least one of a microtexture region (MTR) or a grain structure of the specimen.

The inspection system of any preceding clause, wherein the at least one acoustic transmitter is on a same side of the specimen as the at least one acoustic receiver.

The inspection system of any preceding clause, wherein the at least one acoustic receiver is disposed generally perpendicular to the at least one acoustic transmitter.

The inspection system of any preceding clause, wherein the at least one acoustic receiver is disposed spaced from and opposite from the at least one acoustic transmitter.

The inspection system of any preceding clause, wherein the at least one acoustic transmitter and the at least one acoustic receiver are a single device.

The inspection system of any preceding clause, further comprising: a near surface sensor configured to interrogate a second interaction volume with Rayleigh surface waves, wherein the second interaction volume is disposed at or adjacent to the surface of the specimen; and wherein the controller is further configured to: receive second signal data from the near surface sensor; compare the signal data to the second signal data to determine a comparison; and determine the microstructural characteristic based at least in part on the comparison.

The inspection system of any preceding clause, wherein at least one of the at least one acoustic transmitter or the at least one acoustic receiver is an array.

The inspection system of any preceding clause, wherein the controller is further configured to operate the array to adjust the interaction volume by adjusting a delay of a transmitted pulse for each element of the array.

The inspection system of any preceding clause, wherein the signal data includes at least one of amplitude and time-of-flight.

The inspection system of any preceding clause, wherein the controller is further configured to: determine one or more response scores that are predictive of a level of subsurface microtexture regions (MTRs) present in the specimen based on the quantified description.

The inspection system of any preceding clause, wherein the controller is further configured to at least one of: determine whether to accept or reject the specimen based on the one or more response scores; or assign a material grade to specimen based on the one or more response scores.

The inspection system of any preceding clause, wherein the specimen is a milled product, an intermediate machined product, or a component formed from a milled product.

An inspection method comprising: dividing a specimen into a plurality of inspection zones; collecting acoustic signal data using one or more acoustic transducer arrangements, the one or more acoustic transducer arrangements configured to target particular zones of the plurality of inspection zones; calculating at least one response score for the specimen from the acoustic signal data, wherein the at least one response score is calculated using acoustic signal data associated with one or more of the plurality of inspection zones; and determining a material classification for the specimen based on the at least one response score.

The inspection method of any preceding clause, wherein calculating at least one response score for the specimen includes calculating a response score for each of the plurality of inspection zones; and wherein the at least one response score is a composite response score for the specimen as determined based on the at least one response score for each of the plurality of inspection zones.

A method comprising: performing a scan on a specimen of a group of specimens using an inspection sensor, the scans causing inspecting energy to be transmitted from the inspecting sensors through an incident surface and through the volume of the specimen; receiving signal data representing inspecting energy received by the inspecting sensor from the specimen; transforming the signal data to obtain scalar values, the scalar values include at least one of a statistical occurrence of phase values, an entropy, or a co-occurrence associated with the signal data; determining an MTR metric indicative of at least one microtexture region (MTR) characteristic present subsurface and within the volume of the specimen based at least in part on the scalar values, generating a response score for the plurality of specimen based the MTR metric; and physically dispositioning the group of specimens based on the response score.

**Claims**

1. An inspection system (100) for inspecting a specimen (102), the inspection system (100) comprising:

   a transmitting sensor array (106, 134) of one or more active elements arranged to introduce inspecting energy into the specimen (102); and
   a controller (108) in operative communication with the transmitting sensor array (106, 134), the controller (108) being configured to:
   cause the inspecting energy to be transmitted from the transmitting sensor array through an incident surface of the specimen (102) and through a volume of the specimen (102);

   receive signal data (130) indicative of signal energy received from the specimen (102) at two or more locations of the specimen (102);
   compute a Fourier transform for the signal data (130) to separate frequency characteristics from phase characteristics of the signal data (130);
   calculate a shift of frequency distributions in the frequency characteristics between the signal energy at the two or more locations of the specimen(102);
   generate an intensity map (2728, 2724) or response score based on the shift of frequency distribution; and
   determine at least one microtexture region (MTR) score indicative of MTR present within a subsurface volume of the specimen (102) based at least in part on the shift of the frequency distribution of the signal energy.

2. The inspection system (100) of claim 1, wherein the transmitting sensor array (106, 134) comprises an acoustic transducer array (106, 206, 306, 506 ) comprising a plurality of acoustic transducers (106, 20, 306, 506) that act as an acoustic transmitter (114) and as an acoustic receiver (116), and wherein the signal data (130) is received from the acoustic transducer array (106, 206, 306, 506 ).

3. The inspection system (100) of any preceding claim, further comprising: a receiving sensor array (116, 416, 616, 716, 808) of one or more elements arranged to receive the inspecting energy from the specimen (102), wherein the controller (108) is configured to receive the signal data (130) from the receiving sensor array( 116, 416, 616, 716, 808).

4. The inspection system (100) of any preceding claim, wherein the inspecting energy includes least one of longitudinal waves, shear waves, Rayleigh waves, or mixed-mode acoustic waves.

5. The inspection system (100) of any preceding claim, wherein the controller (108) is further configured to generate an intensity map (2724, 2728) based upon an upshift or a downshift of frequency content of the signal data (130).

6. The inspection system (100) of claim 5, wherein the controller (108) is further configured to quantify the intensity map (2724, 2728) using a cumulative distribution function of a size of regions having a uniform frequency shift.

7. The inspection system (100) of claim 5, wherein the controller (108) is further configured to quantify the intensity map (2724, 2728) using a statistical measurement of sizes of regions having a uniform frequency shift.

8. The inspection system (100) of claim 5, wherein the controller (108) is further configured to generate the intensity map (2724, 2728) using an Otsu threshold.

9. The inspection system (100) of claim 5, wherein the controller (108) is further configured to generate the intensity map (2724, 2728) using a Gaussian mixture.

10. The inspection system (100) of claim 5, wherein the controller (108) is further configured to quantify the intensity map (2724, 2728) based at least in part on enumeration of spots which show a change in frequency distribution below or above a threshold.

11. The inspection system (100) of claim 5, wherein the transmitting sensor array (106, 134) steers a direction of inspecting energy, and wherein the controller (108) is further configured to compare an upshift or a downshift of frequency distribution to other steered angles.

12. The inspection system (100) of claim 5, wherein the controller (108) is further configured to quantify one or more frequency peaks in exclusion of a primary frequency peak, and to quantify a rate of occurrence of the one or more frequency peaks.

13. The inspection system (100) of claim 5, wherein the controller (108) is further configured to quantify one or more frequency peaks in exclusion of a primary frequency peak, the one or more frequency peaks having amplitudes above a fixed fraction of a magnitude of the primary frequency peak, to quantify a rate of occurrence of the one or more frequency peaks.

14. The inspection system (100) of any preceding claim, wherein the controller (108) is further configured to form a spectrogram of a frequency distribution of the signal energy.

15. The inspection system (100) of any preceding claim, wherein the controller (108) is further configured to generate an intensity map (2724, 2728) based upon a continuous wavelet transform or a short-time Fourier transform for a specific period of time.

## FIG. 1A

INSPECTION DEVICE  104

**NEAR SURFACE SENSOR(S) 134**
- ACOUSTIC ELECTROMAGNETIC TRANSMITTER(S) — 136
- ACOUSTIC ELECTROMAGNETIC RECEIVER(S) — 138

**VOLUMETRIC ACOUSTIC TRANSDUCER(S) 106**
- ACOUSTIC TRANSMITTER(S) — 114
- ACOUSTIC RECEIVER(S) — 116

**CONTROLLER 108**
- MEMORY — 118
  - DATA — 120
  - INSTRUCTIONS — 122
- PROCESSOR — 124
- I/O DEVICE — 126
- USER INTERFACE — 128

SPECIMEN (BILLET, FORGING, FABRICATED PART, ETC.) — 102
- INSPECTION ZONES 164

NETWORK 140

TRANSDUCER POSITIONING SYSTEM 110

DATABASE(S) 112
- SIGNAL DATA — 130
- POSITION DATA — 132

MANUFACTURING SYSTEM 111
- MACHINE 113

100

# FIG. 1B

170

CAUSE ACOUSTIC WAVES TO BE TRANSMITTED FROM AN ACOUSTIC TRANSDUCER THROUGH A VOLUME OF A SPECIMEN FROM AN ACOUSTIC TRANSDUCER ARRAY — 172

OBTAIN SIGNAL DATA INDICATIVE OF THE ACOUSTIC WAVES (e.g., WAVEFORM DATA) — 174

DETERMINE AT LEAST ONE RESPONSE SCORE THAT IS INDICATIVE OF MTR PRESENT WITHIN A SUBSURFACE VOLUME OF THE SPECIMEN BASED ON THE SIGNAL DATA — 176

# FIG. 1C

180

CAUSE THE SINGLE ELEMENT ACOUSTIC TRANSDUCER TO TRANSMIT ACOUSTIC WAVES INTO AN INCIDENT SURFACE OF THE SPECIMEN AND THROUGH THE VOLUME OF THE SPECIMEN

182

OBTAIN SIGNAL DATA INDICATIVE OF THE ACOUSTIC WAVES SCATTERED OR REFLECTED TOWARD THE INCIDENT SURFACE OF THE SPECIMEN FROM THE SINGLE ELEMENT ACOUSTIC TRANSDUCER

184

ANALYZE THE SIGNAL DATA INDICATIVE OF THE ACOUSTIC WAVES

186

DETERMINE AT LEAST ONE RESPONSE SCORE THAT IS INDICATIVE OF MTR PRESENT WITHIN A SUBSTANCE VOLUME OF THE SPECIMEN BASED ON THE ANALYSIS

188

# FIG. 1D

190

DETERMINE ONE OR MORE RESPONSE SCORES OR INTENSITY MAPS BASED ON SIGNAL DATA RECEIVED FROM THE INSPECTION DEVICE — 192

CORRELATE ONE OR MORE MTR SCORES THAT ARE PREDICTIVE OF A LEVEL OF SUBSURFACE MTRs PRESENT IN THE SPECIMEN WITH THE ONE OR MORE RESPONSE SCORES OR INTENSITY MAPS — 194

DISPOSITION THE SPECIMEN BASED ON THE ONE OR MORE RESPONSE SCORES OR INTENSITY MAPS AND THEIR CORRELATION TO MTR SCORES — 196

EP 4 667 929 A1

# FIG. 2

EP 4 667 929 A1

EP 4 667 929 A1

# FIG. 3

FIG. 4A

FIG. 4B

# FIG. 5

500

568

560

506

502

570

**FIG. 6A**

**FIG. 6B**

EP 4 667 929 A1

FIG. 7A

FIG. 7B

EP 4 667 929 A1

FIG. 8

# FIG. 9A

# FIG. 9B

910

912

# FIG. 9C

908

912

# FIG. 9D

914

916

# FIG. 9E

914

916

FIG. 9G

FIG. 9H

FIG. 9F

FIG. 9I

FIG. 9J

EP 4 667 929 A1

# FIG. 9K

924

# FIG. 9L

# FIG. 9M

925

# FIG. 9N

925

# FIG. 9O

930

928

# FIG. 9P

930

928

# FIG. 9Q

932

# FIG. 9R

932

# FIG. 9S

934

# FIG. 9T

938

936

934

# FIG. 10

**FIG. 11A**

| RECEIVE SIGNAL DATA | ~1102 |

↓

| SELECT A SUBSET OF THE SIGNAL DATA | ~1104 |

↓

| COMPUTE A SHORT-TIME FFT FOR THE SIGNAL DATA (e.g., FOR THE SUBSET) | ~1106 |

↓

| ANALYZE THE FFT RESULTS | ~1108 |

↓

| DETERMINE FREQUENCIES CORRESPONDING TO AMPLITUDE SPIKES ARE SELECTED AND DIVIDE INTO PREDETERMINED FREQUENCY BINS | ~1110 |

↓

| DETERMINE AND SORT THE NUMBER OF POINTS IN EACH FREQUENCY BIN | ~1112 |

↓

| APPLY A MATHEMATICAL TRANSFORMATION TO THE VALUES FROM DIFFERENT FREQUENCY BINS | ~1114 |

↓

| CLASSIFY THE SPECIMEN | ~1116 |

**FIG. 11B**

**FIG. 11C**

EP 4 667 929 A1

## FIG. 12

GENERATE A PLURALITY OF TIME-FREQUENCY SPECTOGRAMS FROM SIGNAL DATA ⌐1202

SELECT A SIMILARITY METRIC TO QUANTIFY DIFFERENCES BETWEEN THE MULTIPLE TIME-FREQUENCY SPECTOGRAMS ⌐1204

CALCULATE AN INTENSITY BY APPLYING THE SIMILARITY METRIC TO TWO OR MORE OF THE PLURALITY OF TIME-FREQUENCY SPECTOGRAMS ⌐1206

CALCULATE AN INTENSITY FROM THE SIMILARITY BETWEEN A MEASURED SPECTOGRAM AND A REFERENCE SPECTOGRAM ⌐1208

GENERATE A SPATIAL INTENSITY MAP OR RESPONSE SCORE(S) BASED ON THE INTENSITY OR THE SIMILARITY ⌐1210

EP 4 667 929 A1

# FIG. 13

1300

RECEIVE SIGNAL DATA REPRESENTATIVE OF THE INTERACTION BETWEEN THE SPECIMEN AND THE INSPECTING ENERGY — 1302

CALCULATE THE PHASE OF THE SIGNAL DATA THROUGH A) COMPLEX IMPEDANCE, B) A HILBERT TRANSFORM, OR C) BINNING DATA VIA *sign(x)* — 1304

COMPARE THE PHASE AND/OR PHASE SHIFT AT ONE OR MORE POSITIONS OR TIMES — 1306

IDENTIFY REGIONS OF PHASE COHERENCE BASED ON THE COMPARISON OF THE PHASE AND/OR PHASE SHIFT AT THE ONE OR MORE POSITIONS OR TIMES — 1308

GENERATE AS SPATIAL INTENSITY MAP OR ONE OR MORE RESPONSE SCORES FOR THE SPECIMEN BASED ON THE REGIONS OF PHASE COHERENCE — 1310

# FIG. 14

1400

RECEIVE SIGNAL DATA REPRESENTATIVE OF THE INTERACTION BETWEEN THE SPECIMEN AND THE INSPECTING ENERGY

1402

CALCULATE THE INSTANTANEOUS PHASE OF THE SIGNAL DATA

1404

IDENTIFY REGIONS OF THE SPECIMEN WITH LOCAL PHASE DISCONTINUITES BASED ON THE INSTANTANEOUS PHASE

1406

GENERATE AS SPATIAL INTENSITY MAP OR ONE OR MORE RESPONSE SCORES FOR THE SPECIMEN BASED ON THE LOCAL PHASE DISCONTINUITIES

1408

# FIG. 15

RECEIVE SIGNAL DATA REPRESENTATIVE OF THE INTERACTION BETWEEN THE SPECIMEN AND THE INSPECTING ENERGY — 1502

↓

CALCULATE THE SIGNAL ENVELOPE FOR THE SIGNAL DATA — 1504

↓

CALCULATE A DISTRIBUTION OF MAGNITUDES OF THE SIGNAL ENVELOPE — 1506

↓

FIT A PARAMETRIC DISTRIBUTION TO THE MAGNITUDE DISTRIBUTION TO OBTAIN FITTED VALUES — 1508

↓

SELECT ONE OR MORE OF THE FITTED VALUES METRIC OF INTENSITY OF MTRs IN THE SPECIMEN — 1510

↓

GENERATE AS SPATIAL INTENSITY MAP OR ONE OR MORE RESPONSE SCORES FOR THE SPECIMEN BASED ON THE INTENSITY — 1512

# FIG. 16A

1600

```
┌──────────────────────────────────────┐
│ COLLECT BACKSCATTER UT WAVEFORM        │
│ FROM SHEAR OR LONGITUDINAL DATA        │──── 1602
└──────────────────────────────────────┘
                    │
                    ▼
┌──────────────────────────────────────┐
│ NORMALIZE/PREPROCESS (FILTER, MEDIAN,  │
│ MEAN, SCALE)                           │──── 1604
└──────────────────────────────────────┘
        │                      │
        ▼                      ▼
┌─────────────────┐   ┌─────────────────┐
│ CHARACTERIZE    │   │ FITTING         │
│ SHAPE OF        │   │ POLYNOMIAL      │
│ WAVEFORM (PEAK  │   │ OR NONLINEAR    │
│ HEIGHT, TIME,   │   │ FUNCTION TO     │──── 1608
│ WIDTH,          │   │ DATA, OR        │
│ PROMINENCE)     │   │ PRINCIPAL       │
│                 │   │ COMPONENT       │
│                 │   │ ANALYSIS        │
└─────────────────┘   └─────────────────┘
        │                      │
        └──────────┬───────────┘
                   ▼
┌──────────────────────────────────────┐
│ COMPARE SHAPE CHARACTERISTICS          │
│ SPATIALLY ACROSS SAMPLE                │──── 1610
└──────────────────────────────────────┘
                    │
                    ▼
┌──────────────────────────────────────┐
│ DISPOSITION MATERIAL BASED ON          │
│ EXAMPLE                                │──── 1612
└──────────────────────────────────────┘
```

1606

## FIG. 16B

1620

1622  1624

## FIG. 16C

EXPRESSION 1:   $\hat{y} = a * x^b * \exp\left(\left(\frac{x}{c}\right)^d\right)$

EXPRESSION 2:   $\hat{y} = a + bx + cx^2 + \cdots nx^N$

## FIG. 17

1700

| |
|---|
| SELECT ONE OR MORE SIGNAL TEMPLATES |

1702

| |
|---|
| CALCULATE THE CROSS-CORRELATION BETWEEN THE SIGNAL DATA AND THE SIGNAL TEMPLATE |

1704

| |
|---|
| CALCULATE A SECOND CROSS-CORRELATION BETWEEN THE SIGNAL DATA AND A SECOND TEMPLATE |

1706

| |
|---|
| GENERATE A SPATIAL INTENSITY MAP OR ONE OR MORE RESPONSE SCORES FOR THE SPECIMEN BASED ON THE CROSS-CORRELATION |

1708

# FIG. 18

1800

RECEIVE SIGNAL DATA — 1802

PROCESS THE SIGNAL DATA — 1804

SEPARATE THE SIGNAL DATA INTO A PLURALITY OF COMPONENTS — 1806

POSTPROCESS THE PLURALITY OF COMPONENTS — 1808

SELECT ONE OR MORE COMPONENTS REPRESENTATIVE OF MTR — 1810

EP 4 667 929 A1

# FIG. 19

1900

```
RECEIVE SIGNAL DATA REPRESENTATIVE OF THE INTERACTION BETWEEN THE
SPECIMEN AND THE INSPECTING ENERGY                                          1902

SELECT A WINDOW SIZE                                                        1904

CALCULATE A LOCAL MEAN AND VARIANCE OF THE SIGNAL DATA FOR EVERY POSITION
OF THE WINDOW                                                               1906

SUM THE LOCAL MEAN AND VARIANCE TO OBTAIN AN INTENSITY VALUE                1908

IDENTIFY ONE OR MORE OF THE COMPONENTS THAT ARE REPRESENTATIVE OF ONE
OR MORE MTR FEATURES                                                        1910
```

# FIG. 20A

2000

| COARSEN SIGNAL DATA | 2002 |

| RE-DIGITIZE THE SIGNAL DATA INTO A NUMBER OF BINS | 2004 |

| SELECT ONE OR MORE PATTERN LENGTHS AND DIVIDE THE SIGNAL DATA INTO SUBSERIES BASED ON THE PATTERN LENGTH | 2006 |

| SELECT A MEMBERSHIP FUNCTION FOR COMPARING PATTERNS AMONG THE SUBSERIES | 2008 |

| COMPUTE THE MEMBERSHIP FUNCTION FOR EACH SUBSERIES AND GENERATE A DISTRIBUTION REPRESENTATIVE OF THE COMMONALITY OF THE PATTERNS | 2010 |

| GENERATE A SIGNAL INTENSITY BASED ON THE DISTRIBUTION | 2012 |

# FIG. 20B

$$\phi_m = \Sigma g(p_i)$$

$$I = -\log \phi_m$$

$$I = -(\log \phi_{m+b} - \log \phi_m)$$

$$I = -(\log \phi_{m+b} - \log \phi_m + \ldots)$$

# FIG. 21

2100

USING ONE OR MORE SENSOR(S), OBTAIN SIGNAL DATA INDICATIVE OF THE INTERACTION BETWEEN THE SPECIMEN AND THE ACOUSTIC WAVES, ELECTROMAGNETIC WAVES, AND/OR INDUCED CURRENT — 2102

CALCULATE A METRIC OF THE PEAKINESS/FLATNESS OF THE SIGNAL DATA — 2104

GENERATE ONE OR MORE INTENSITY VALUES THAT ARE INDICATIVE OF MTRs PRESENT IN THE SPECIMEN BASED ON THE METRIC — 2106

## FIG. 22

2200

RECEIVE ONE OR MORE INTENSITY MAPS ASSOCIATED WITH THE SPECIMEN — 2202

SEGMENT THE ONE OR MORE INTENSITY MAPS TO GENERATE SEGMENTED INTENSITY MAPS — 2204

CALCULATE ONE OR MORE SPATIAL STATISTICS OF FEATURES OF THE SEGMENTED INTENSITY MAPS — 2206

CLASSIFY THE SPECIMEN BASED ON THE SPATIAL STATISTICS OF THE FEATURES OF THE SEGMENTED INTENSITY MAPS — 2208

EP 4 667 929 A1

# FIG. 23

2300

RECEIVE ONE OR MORE INTENSITY MAPS ASSOCIATED WITH THE SPECIMEN — 2302

DIGITALIZE THE INTENSITY MAPS INTO BINS — 2304

SELECT ONE OR MORE OFFSET VECTORS $r$ — 2306

CALCULATE THE PROBABILITY $p_{ij}$ THAT A POINT $P_1$ WITH INTENSITY IN BIN i HAS A NEIGHBORING POINT $P_2 = P_1 + r$ WITH THE INTENSITY CORRESPONDING TO BIN j. — 2308

CALCULATE A MATRIX $(\mathbb{G})$ WHICH REPRESENTS THE JOINT PROBABILITY OF OBSERVING AN EVENT WITH $P_{A_i}$ AND $P_{B_j}$ — 2310

APPLY A WEIGHT FUNCTION TO THE MATRIX — 2312

AGGREGATE THE VALUES IN THE MATRIX INTO ONE OR MORE RESPONSE SCORES — 2314

# FIG. 24

2400

RECEIVE ONE OR MORE INTENSITY MAPS ASSOCIATED WITH THE SPECIMEN — 2402

SELECT ONE OR MORE REGIONS WITHIN THE INTENSITY MAPS — 2404

AGGREGATE THE INTENSITY MAP WITHIN EACH REGION TO GENERATE ONE OR MORE RESPONSE SCORES — 2406

DISPOSITION THE SPECIMEN BASED ON THE RESPONSE SCORES — 2408

# FIG. 25

2500

```
┌─────────────────────────────────────────────────────────────────┐
│                                                                 │
│   GENERATE AN ACOUSTIC WAVE AT A PLURALITY OF INSPECTION ANGLES │───2502
│                                                                 │
└─────────────────────────────────────────────────────────────────┘
                                │
                                ▼
┌─────────────────────────────────────────────────────────────────┐
│                                                                 │
│            RECORD SIGNAL DATA AT EACH INSPECTION ANGLE          │───2504
│                                                                 │
└─────────────────────────────────────────────────────────────────┘
                                │
                                ▼
┌─────────────────────────────────────────────────────────────────┐
│   CALCULATE ONE OR MORE INTENSITY MAPS AND/OR RESPONSE SCORES   │
│          FOR EACH INSPECTION ANGLE USING THE SIGNAL DATA        │───2506
└─────────────────────────────────────────────────────────────────┘
                                │
                                ▼
┌─────────────────────────────────────────────────────────────────┐
│   CALCULATE THE CHANGE IN INTENSITY MAPS AND/OR RESPONSE SCORES │
│         AS A FUNCTION OF THE INSPECTION ANGLE                   │───2508
└─────────────────────────────────────────────────────────────────┘
```

EP 4 667 929 A1

## FIG. 26A

INSPECT ONE/MULTIPLE SURFACES OF SPECIMEN WITH A NEAR-SURFACE MTR SENSOR (SWUT, EDDY CURRENT) ~2601

↓

INSPECT ONE/MULTIPLE SURFACES OF SPECIMEN WITH A BULK INSPECTION METHOD (UT) ~2602

↓

DETERMINE ONE/MULTIPLE SCORES, A LINEAR MTR PROFILE, OR A SPATIAL MTR PROFILE USING AN ENTROPY METHOD, GLCM/JOINT PROBABILITY METHOD, OR SURFACE-WAVE TIME-OF-FLIGHT STATISTICS ~2604

↓

COMPARE RESPONSE SCORE FROM BULK INSPECTION METHOD FROM ONE/MULTIPLE SURFACES TO SWUT/ECT SPATIAL PROFILES FROM ONE/MULTIPLE SURFACES ~2606

↓

INTERPRET VOLUMETRIC MEASUREMENTS ~2608

2600

## FIG. 26B

## FIG. 26C

EP 4 667 929 A1

## FIG. 27A

2700

| | |
|---|---|
| ACQUIRE ONE OR MORE WITNESS MACROSLICES FROM A MATERIAL SIMILAR TO A SPECIMEN | 2702 |
| EXPOSE A CROSS-SECTION OF THE MACROSLICE | 2704 |
| INSPECT THE MACROSLICE TO ACQUIRE MACROSLICE SIGNAL DATA | 2706 |
| PROCESS THE SIGNAL DATA TO ACQUIRE MACROSLICE QUANTIFIED SIGNAL DATA | 2708 |
| INSPECT THE SPECIMEN TO ACQUIRE SPECIMEN SIGNAL DATA | 2710 |
| CHARACTERIZE THE SPECIMEN BASED ON THE MACROSLICE QUANTIFIED SIGNAL DATA AND THE SPECIMEN SIGNAL DATA | 2712 |

EP 4 667 929 A1

EP 4 667 929 A1

## FIG. 27B

2720

2719

2722

## FIG. 27C

2720

2722

## FIG. 27D

2724

## FIG. 27E

2726

2719

## FIG. 27F

2728

2719

# FIG. 28

MTR CASE 1

BILLET 4 A-SCAN — 2810    2814

2812

MTR CASE 2

BILLET 5 A-SCAN — 2816

2820

2818

EP 4 667 929 A1

# FIG. 29

EXPRESSION 1: $\hat{A} = \beta_0 + \beta_1 h_1\left(U_{Z_1, S_1}\right) + \beta_2 h_2\left(U_{Z_2, S_1}\right) + \cdots \beta_n h_n(U_{Z_n, S_1})$

EXPRESSION 2: $\hat{A}_{Z_1} = h_1\left(U_{Z_1, S_1}, \quad U_{Z_1, S_2}\right)$

EXPRESSION 3: $\hat{A}_{Z_2} = h_2\left(U_{Z_1, S_1}, U_{Z_2, S_1}\right)$

EXPRESSION 4: $\hat{A}_{Z_n} = h_N(U_{Z_1 S_1}, U_{Z_2 S_1}, U_{Z_2 S_2}, \ldots, U_{Z_n S_m})$

**EUROPEAN SEARCH REPORT**

Application Number

EP 25 18 4019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/003694 A1 (TIAN YONG [US] ET AL) 5 January 2023 (2023-01-05) * figures 1-3,6-13 * * paragraphs [0002] - [0009], [0032] - [0036], [0039] - [0046], [0049] - [0068] * | 1-15 | INV. G01N29/04 G01N29/44 G01N29/46 ADD. G01N27/90 |
| X | CN 113 029 880 A (GRADUATE SCHOOL OF CHINA ACADEMY OF ENG PHYSICS) 25 June 2021 (2021-06-25) | 1-4,14, 15 | G01N29/11 G01N29/34 G01N29/48 |
| A | * figures 1-7 * * paragraphs [0004] - [0069], [0078] - [0141] * | 5-13 | G01N27/904 |
| X | US 11 709 093 B1 (REMILLIEUX MARCEL [US] ET AL) 25 July 2023 (2023-07-25) | 1,3-5, 7-11,14, 15 | |
| A | * figures 2-12 * * column 1, line 36 - column 2, line 55 * * column 3, line 20 - line 33 * * column 3, line 57 - column 5, line 27 * * column 5, line 31 - column 6, line 4 * * column 6, line 32 - column 7, line 48 * * column 7, line 53 - column 8, line 42 * * column 8, line 66 - column 9, line 28 * * column 10, line 3 - line 55 * * column 10, line 63 - column 12, line 9 * | 2,6,12, 13 | |

TECHNICAL FIELDS SEARCHED (IPC)

G01N

The present search report has been drawn up for all claims

| Place of search | Date of completion of the search | Examiner |
|---|---|---|
| The Hague | 12 November 2025 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 4019

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2025

| Patent document cited in search report | | Publication date | Patent family member(s) | | Publication date |
|---|---|---|---|---|---|
| US 2023003694 | A1 | 05-01-2023 | EP | 3865869 A1 | 18-08-2021 |
| | | | EP | 3879264 A1 | 15-09-2021 |
| | | | US | 2021072192 A1 | 11-03-2021 |
| | | | US | 2021072197 A1 | 11-03-2021 |
| | | | US | 2022276205 A1 | 01-09-2022 |
| | | | US | 2023003694 A1 | 05-01-2023 |
| CN 113029880 | A | 25-06-2021 | NONE | | |
| US 11709093 | B1 | 25-07-2023 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202411047057
- US 63665988
- IN 202411076142
- US 63745900
- US 678918
- US 678918 A

### Non-patent literature cited in the description

- **A. PILCHACK et al.** Cold Dwell Fatigue of Titanium Alloys: History, Current State, and Aviation Industry Perspective. *DOT/FAA/TC-23/40, U.S. Dep't of Transp., F*, September 2024
- **W. CHEN** ; **Z. WANG** ; **H. XIE** ; **W. YU**. Characterization of Surface EMG Signal Based on Fuzzy Entropy. *IEEE Transactions on Neural Systems and Rehabilitation Engineering*, June 2007, vol. 15 (2), 266-272
- **H. AZAMI** ; **P. LI** ; **S. E. ARNOLD** ; **J. ESCUDERO** ; **A. HUMEAU-HEURTIER**. Fuzzy Entropy Metrics for the Analysis of Biomedical Signals: Assessment and Comparison. *IEEE Access*, 2019, vol. 7, 104833-104847
- A Large Set of Audio Features for Sound Description (Similarity and Classification) in the CUIDADO Project. **PEETERS, G.** Technical Report. IRCAM, 2004
- **J. D. JOHNSTON**. Transform coding of audio signals using perceptual noise criteria. *IEEE Journal on Selected Areas in Communications*, February 1988, vol. 6 (2), 314-323
- **H. MISRA** ; **S. IKBAL** ; **H. BOURLARD** ; **H. HERMANSKY**. Spectral entropy based feature for robust ASR. *2004 IEEE International Conference on Acoustics, Speech, and Signal Processing, Montreal, QC, Canada*, 2004, 1-193